# EUROPEAN PATENT APPLICATION

(11) **EP 4 834 086 A1**
(43) Date of publication of application: **04.11.2026**
(21) Application number: 24910791.3
(22) Date of filing: 13.12.2024
(51) Int. Cl.: A01D 34/78

(54) **OUTDOOR GARDEN LAWN MOWER, ENERGY SOURCE SYSTEM, AND OUTDOOR WORK DEVICE**

(30) Priority: 29.12.2023 CN 202311872751; 30.09.2024 CN 202411383865
(71) Applicant: Jiangsu Dongcheng M&E Tools Co., Ltd., Nantong, Jiangsu 226244 (CN)
(72) Inventor: ZHANG, Shengwen, Nantong, Jiangsu 226244 (CN); YE, Zhiming, Nantong, Jiangsu 226244 (CN); FU, Huixing, Nantong, Jiangsu 226244 (CN); YU, Wanzhao, Nantong, Jiangsu 226244 (CN); ZHANG, Qing, Nantong, Jiangsu 226244 (CN); TIAN, Dachang, Nantong, Jiangsu 226244 (CN)
(74) Representative: Winter, Brandl - Partnerschaft mbB
(86) International application number: PCT/CN2024/139333
(87) International publication number: WO 2025/139860

(57) **Abstract**

The present disclosure relates to an outdoor garden lawn mower, an energy source system, and outdoor working device. The outdoor garden lawn mower includes a main frame (1), a cutting assembly (2), a traveling assembly (3), an operating assembly (4), and a power supply device (5). The power supply device (5) includes first-type battery packs (52), second-type battery packs (53), and a battery compartment (51). The battery compartment (51) is configured to accommodate the first-type battery packs (52) and/or the second-type battery packs (53). Electrical connection terminals (513) are provided inside the battery compartment (51), and at least one of the electrical connection terminals (513) match at least one of the first-type battery packs (52) or the second-type battery packs (53), so that electrical connectors of the first-type battery packs (52) or the second-type battery packs (53) are electrically connected to the electrical connection terminals (513) to supply an energy source to the outdoor garden lawn mower for predetermined outdoor operations. The electrical connection terminals of the outdoor garden lawn mower match different types of battery packs, which improves the applicability of the outdoor garden lawn mower.

## Description

This application claims the priority of the following patent application.

This application claims the priority to Chinese Patent Application No. 202311872751.8, filed with the China National Intellectual Property Administration on December 29, 2023, and Chinese Patent Application No. 202411383865.0, filed with the China National Intellectual Property Administration on September 30, 2024, the entire contents of which are incorporated herein by reference.

### TECHNICAL FIELD

The present disclosure relates to the field of outdoor garden device, specifically to an outdoor garden lawn mower, an energy source system, and an outdoor working device.

### BACKGROUND

An outdoor garden lawn mower, as a garden tool, is widely used in mowing lawns and other vegetation. The existing outdoor garden lawn mower mostly use electric energy devices as a power source, which is more environmentally friendly and energy-saving when compared to using fuel as the power source.

The existing outdoor garden lawn mower has different installation and cooperation methods with different battery packs, and different battery packs need to be equipped with different battery compartments and different electrical connectors to be electrically connected with the outdoor garden lawn mower. This will result in difficulties in assembly and disassembly of the battery pack on the outdoor garden lawn mower.

### SUMMARY

In view of the defects of the prior art, an objective of the present disclosure is to provide an outdoor garden lawn mower, an energy source system, and an outdoor working device, so as to at least improve battery life and heat dissipation performance of battery packs of outdoor garden device.

Technical solutions adopted by the present disclosure to solve the above technical problems are as follows.

According to an aspect, the present disclosure provides an outdoor garden lawn mower, including:
a main frame;
a cutting assembly configured to cut vegetation;
a traveling assembly configured to support the outdoor garden lawn mower to move along a first straight direction;
an operating assembly configured for a user to operate to control traveling of the outdoor garden lawn mower; and
a power supply device, including:
   one or more first-type battery packs configured to supply power to at least one of the cutting assembly or the traveling assembly,
   one or more second-type battery packs configured to supply power to the at least one of the cutting assembly or the traveling assembly, and
   a battery compartment configured to accommodate the first-type battery packs and/or the second-type battery packs,
   wherein a plurality of electrical connection terminals are provided inside the battery compartment, at least one of the plurality of electrical connection terminals is configured to match at least one of the first-type battery packs or the second-type battery packs, such that one or more electrical connectors of the first-type battery packs and/or one or more electrical connectors of the second-type battery packs are electrically connected to the plurality of electrical connection terminals, providing an energy source for the outdoor garden lawn mower to perform a predetermined outdoor task. The cutting assembly, the traveling assembly, the operating assembly, and the power supply device are provided on the main frame.

In a further improved embodiment, the battery compartment includes a first side wall and a second side wall arranged opposite to each other, and the plurality of electrical connection terminals include at least one pair of electrical connection terminals, wherein the at least one pair of electrical connection terminals is respectively arranged on the first side wall and the second side wall, and is configured to be detachably electrically connected to the first-type battery packs and/or the second-type battery packs.

In a further improved embodiment, each pair of the electrical connection terminals arranged on the first side wall and the second side wall is configured to be electrically connected to two of the first-type battery packs; or
each pair of the electrical connection terminals arranged on the first side wall and the second side wall is configured to be electrically connected to one of the second-type battery packs.

In a further improved embodiment, each first-type battery pack is provided with one of the electrical connector and is configured to be connected to one of each pair of the electrical connection terminals; or
each second-type battery pack is provided with two of the electrical connectors arranged on opposite sides of the second-type battery pack, wherein one of the two electrical connectors is configured to be connected to one of each pair of the electrical connection terminals, and an other one of the two electrical connectors is configured to be connected to an other one of each pair of the electrical connection terminals.

In a further improved embodiment, along a direction perpendicular to or parallel to the first straight direction, orthographic projections of each pair of the electrical connection terminals respectively arranged on the first side wall and the second side wall of the battery compartment at least partially overlap with each other.

In a further improved embodiment, along a direction perpendicular to or parallel to the first straight direction, orthographic projections of each pair of the electrical connection terminals respectively arranged on the first side wall and the second side wall of the battery compartment are spaced apart from each other.

In a further improved embodiment, there are a plurality of battery compartments.

In a further improved embodiment, the battery compartment includes a first battery compartment for accommodating the first-type battery packs and a second battery compartment for accommodating the first-type battery packs and/or the second-type battery packs.

In a further improved embodiment, the first battery compartment and the second battery compartment are isolated from each other, and the first battery compartment is located outside the second battery compartment.

In a further improved embodiment, the battery compartment further includes a third side wall and a fourth side wall arranged opposite to each other. At least a portion of the third side wall of the battery compartment protrudes away from the fourth side wall to form an auxiliary compartment, the auxiliary compartment being configured to accommodate the first-type battery packs or the second-type battery packs, and a terminal mounting base is provided on a side of the fourth side wall close to the third side wall, the terminal mounting base being at least used for mounting the electrical connection terminals.

In a further improved embodiment, the outdoor garden lawn mower further includes a battery compartment bottom plate provided on the main frame and configured for mounting the battery compartment, and a battery management module electrically connected to the first-type battery packs and/or the second-type battery packs is provided on a side of the battery compartment bottom plate facing away from the battery compartment.

In a further improved embodiment, outdoor garden lawn mower further includes a battery compartment bottom plate provided on the main frame and configured for mounting the battery compartment, and a battery management module electrically connected to a the first-type battery packs and/or the second-type battery packs is provided between the battery compartment bottom plate and the battery compartment.

In a further improved embodiment, the main frame extends along the first straight direction.

In a further improved embodiment, the battery compartment is provided with a groove, and the first-type battery pack and/or the second-type battery pack are configured to be detachably inserted into the groove along a second straight direction.

In a further improved embodiment, the first straight direction intersects with the second straight direction.

In a further improved embodiment, an angle between the first straight direction and the second straight direction is less than 60 degrees.

In a further improved embodiment, the first straight direction is parallel to the second straight direction.

In a further improved embodiment, the first straight direction is perpendicular to the second straight direction.

In a further improved embodiment, a plurality of the first-type battery packs and/or a plurality of the second-type battery packs are provided in the battery compartment, and insertion directions of at least two of the plurality of first-type battery packs and/or the plurality of second-type battery packs into the battery compartment are different.

In a further improved embodiment, a plurality of the first-type battery packs and/or a plurality of the second-type battery packs are provided in the battery compartment, and the plurality of the first-type battery packs and/or the plurality of the second-type battery packs are arranged at different heights.

The present disclosure further provides an outdoor garden lawn mower, including:
a main frame;
a cutting assembly configured to cut vegetation;
a traveling assembly configured to support the outdoor garden lawn mower to move;
an operating assembly configured for a user to operate to control traveling of the outdoor garden lawn mower; and
a power supply device, including:
one or more first-type battery packs configured to supply power to at least one of the cutting assembly or the traveling assembly,
one or more second-type battery packs configured to supply power to the at least one of the cutting assembly or the traveling assembly, and
a battery compartment configured to accommodate the first-type battery packs and/or the second-type battery packs, wherein a plurality of electrical connection terminals are provided inside the battery compartment, the plurality of electrical connection terminals are configured to be electrically connected to one or more electrical connectors of the first-type battery packs and/or one or more electrical connectors of the second-type battery packs respectively, and the first-type battery packs and the second-type battery packs have different electrical capacities. The cutting assembly, the traveling assembly, the operating assembly, and the power supply device are provided on the main frame.

In a further improved embodiment, the electrical capacity of each first-type battery pack is greater than or equal to 90 Wh and less than or equal to 1000 Wh, and the electrical capacity of each second-type battery pack is greater than or equal to 1000 Wh.

In a further improved embodiment, the battery compartment includes a first side wall and a second side wall arranged opposite to each other, the plurality of electrical connection terminals include at least one pair of electrical connection terminals, wherein the at least one pair of electrical connection terminals is respectively arranged on the first side wall and the second side wall, and is configured to be detachably electrically connected to the first-type battery packs and/or the second-type battery packs.

In a further improved embodiment, the battery compartment includes a first battery compartment for accommodating the first-type battery packs and a second battery compartment for accommodating the first-type battery packs and/or the second-type battery packs.

In a further improved embodiment, the first battery compartment and the second battery compartment are isolated from each other, and the first battery compartment is arranged on an outer side of the second battery compartment.

In a further improved embodiment, the battery compartment further includes a third side wall and a fourth side wall arranged opposite to each other, wherein at least a portion of the third side wall of the battery compartment protrudes away from the fourth side wall to form an auxiliary compartment, the auxiliary compartment being configured to accommodate the first-type battery packs or the second-type battery packs, and a terminal mounting base is provided on a side of the fourth side wall close to the third side wall, the terminal mounting base being at least used for mounting the electrical connection terminals.

In a further improved embodiment, each first-type battery pack has a difference size from that of each second-type battery pack.

In a further improved embodiment, a volume ratio of each first-type battery pack to each second-type battery pack is 0.01 to 0.99.

In a further improved embodiment, the length, width and height of the first-type battery pack are 188.5 mm, 124 mm and 160 mm respectively, and the length, width and height of the second-type battery pack are 371 mm, 179 mm and 221 mm respectively

In a further improved embodiment, the cutting assembly includes a mowing motor, the traveling assembly includes a drive motor, and a maximum output power of the mowing motor differs from the maximum output power of the drive motor.

In a further improved embodiment, energy density of each first-type battery pack is greater than or equal to 200 Wh/kg and less than or equal to 500 Wh/kg, and energy density of each second-type battery pack is greater than or equal to 100 Wh/kg and less than or equal to 250 Wh/kg.

In a further improved embodiment, discharge power of each first-type battery pack is greater than or equal to 2000 W and less than or equal to 4350 W, and discharge power of each second-type battery pack is greater than or equal to 3500 W and less than or equal to 6960 W.

In a further improved embodiment, the nominal voltage of the first-type battery pack is equal to the nominal voltage of the second-type battery pack.

In a further improved embodiment, the nominal voltage of each of the first-type battery pack and the second-type battery pack is greater than or equal to 58 V.

In a further improved embodiment, the first-type battery pack includes a plurality of individual first battery cells each having a nominal voltage of 3.7 V; the second-type battery pack comprises a plurality of individual second battery cells each having a nominal voltage of 3.2 V.

In a further improved embodiment, direct current impedance of each first-type battery pack is greater than direct current impedance of each second-type battery pack.

In a further improved embodiment, direct current impedance of each first-type battery pack is greater than or equal to 70 mΩ and less than or equal to 280 mΩ, and direct current impedance of each second-type battery pack is greater than or equal to 15 mΩ and less than or equal to 48 mΩ.

In a further improved embodiment, each of the first-type battery pack and the second-type battery pack comprises a cell selected from the group consisting of lithium iron phosphate batteries, ternary lithium batteries, supercapacitors, graphene batteries and sodium-ion batteries.

The present disclosure further provides an outdoor garden lawn mower, including:
a main frame;
a cutting assembly configured to cut vegetation;
a traveling assembly configured to support the outdoor garden lawn mower to move;
an operating assembly for a user to operate to control the traveling of the outdoor garden lawn mower;
a power supply device, including:
one or more first-type battery packs configured to supply power to at least one of the cutting assembly or the traveling assembly,
one or more second-type battery packs configured to supply power to the at least one of the cutting assembly or the traveling assembly, and
a battery compartment configured to accommodate the first-type battery packs and/or the second-type battery packs, the battery compartment including a plurality of electrical connection terminals and a plurality of rails. The plurality of electrical connection terminals are provided inside the battery compartment, and are configured to be electrically connected to one or more electrical connectors of the first-type battery pack and/or one or more electrical connectors of the second-type battery pack. The plurality of rails are configured to establish a pluggable connection with the first-type battery packs and/or the second-type battery packs, wherein when the first-type battery packs are removed from the rails, the second-type battery packs are configured to be detachably connected to the rails. The cutting assembly, the traveling assembly, the operating assembly, and the power supply device are provided on the main frame.

In a further improved embodiment, the battery compartment includes a first side wall and a second side wall arranged opposite to each other, and the plurality of rails include at least one pair of rails, wherein each pair of the at least one pair of rails is respectively arranged on the first side wall and the second side wall, and is configured to be detachably connected to the first-type battery packs and/or the second-type battery packs.

In a further improved embodiment, the battery compartment includes a first side wall and a second side wall arranged opposite to each other, and
the plurality of electrical connection terminals include at least one pair of electrical connection terminals, wherein the at least one pair of electrical connection terminals is respectively arranged on the first side wall and the second side wall, and is configured to be detachably electrically connected to the first-type battery packs and/or the second-type battery packs.

In a further improved embodiment, the battery compartment includes a first battery compartment for accommodating the first-type battery packs and a second battery compartment for accommodating the first-type battery packs and/or the second-type battery packs.

In a further improved embodiment, the battery compartment further includes a third side wall and a fourth side wall arranged opposite to each other, wherein at least a portion of the third side wall of the battery compartment protrudes away from the fourth side wall to form an auxiliary compartment, the auxiliary compartment being configured to accommodate the first-type battery packs or the second-type battery packs, and a terminal mounting base is provided on a side of the fourth side wall close to the third side wall, the terminal mounting base being at least used for mounting the electrical connection terminals.

In a further improved embodiment, a locking structure is disposed at the battery compartment for locking the first-type battery pack and/or the second-type battery pack onto the battery compartment.

In a further improved embodiment, ejection structures configured to push the first-type battery packs or the second-type battery packs to move relative to the battery compartment is provided at the battery compartment;

In a further improved embodiment, a shock-absorbing structure is provided between the power supply device and the main frame.

In a further improved embodiment, at least a portion of the battery compartment is configured as a storage compartment for items other than the first-type battery packs or the second-type battery packs.

In a further improved embodiment, a heat dissipation structure for dissipating heat from the first-type battery packs and/or the second-type battery packs is provided in the battery compartment.

In a further improved embodiment, the battery compartment is provided with drainage holes.

Compared with the prior art, the outdoor garden lawn mower provided by the first aspect of the present disclosure achieves the following beneficial effects: the electrical connection terminals of the battery compartment are configured to adapt to multiple types of battery packs, so that the outdoor garden lawn mower can rapidly form electrical connections with various battery packs, thereby expanding the applicability of the outdoor garden lawn mower.

Outdoor working devices, in particular new-energy lawn mowers, are lawn machines widely applied to fields such as lawn and vegetation trimming.

The battery cells of a new-energy battery pack generate heat during charging and discharging. Restricted by the housing of the battery pack, internal heat dissipation is limited, which leads to continuous temperature rise inside the battery pack. Consequently, the battery pack may expand, leak liquid or even explode due to overheating, bringing potential safety hazards. In addition, new-energy lawn mowers operate under diverse and complex climatic conditions. When working in frigid environments, low temperatures degrade the discharge performance of the battery pack and reduce the single-charge runtime of the entire lawn mower. Therefore, the battery pack requires cooling treatment when its internal temperature is excessively high and heating treatment when its internal temperature is excessively low.

Furthermore, to improve compatibility between the lawn mower and different battery packs, some lawn mowers are designed to accommodate battery packs of different sizes or different electric capacities. Heating and cooling operations for battery packs draw power from the battery packs themselves, and different types of battery packs have distinct thermal adjustment demands. Improper thermal control will cause unreasonable power consumption of the battery pack and impair its single-charge runtime.

In an another aspect, the present disclosure further provides an outdoor working device, including: a frame; a traveling assembly configured to support the outdoor working device to move; a power supply device at least configured to supply power to the outdoor working device, the power supply device including: a battery compartment including a plurality of side plates, wherein at least one of the side plates is provided with an airflow exchange portion connecting an interior and an exterior of the battery compartment, and at least one of the side plates has an inner wall provided with a mounting seat and an outer wall provided with a mounting groove; a temperature adjustment assembly arranged on one of the side plates of the battery compartment, wherein the temperature adjustment assembly is configured to perform heat exchange between air inside and outside the battery compartment via the airflow exchange portion; a battery pack configured to be mounted onto the mounting seat from an upper end of the side plate in a top-down direction; and a heat dissipation fan configured to be mounted into the mounting groove from the upper end of the side plate in a bottom-up direction; wherein the traveling assembly and the power supply device are provided on the frame.

In a further improved embodiment, when the battery pack is mounted in the battery compartment, an air blowing direction of the heat dissipation fan is same as an air outlet direction of the airflow exchange portion.

In a further improved embodiment, the outdoor working device further includes a first air hole and a second air hole arranged on the battery pack, wherein one of the first air hole and the second air hole is configured to serve as an air inlet for the battery pack to draw air inward, and an other of the first air hole and the second air hole is configured to serve as an air outlet for the battery pack to exhaust air outward.

In a further improved embodiment, the mounting seat and the mounting groove are formed as an integral structure.

The present disclosure further provides an outdoor working device, including: a traveling assembly configured to support the outdoor working device to move; a power supply device at least configured to supply power to the outdoor working device, the power supply device including: a battery compartment having an opening, wherein the battery compartment includes a bottom plate and a plurality of side plates surrounding the bottom plate, an inner wall of at least one of the side plates has an upper section provided with a first terminal and a lower section provided with an airflow exchange portion connecting an interior and an exterior of the battery compartment; and a battery pack configured to be detachably mounted inside the battery compartment, wherein along a mounting direction of the battery pack, an upper section of the battery pack is provided with a second terminal configured to be electrically connected with the first terminal, and a lower section of the battery pack is provided with a second air hole. When the battery pack is installed in the battery compartment, the first terminal is electrically connected to the second terminal, and the airflow exchange portion and the second air hole are arranged spatially adjacent to each other.

In a further improved embodiment, an outer wall of the at least one side plate is provided with a heat dissipation fan corresponding to the airflow exchange portion, wherein the heat dissipation fan is arranged at a lower section of the side plate. When the battery pack is mounted in the battery compartment, the airflow exchange portion is spatially adjacent to both the second air hole and the heat dissipation fan.

The present disclosure further provides an outdoor working device, including: a frame; a power supply device at least configured to supply power to the outdoor working device, the power supply device including: a battery compartment having an opening, wherein the battery compartment includes a bottom plate and a plurality of side plates surrounding the bottom plate, and at least one of the side plates is provided with a first terminal and a heat dissipation fan; and a battery pack provided with a second terminal, wherein the battery pack is configured to be detachably installed into the battery compartment through the opening, wherein when the battery pack is mounted in the battery compartment, the second terminal is electrically connected to the first terminal; a power management device connected to the first terminal via wire harnesses, wherein a first voltage reduction module is provided inside the power management device, and the first voltage reduction module is configured to obtain a voltage of the battery pack and perform voltage reduction on the battery pack; and a heat dissipation fan arranged on at least one of the side plates and connected to the power management device via wire harnesses, wherein the heat dissipation fan is configured to receive electric energy of the battery pack processed through the voltage reduction by the first voltage reduction module and dissipate heat for the battery pack via operation of the heat dissipation fan. The power supply device, the power management device, and the heat dissipation fan are provided on the frame.

In a further improved embodiment, the heat dissipation fan is located below the first terminal and between the first terminal and the power management device.

In a further improved embodiment, the frame is provided with a power fixing member for fixing the battery compartment, the power fixing member is arranged between the battery compartment and the power management device, and the power fixing member is provided with a wire routing hole disposed below the first terminal.

In a further improved embodiment, the battery compartment provided with a rear cover having a rear lamp, and a second voltage reduction module is provided inside the power management device, and is connected to the rear lamp via wire harnesses.

In a further improved embodiment, one of the side plates is provided with a rear cover having a reversing radar; the side plate provided with the rear cover is further provided with a radar controller, wherein the radar controller is connected to the reversing radar and the power management device through wire harnesses; and a third voltage reduction module is provided inside the power management device and is electrically connected to the power management device.

The present disclosure further provides an outdoor working device, including: a traveling assembly configured to support the outdoor working device to move; a power supply device at least configured to supply power to the outdoor working device, the power supply device including: a battery compartment provided with an airflow exchange portion connecting an interior and an exterior of the battery compartment; a battery pack configured to be detachably mounted inside the battery compartment, the battery pack being provided with a second air hole corresponding to the airflow exchange portion; a heat dissipation fan at least configured to cool the battery pack, the heat dissipation fan being configured to blow air along a first direction. When the battery pack is installed in the battery compartment, orthographic projections of the airflow exchange portion, the second air hole, and the heat dissipation fan along the first direction at least partially overlap.

In a further improved embodiment, the battery compartment includes a plurality of side plates, and at least one of the side plates has an inner wall provided with a mounting seat and an outer wall provided with a mounting groove; and the battery pack is configured to be mounted onto the mounting seat from an upper end of the side plate in a top-down direction, and the heat dissipation fan is configured to be mounted into the mounting groove from a lower end of the side plate in a bottom-up direction.

In a further improved embodiment, when the battery pack is mounted in the battery compartment, an air blowing direction of the heat dissipation fan is same as an air outlet direction of the airflow exchange portion and an air outlet direction of the second air hole.

The present disclosure further provides an outdoor working device, including: a frame; a traveling assembly configured to support the outdoor working device to move; a power supply device at least configured to supply power to the outdoor working device, the power supply device including: a power supply unit; a battery compartment configured to accommodate and be electrically connected to the power supply unit, the battery compartment including two opposite side plates; a plurality of temperature adjustment assemblies respectively arranged on the two opposite side plates of the battery compartment, wherein the temperature adjustment assemblies are configured to exchange heat between heat generated inside the power supply unit and ambient air. The traveling assembly and the power supply device are provided on the frame.

In a further improved embodiment, each temperature adjustment assembly arranged on one of the two opposite side plates is in one-to-one correspondence with a respective one of the temperature adjustment assemblies arranged on an other of the two opposite side plates.

In a further improved embodiment, the power supply unit includes one or more first-type battery packs and/or one or more second-type battery packs;
when the number of the first-type battery packs installed in the battery compartment is x, the number of the temperature adjustment assemblies configured to adjust temperature of the x first-type battery packs is x; and
when the number of the second-type battery packs installed in the battery compartment is y, the number of the temperature adjustment assemblies configured to adjust temperature of the y second-type battery packs is 2y.

In a further improved embodiment, a capacity of each first-type battery pack is greater than or equal to 90 Wh and less than 1000 Wh, and a capacity of each second-type battery pack is greater than or equal to 1000 Wh and less than or equal to 4000 Wh.

In a further improved embodiment, an electrical connection terminal is provided on the battery compartment adjacent to each temperature adjustment assembly, such that a plurality of electrical connection terminals are provided on the two opposite side plates. Each first-type battery pack is provided with one electrical connector, wherein when the first-type battery pack is installed into the battery compartment, the one electrical connector is connected to one of the electrical connection terminal. Each second-type battery pack is provided with two electrical connectors at two ends of the second-type battery pack, wherein when the second-type battery pack is installed into the battery compartment, one of the two electrical connectors is connected to one of the electrical connection terminal on one of the two opposite side plates, and an other of the two electrical connectors is connected to one of the electrical connection terminal on an other of the two opposite side plates.

The present disclosure further provides an outdoor working device, including: a travelling assembly configured to support the outdoor working device to move; and a power supply device including: a battery compartment provided with a heat dissipation fan configured to generate airflow during operation; a battery pack detachably installed inside the battery compartment, the battery pack including a battery housing and a plurality of battery cells accommodated within the battery housing, wherein the battery housing includes a first housing wall perpendicular to an axial direction of the battery cells and a second housing wall parallel to the axial direction of the battery cells, the first housing wall is provided with first air holes, and the second housing wall is provided with second air hole. The airflow generated by the heat dissipation fan is configured to enter an interior of the battery housing through the first air holes, flow across the battery cells inside the battery housing, and exit through the second air holes.

In a further improved embodiment, the battery compartment is provided with an airflow exchange portion, wherein an air blowing direction of the heat dissipation fan is same as a flow direction of air passing through the airflow exchange portion and a flow direction of air passing through the second air holes.

In a further improved embodiment, the battery compartment includes two opposite side plates each provided with heat dissipation fans, and each heat dissipation fan on one of the two opposite side plates is arranged in one-to-one correspondence with a respective one heat dissipation fan on an other of the two opposite side plates.

In a further improved embodiment, along a direction perpendicular to the axial direction of the battery cells, the second housing wall disposed at two ends of the battery housing are each provided with one or more of the second air holes, and the two opposite side plates are each provided with one or more airflow exchange portions; and when the battery pack is mounted into the battery compartment, each of the second air hole aligns with a respective one of the airflow exchange portions.

The present disclosure further provides an energy source system, including: a battery compartment provided with a heat dissipation fan configured to generate airflow during operation; a battery pack detachably installed inside the battery compartment, the battery pack including a battery housing and a plurality of battery cells accommodated within the battery housing, wherein the battery housing includes a first housing wall perpendicular to an axial direction of the battery cells and a second housing wall parallel to the axial direction of the battery cells, the first housing being provided with first air holes, and the second housing being provided with second air holes. The airflow generated by the heat dissipation fan is configured to enter an interior of the battery housing through the first air holes, flow across the battery cells inside the battery housing, and exit through the second air holes.

In a further improved embodiment, the battery compartment is provided with an airflow exchange portion, wherein an air blowing direction of the heat dissipation fan, a flow direction of air passing through the airflow exchange portion, and a flow direction of air passing through the second air holes are same and collinear.

In a further improved embodiment, the battery compartment includes two opposite side plates each provided with heat dissipation fans, and each heat dissipation fan on one of the two opposite side plates is arranged in one-to-one correspondence with a respective one heat dissipation fan on an other of the two opposite side plates.

The present disclosure further provides an outdoor working device, including: a power supply device including: a power supply unit including a temperature detection module configured to detect a temperature of the power supply unit; a battery compartment configured to accommodate the power supply unit; a power management module electrically connected to the temperature detection module and configured to process temperature data transmitted by the temperature detection module; a plurality of temperature adjustment assemblies electrically connected to the power management module. Upon that a temperature value detected by the temperature detection module falls within a normal range, the power management module is configured to take no control action for the temperature adjustment assemblies. Upon that the detected temperature value is within a first range non-overlapping with the normal range, the power management module is configured to control the temperature adjustment assemblies to heat or cool the power supply unit. Upon that the detected temperature value is within a second range non-overlapping with the first range, the power management module is configured to maintain controlling of the temperature adjustment assemblies to heat or cool the battery pack, and the power supply unit operates under low-current charging or discharging.

In a further improved embodiment, each temperature adjustment assembly includes an airflow generator configured to generate airflow, wherein when a minimum value of the first range is greater than a maximum value within the normal range of the power supply unit, the airflow generator is configured to perform heat dissipation for the power supply unit.

In a further improved embodiment, the power supply unit includes first-type battery packs, wherein when m of the first-type battery packs have internal temperatures falling within the first range, m of the temperature adjustment assemblies are configured to adjust the temperatures of the m first-type battery packs.

In a further improved embodiment, the power supply unit includes first-type battery packs, wherein when m of first-type battery packs have internal temperatures falling within the second range, at least (m+1) of the temperature adjustment assemblies and a maximum of a total number of the plurality of temperature adjustment assemblies are configured to adjust the temperatures of the m first-type battery packs.

In a further improved embodiment, the power supply unit includes second-type battery packs, wherein when n of the second-type battery packs have internal temperatures falling within the first range, 2n of the temperature adjustment assemblies are configured to adjust the temperatures of the n second-type battery packs.

In a further improved embodiment, the power supply unit includes second-type battery packs, wherein when n of the second-type battery packs have internal temperatures falling within the second range, at least (2n+1) of the temperature adjustment assemblies and a maximum of a total number of the plurality of temperature adjustment assemblies are configured to adjust the temperatures of the n second-type battery packs.

Compared with the prior art, the energy source system and the outdoor working device provided by the second aspect of the present disclosure achieve the following beneficial technical effects:

The present disclosure performs targeted thermal adjustment on battery packs with different types of abnormal temperatures, and maintains a standby monitoring state without thermal intervention for battery packs whose temperature falls within the normal range. Since electric energy consumed for thermal adjustment is supplied by the battery packs themselves, such arrangement reduces power consumption and extends the single-charge runtime of the battery packs.

A plurality of temperature adjustment assemblies are arranged on the battery compartment. The temperature adjustment assemblies adopt a one-to-one matching mode for first-type battery packs with temperatures within a first range, and a two-to-one matching mode for second-type battery packs with temperatures within the first range. Thermal adjustment is implemented according to actual thermal demands of each battery pack, so as to avoid unnecessary waste of electric energy of the battery packs.

In addition, when the temperature falls within a second range, the number of temperature adjustment assemblies assigned to adjust the first-type battery packs is larger than the quantity of battery packs mounted on the lawn mower, and all temperature adjustment assemblies equipped on the lawn mower can be maximally utilized to regulate the temperature of the first-type battery packs. When the temperature falls within the second range, the number of temperature adjustment assemblies allocated to adjust the second-type battery packs is at least twice the quantity of mounted battery packs, and all onboard temperature adjustment assemblies can also be fully activated for thermal adjustment of the second-type battery packs. This arrangement enables differentiated rapid thermal adjustment for the first-type battery packs and the second-type battery packs, so that the first-type battery packs or the second-type battery packs operate within the normal temperature range as much as possible.

### DESCRIPTION OF DRAWINGS

The following is a further detailed explanation of the specific embodiment of the present disclosure in combination with the attached drawings.
FIG. 1 is a perspective view of an outdoor garden lawn mower according to some embodiments of the present disclosure.
FIG. 2 is a schematic diagram of the outdoor garden lawn mower along a first straight direction and a second straight direction according to some embodiments of the present disclosure.
FIG. 3 is a schematic structural diagram of a first battery compartment and a second battery compartment according to some embodiments of the present disclosure.
FIG. 4 is a schematic structural diagram of a connecting terminal and a slide rail in FIG. 3.
FIG. 5 is a schematic structural diagram of another first battery compartment and another second battery compartment according to some embodiments of the present disclosure.
FIG. 6 is a schematic diagram of a layout structure of a battery pack of FIG. 5.
FIG. 7 is a schematic diagram of another layout structure of the battery pack in FIG. 5 according to some embodiments of the present disclosure.
FIG. 8 is a schematic diagram of still another layout structure of the battery pack in FIG. 5 according to some embodiments of the present disclosure.
FIG. 9 is a schematic diagram of yet another layout structure of the battery pack in FIG. 5 according to some embodiments of the present disclosure.
FIG. 10 is a schematic structural diagram of another battery compartment according to some embodiments of the present disclosure.
FIG. 11 is a schematic structural diagram of still another battery compartment according to some embodiments of the present disclosure.
FIG. 12 is a schematic diagram of a layout structure of a battery pack of FIG. 11 according to some embodiments of the present disclosure.
FIG. 13 is a schematic diagram of another layout structure of the battery pack of another embodiment in FIG. 11 according to some embodiments of the present disclosure.
FIG. 14 is a schematic diagram of still another layout structure of the battery pack in FIG. 11 according to some embodiments of the present disclosure.
FIG. 15 is a schematic diagram of yet another layout structure of the battery pack in FIG. 11 according to some embodiments of the present disclosure.
FIG. 16 is a schematic structural diagram of still another battery compartment according to some embodiments of the present disclosure.
FIG. 17 is a schematic structural diagram of a battery pack of FIG. 16 according to some embodiments of the present disclosure.
FIG. 18 is a schematic diagram of a layout structure of the battery pack in FIG. 16 according to some embodiments of the present disclosure.
FIG. 19 is a schematic diagram of another layout structure of the battery pack in FIG. 16 according to some embodiments of the present disclosure.
FIG. 20 is a schematic diagram of still another layout structure of the battery pack in FIG. 16 according to some embodiments of the present disclosure.
FIG. 21 is a schematic diagram of a layout structure of the battery pack according to some embodiments of the present disclosure present disclosure.
FIG. 22 is a schematic diagram of another layout structure of the battery pack according to some embodiments of the present disclosure present disclosure.
FIG. 23 is a schematic diagram of still another layout structure of the battery pack according to some embodiments of the present disclosure present disclosure.
FIG. 24 is a schematic diagram of still another layout structure of the battery pack according to some embodiments of the present disclosure present disclosure.
FIG. 25 is a schematic diagram of still another layout structure of the battery pack according to some embodiments of the present disclosure present disclosure.
FIG. 26 is a schematic diagram of still another layout structure of the battery pack according to some embodiments of the present disclosure present disclosure.
FIG. 27 is a schematic diagram of yet another layout structure of the battery pack according to some embodiments of the present disclosure present disclosure.
FIG. 28 is a schematic diagram of a layout structure of the battery pack according to some embodiments of the present disclosure, present disclosure from the perspective of a rear of the outdoor garden mower.
FIG. 29 is a schematic diagram of another layout structure of the battery pack according to some embodiments of the present disclosure, present disclosure from the perspective of the rear of the outdoor garden lawn mower.
FIG. 30 is a schematic diagram of another layout structure of the battery pack according to some embodiments of the present disclosure, present disclosure from the perspective of the rear of the outdoor garden mower.
FIG. 31 is a schematic diagram of still another layout structure of the battery pack according to some embodiments of the present disclosure, from the perspective of the rear of the outdoor garden mower.
FIG. 32 is a schematic diagram of a layout structure of the battery pack according to some embodiments of the present disclosure, when a user views the battery compartment from a top of the outdoor garden lawn mower present disclosure.
FIG. 33 is a schematic diagram of another layout structure of the battery pack according to some embodiments of the present disclosure, when a user views the battery compartment from a top of the outdoor garden lawn mower present disclosure.
FIG. 34 illustrates a distance between a lowest point of the battery compartment and the ground according to some embodiments of the present disclosure present disclosure.
FIG. 35 is a schematic structural diagram illustrating a relationship structure between the battery compartment, a battery compartment bottom plate, and a power management module according to some embodiments of the present disclosure present disclosure.
Fig. 36 is a schematic structural diagram of a locking part and a trigger part according to some embodiments of the present disclosure present disclosure.
FIG. 37 is a schematic structural diagram of an ejection structure according to some embodiments of the present disclosure present disclosure.
FIG. 38 is a schematic structural diagram of first-type battery pack according to some embodiments of the present disclosure present disclosure.
FIG. 39 is a schematic structural diagram of a second-type battery pack according to some embodiments of the present disclosure present disclosure.
FIG. 40 is a schematic structural diagram of two electrical connectors of the second-type battery pack according to some embodiments of the present disclosure present disclosure.
FIG. 41 is a schematic diagram illustrating a relationship between an output power and torque of a lawn mowing motor according to some embodiments of the present disclosure present disclosure.
FIG. 42 is a schematic diagram illustrating a relationship between the output power and torque of a traveling motor of the lawn mowing motor according to some embodiments of the present disclosure present disclosure.
FIG. 43 is a schematic diagram illustrating an electrical connection between the battery pack and the power management module, mowing motor and travel motor according to some embodiments of the present disclosure present disclosure.
FIG. 44 is a perspective diagram of an outdoor working device according to an embodiment of the present disclosure.
FIG. 45 is a schematic structural diagram of a battery compartment of the outdoor working device installed with a first-type battery pack according to some embodiments of the present disclosure.
FIG. 46 is a schematic structural diagram of another battery compartment of the outdoor working device installed with a second-type battery pack according to some embodiments of the present disclosure.
FIG. 47 is a schematic structural diagram of still another battery compartment of the outdoor working device installed with both the first-type battery pack and the second-type battery pack according to some embodiments of the present disclosure.
FIG. 48 is a schematic structural diagram illustrating that air outlet directions of temperature adjustment assemblies respectively on two side plates of the battery compartment of the outdoor working device are the same.
FIG. 49 is a schematic structural diagram illustrating that the air outlet directions of the temperature adjustment assemblies respectively on the two side plates of the outdoor working device are different.
FIG. 50 is a schematic structural diagram illustrating a scenario in which some of the temperature adjustment assemblies of the outdoor working device exhaust air out of the battery compartment and the other intake air into the battery compartment.
FIG. 51 is a schematic structural diagram illustrating another scenario in which some of the temperature adjustment assemblies of the outdoor working device exhaust air out of the battery compartment and the other intake air into the battery compartment.
FIG. 52 is a schematic structural diagram illustrating an assembly relationship between the temperature adjustment assembly and the battery compartment according to some embodiments of the present disclosure.
FIG. 53 is a schematic structural diagram illustrating internal mounting seats of the battery compartment according to some embodiments of the present disclosure.
FIG. 54 is a schematic structural diagram illustrating external mounting grooves of the battery compartment according to some embodiments of the present disclosure.
FIG. 55 is a cross-sectional structural diagram of the battery compartment assembled with a battery pack (the second-type battery pack) according to some embodiments of the present disclosure.
FIG. 56 is a schematic structural diagram illustrating air intake and air exhaust of the second-type battery pack according to some embodiments of the present disclosure.
FIG. 57 is a structural diagram of a first-type battery pack from one viewing angle according to some embodiments of the present disclosure.
FIG. 58 is a structural diagram of the first-type battery pack from another viewing angle according to some embodiments of the present disclosure.
FIG. 59 is a structural diagram of a second-type battery pack from one viewing angle according to some embodiments of the present disclosure.
FIG. 60 is a structural diagram of the second-type battery pack from another viewing angle according to some embodiments of the present disclosure.
FIG. 61 is a logic block diagram of the first-type battery pack, the second-type battery pack, the battery compartment, and a power management device according to some embodiments of the present disclosure.
FIG. 62 is a logic block diagram illustrating electrical signal connections among the battery pack, the power management device, a heat dissipation fan, a radar controller, a rear radar, and a taillight according to some embodiments of the present disclosure.
FIG. 63 is a schematic structural diagram of a vehicle frame according to some embodiments of the present disclosure.
FIG. 64 is a schematic structural diagram of the vehicle frame and a power supply device according to some embodiments of the present disclosure.
FIG. 65 is a schematic structural diagram of the vehicle frame, the power supply device, and a protective cover according to some embodiments of the present disclosure.
FIG. 66 is a schematic structural diagram of the battery compartment and the power management device according to some embodiments of the present disclosure.
FIG. 67 is a schematic structural diagram of a mounting base and a charging connector according to some embodiments of the present disclosure.
FIG. 68 is a schematic diagram of wire harness connections between the power management device and an airflow generator, electrical terminals, the taillight, the rear radar, and the radar controller according to some embodiments of the present disclosure.
FIG. 69 is a schematic diagram of wire harness connections between the power management device and the airflow generator, the electrical terminals, the taillight, the rear radar, the radar controller, and the charging connector according to some embodiments of the present disclosure.
FIG. 70 is a schematic structural diagram of a power fixing member with wire routing holes, as well as the heat dissipation fan and electrical terminals arranged on the battery compartment according to some embodiments of the present disclosure.
FIG. 71 is a cross-sectional structural diagram of the power management bracket, the power supply device, and the protective cover according to some embodiments of the present disclosure.
FIG. 72 is a schematic structural diagram of the power management bracket according to some embodiments of the present disclosure.
FIG. 73 is a schematic structural diagram of the protective cover according to some embodiments of the present disclosure.
FIG. 74 is a perspective structural diagram of the protective cover according to some embodiments of the present disclosure.
FIG. 75 is a schematic diagram illustrating flow velocities at various positions on an outer surface of the protective cover under simulation conditions according to some embodiments of the present disclosure.
FIG. 76 is a schematic diagram of a detection area of the rear radar according to some embodiments of the present disclosure.
FIG. 77 is a structural diagram of the detection area of the rear radar from another viewing angle according to some embodiments of the present disclosure.
FIG. 78 is a perspective structural diagram of the rear cover according to some embodiments of the present disclosure.
FIG. 79 is a schematic structural diagram of the battery compartment and the rear cover according to some embodiments of the present disclosure.
FIG. 80 is a schematic structural diagram illustrating a storage box disposed between a seat and the battery compartment according to some embodiments of the present disclosure.
FIG. 81 is a schematic structural diagram illustrating the storage box and the battery compartment according to some embodiments of the present disclosure.
FIG. 82 is a schematic structural diagram illustrating the storage box according to some embodiments of the present disclosure.
FIG. 83 is a logic block diagram illustrating a heat dissipation relationship between the heat dissipation fan and the battery pack according to some embodiments of the present disclosure.
FIG. 84 is a logic block diagram illustrating another heat dissipation relationship between the heat dissipation fan and the battery pack according to some embodiments of the present disclosure.
FIG. 85 is a logic block diagram illustrating still another heat dissipation relationship between the heat dissipation fan and the battery pack according to some embodiments of the present disclosure.
FIG. 86 is a schematic structural diagram illustrating an energy source system equipped with a battery pack according to some embodiments of the present disclosure.
FIG. 87 is a schematic structural diagram illustrating the energy source system equipped with the battery pack from another viewing angle according to some embodiments of the present disclosure.
FIG. 88 is a schematic structural diagram of the energy source system without a battery pack installed according to some embodiments of the present disclosure.
FIG. 89 is a cross-sectional structural diagram of the energy source system without the battery pack installed according to some embodiments of the present disclosure.

### DETAILED DESCRIPTION OF PREFERRED EMBODIMENTS

The terms used in the present disclosure are solely for describing specific embodiments and are not intended to limit the present application. For example, directional or positional terms such as "upper," "lower," "left," "right," "front," and "rear" mentioned below are based on the orientations or positional relationships shown in the accompanying drawings. They are used merely for the convenience of describing the present disclosure and simplifying the description, and do not indicate or imply that the referenced device must have a specific orientation or be constructed and operated in a specific orientation. Therefore, these terms should not be construed as limiting the present disclosure.

For example, when a user is seated on an outdoor garden lawn mower placed on the ground, a direction the user faces is defined as the front, an opposite direction as the rear, a direction on user's left as the left, a direction on user's right as the right, a direction closest to the ground as down, and the direction away from the ground as up.

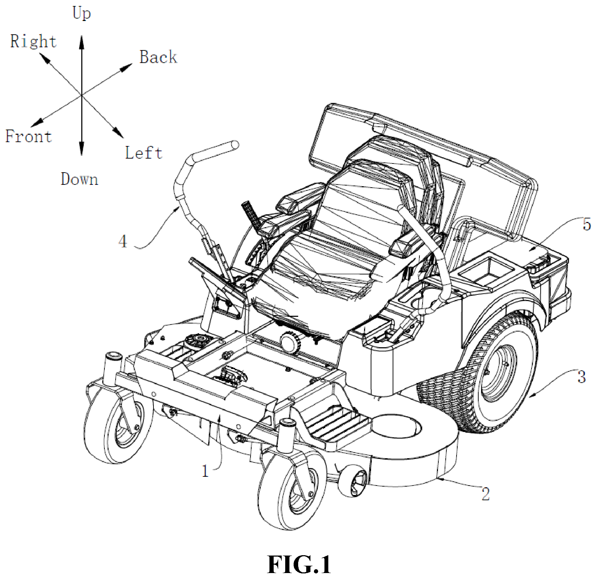

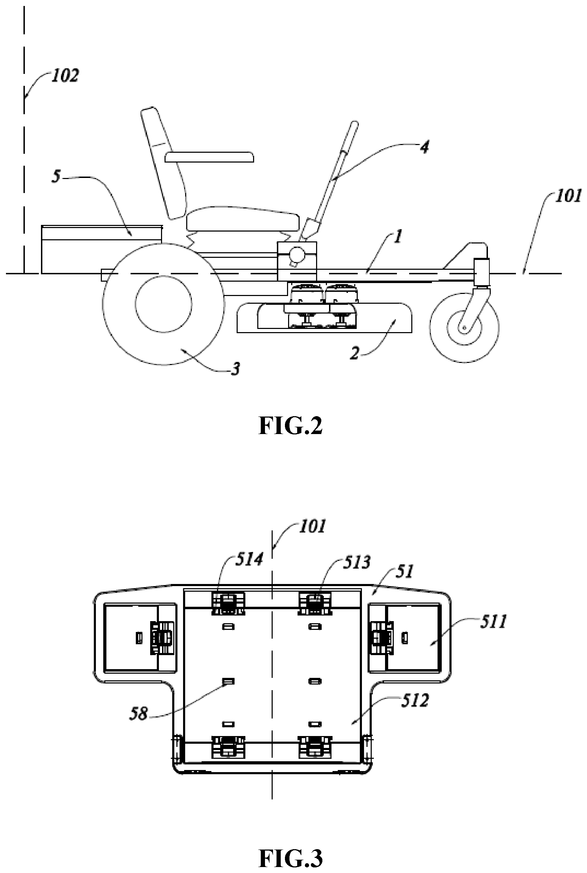

FIGS. 1 and 2 illustrate an outdoor garden lawn mower according to some embodiments of the present disclosure, which is widely used in fields such as vegetation trimming. The outdoor garden lawn mower includes a main frame 1, a seat, one or more cutting assemblies 2, a travelling assembly 3, an operating assembly 4, and a power supply device 5. The main frame 1 extends along a first straight direction 101 parallel to a front-rear direction. The seat is mounted on the main frame 1 for the user to sit on. The main frame 1 is further used for mounting the cutting assemblies 2, the travelling assembly 3, the operating assembly 4, and the power supply device 5. The power supply device 5 is configured to provide an energy source for the cutting assemblies 2 and the travelling assembly 3, enabling the cutting assemblies 2 to perform cutting operations and allowing the travelling assembly 3 to support the main frame 1 and its associated components for travel.

Specifically, the cutting assemblies 2 serve as a power output component for outputting power to realize a mowing function of the electric lawn mower. The cutting assemblies 2 include two or more cutting assemblies and are located below the main frame 1. In some embodiments, each cutting assembly 2 includes a blade disc, a cutting element, and a cutting motor. The cutting element is used for cutting vegetation during high-speed rotation (for example, the cutting element is a blade for cutting vegetation on a lawn). The blade disc includes a cutting space for accommodating the cutting element, with at least a portion of the cutting element located within the cutting space. In some embodiments, the outdoor garden lawn mower having two cutting assemblies may include two cutting elements, and correspondingly two cutting motors, with the two cutting motors driving the two cutting elements respectively. As another example, the outdoor garden lawn mower having three cutting assemblies may include three cutting elements, and correspondingly three cutting motors, with the three cutting motors driving the three cutting elements respectively. Of course, the cutting assembly 2 can also be detached from the outdoor garden lawn mower. In some embodiments, the cutting assembly 2 can be replaced with a snow removal assembly or other assemblies, such that the outdoor garden lawn mower can not only be used for cutting vegetation but also be applied to other fields such as snow removal.

The travelling assembly 3 includes travelling wheels mounted on the main frame 1 and traveling motors for driving the travelling wheels. The travelling wheels are arranged on both sides of the main frame 1, keeping the center of gravity of the outdoor garden lawn mower within the main frame 1 to reduce the likelihood of the lawn mower tipping over during travel. In some embodiments, the travelling wheels include four travelling wheels, including two front travelling wheels and two rear travelling wheels. The front travelling wheels may be caster wheels. The traveling motors are connected to the rear travelling wheels and are configured to drive the rear travelling wheels to rotate. Both of the two rear travelling wheels may be equipped with traveling motors, and rotational speeds of the two traveling motors may be the same or different. When the user drives the outdoor garden lawn mower straight, the rotational speeds of the two traveling motors are substantially the same; when turning, the rotational speeds of the two traveling motors are different, and the lawn mower turns towards a side where one of the traveling motors having a lower rotational speed is arranged. In some embodiments, a diameter of the front travelling wheels is smaller than that of the rear travelling wheels. It is understandable that the number of travelling wheels can also be set to three or five.

The operating assembly 4 includes a first operating lever and a second operating lever arranged on the left and right sides of the outdoor garden lawn mower, respectively. The user controls forward, backward, or turning movement of the outdoor garden lawn mower by operating the first and second operating levers. The operating assembly 4 can also be a steering wheel capable of controlling the outdoor garden lawn mower. The outdoor garden lawn mower of the present disclosure further includes a brake assembly, which is arranged on an upper surface of a front part of the main frame 1 for the user to step on to control an operating state of the outdoor garden lawn mower.

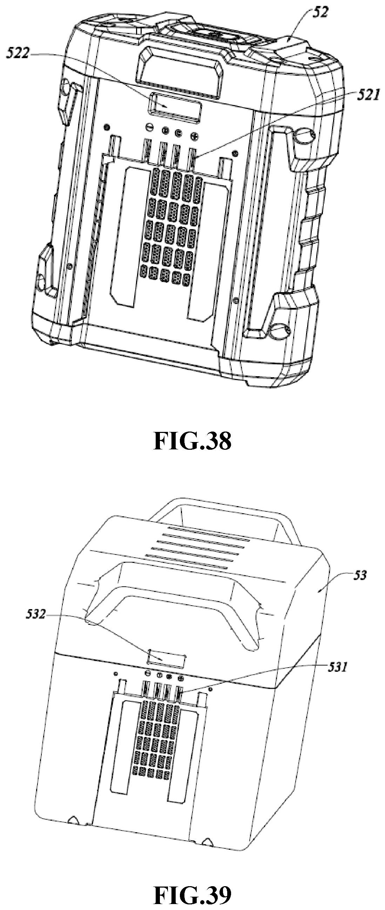

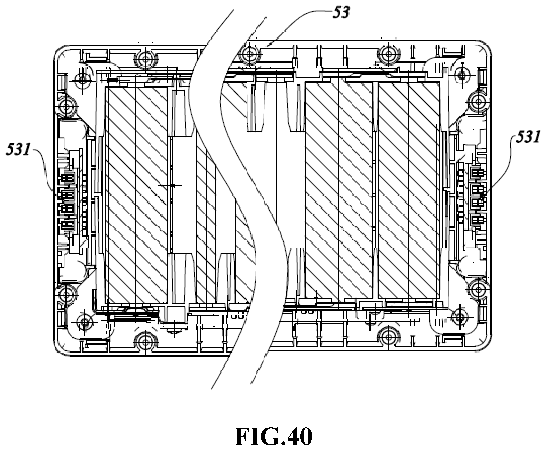

Referring also to FIGS. 38, 39, and 40, the power supply device 5 includes a first-type battery pack 52, a second-type battery pack 53, and a battery compartment 51. In some embodiments, the power supply device 5 is arranged at a rear of the outdoor garden lawn mower. The first-type battery pack 52 and the second-type battery pack 53 have same electrical connectors: the electrical connector of the first-type battery pack 52 includes a plurality of first terminal slots 521, the electrical connector of the second-type battery pack 53 includes a plurality of second terminal slots 531, and the structures of the first terminal slots 521 and the second terminal slots 531 are the same. Electrical connection terminals 513, which are capable of forming electrical connections with the aforementioned electrical connectors of the first-type battery pack 52 and the second-type battery pack 53, are further provided on side walls of the battery compartment 51. When the first-type battery pack 52 is (mechanically) connected with the battery compartment 51, the plurality of first terminal slots 521 are engaged with the electrical connection terminals 513. When the second-type battery pack 53 is connected with the battery compartment 51, the plurality of second terminal slots 531 are engaged with the electrical connection terminals 513, so that the power supply device 5 supplies power to the outdoor garden lawn mower to complete predetermined outdoor tasks. Compared with power sources using fossil fuels, the outdoor garden lawn mower of the present disclosure is more environmentally friendly and better aligned with long-term development plans.

It should be noted that both the first-type battery pack 52 and the second-type battery pack 53 can be connected with the electrical connection terminals 513, eliminating the need to provide two types of electrical connection terminals. This makes the battery pack structure more compact and simple, which is conducive to achieving a simplified design of the battery pack.

In some embodiments, a size of the first-type battery pack 52 is generally set smaller than that of the second-type battery pack 53. In regular settings, the electrical capacity of a battery pack is proportional to its size; that is, the smaller the battery pack size, the smaller the electrical capacity, and the larger the battery pack size, the larger the electrical capacity.

As shown in FIGS. 3 to 5, in some embodiments, the battery compartment 51 includes a first side wall and a second side wall arranged opposite to each other. At least one pair of the electrical connection terminals 513 are respectively arranged on the first side wall and the second side wall, and can be detachably electrically connected to the first-type battery pack 52 and/or the second-type battery pack 53. To enable the electrical connection terminals 513 at one mating position of the battery compartment 51 to form electrical connections with both the first-type battery pack 52 and the second-type battery pack 53, in some embodiments, each of the opposite first and second side walls of the battery compartment 51 is provided with a respective one electrical connection terminal 513, thereby providing two electrical connection terminals respectively on the first and second side walls of the battery compartment 51. This arrangement allows the two electrical connection terminals 513 to either be electrically connected to two first-type battery packs 52 respectively or to be jointly electrically connected to one second-type battery pack 53. Multiple pairs of the electrical connection terminals 513 can also be provided to meet the demand for simultaneous use of multiple second-type battery packs 53.

In some embodiments, the electrical connection terminal 513 includes a positive terminal and a negative terminal for connecting with the electrical connectors of the first-type battery pack 52 or the second-type battery pack 53.

In some embodiments, the first-type battery pack 52 is provided with only one electrical connector, and positive and negative terminals of this electrical connector are located on the same side, which can be connected with positive terminal and negative terminal of the electrical connection terminal 513. That is, one electrical connection terminal 513 can be connected to one first-type battery pack 52 to form an electrical connection. The second-type battery pack 53 is provided with two electrical connectors, and the two electrical connectors are located on two opposite sides of the second-type battery pack 53. One of the two electrical connectors can be connected with one of the electrical connection terminals 513 arranged on the opposite side walls of the battery compartment 51, and the other one of the two electrical connectors can be connected with the other electrical connection terminal 513 to form an electrical connection. Of course, the two electrical connectors of the second-type battery pack 53 can also be arranged on the same side.

In some embodiments, both the first-type battery pack 52 and the second-type battery pack 53 can supply power to the cutting motor and the traveling motor.

In some embodiments, after being removed from the outdoor garden lawn mower, both the first-type battery pack 52 and the second-type battery pack 53 can also supply power to other electric tools.

In some embodiments, as shown in FIGS. 2, 3, and 11, along a direction perpendicular to or parallel to the first straight direction 101, orthographic projections of at least one pair of the electrical connection terminals 513, which are respectively arranged on the first side wall and the second side wall of the battery compartment 51, at least partially overlap. For a pair of the electrical connection terminals 513 arranged on opposite sides of the battery compartment 51, their orthographic projections along the direction perpendicular to or parallel to the first straight direction may completely overlap, partially overlap, not overlap at all, or a combination of at least any two thereof. This can be adjusted according to actual needs to meet design requirements of the battery compartment 51, enrich mating methods between the battery compartment 51 and the battery packs, and thereby improve the compatibility of the outdoor garden lawn mower with different types of battery packs.

In some embodiments, along the direction perpendicular to or parallel to the first straight direction 101, the orthographic projections of at least one pair of the electrical connection terminals 513, which are respectively arranged on the first side wall and the second side wall of the battery compartment 51, do not overlap at all. That is, for those arranged in pairs among the electrical connection terminals 513, the orthographic projections of at least one pair, multiple pairs, or all pairs of the electrical connection terminals 513 do not overlap at all along the direction perpendicular to or parallel to the first straight direction 101. This can be adjusted according to actual needs to optimize practical use requirements of the structure of the battery compartment 51.

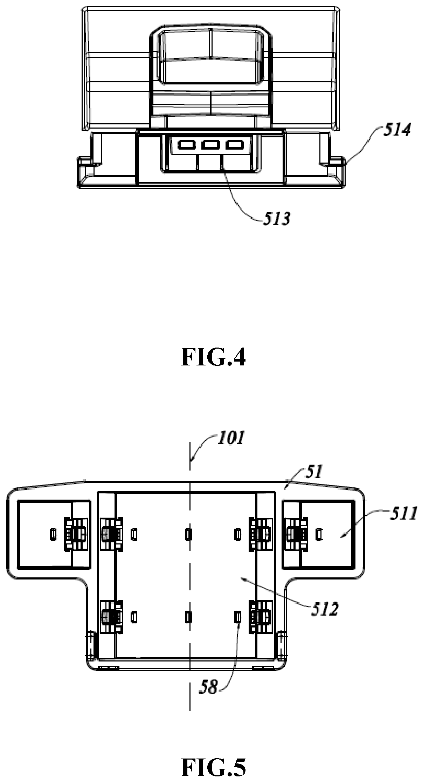

As shown in FIG. 4, the first-type battery pack 52 or the second-type battery pack 53 is provided with a sliding groove for pluggable connection with a rail 514, that is, the first-type battery pack 52 and the second-type battery pack 53 share the same rail 514. The sliding grooves on the first-type battery pack 52 and the second-type battery pack 53 may be the same or different, as long as both can form a pluggable fit with the rail 514 on the battery compartment 51. Usually, one sliding groove and one rail 514 form a set, and at least one set (or two or more sets) of sliding groove and rail is provided between one battery pack and the battery compartment 51.

In some embodiments, the first-type battery pack 52 and the second-type battery pack 53 may also adopt different rails 514 respectively, as long as both can be connected with the same electrical connection terminal 513 to achieve quick plugging and unplugging for electrical connection.

In some embodiments, in addition to using the cooperation of sliding grooves and rails 514 to realize the pluggable installation of the first-type battery pack 52 or the second-type battery pack 53 with the battery compartment 51, other structures can also be used to realize the installation cooperation therebetween. For example, a groove can be provided at a bottom of the first-type battery pack 52 or the second-type battery pack 53, and a convex ridge matching the groove can be provided at a bottom of the battery compartment 51. Any structure that can provide installation guidance or stability falls within the protection scope of the present disclosure.

In an exemplary embodiment, the battery compartment 51 includes a first battery compartment 511 for accommodating the first-type battery pack 52 and a second battery compartment 512 for accommodating the first-type battery pack 52 and/or the second-type battery pack 53. The first battery compartment 511 generally has a small size and can only accommodate the first-type battery pack 52.The second battery compartment 512 generally has a large size and can accommodate either the first-type battery pack 52 or the second-type battery pack 53. In some embodiments, the first battery compartment 511 and the second battery compartment 512 are isolated (physically isolated) from each other, and the first battery compartment 511 is disposed outside (i.e., externally disposed relative to) the second battery compartment 512. In some embodiments, the first battery compartments 511 are provided on both sides of the second battery compartment 512.

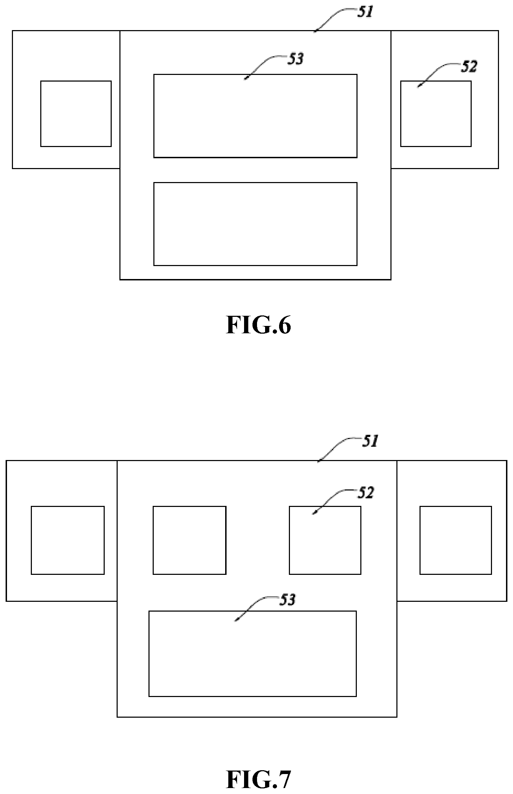

As shown in FIGS. 6 to 9, in some embodiments, taking a structure of the battery compartment 51 in FIG. 5 as an example, a combination of the first-type battery pack 52 and the second-type battery pack 53, which may be mounted on the outdoor garden lawn mower, include the following: two first-type battery packs 52 and two second-type battery packs 53; four first-type battery packs 52 and one second-type battery pack 53; or six first-type battery packs 52.

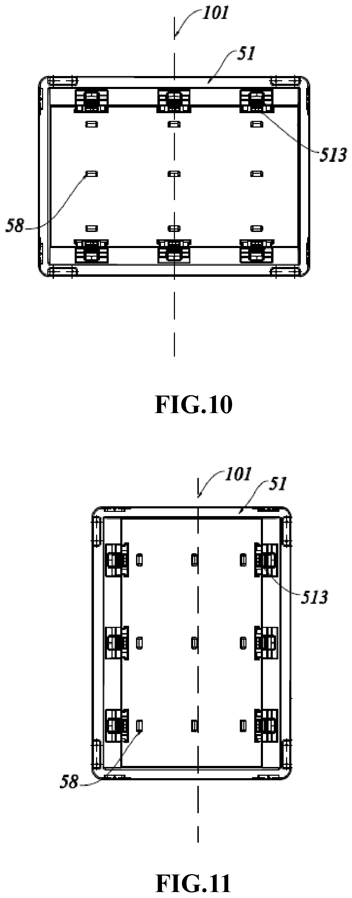

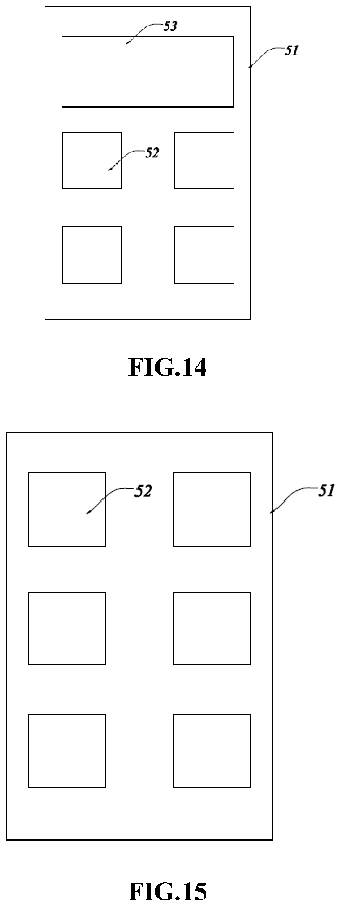

In some embodiments, the battery compartment 51 is substantially configured as an integrated rectangular compartment structure. Exemplary arrangement modes of the battery packs are shown in FIGS. 10 to 15 include the following: three second-type battery packs 53; or two second-type battery packs 53 and two first-type battery packs 52; or one second-type battery pack 53 and four first-type battery packs 52; or six first-type battery packs 52.

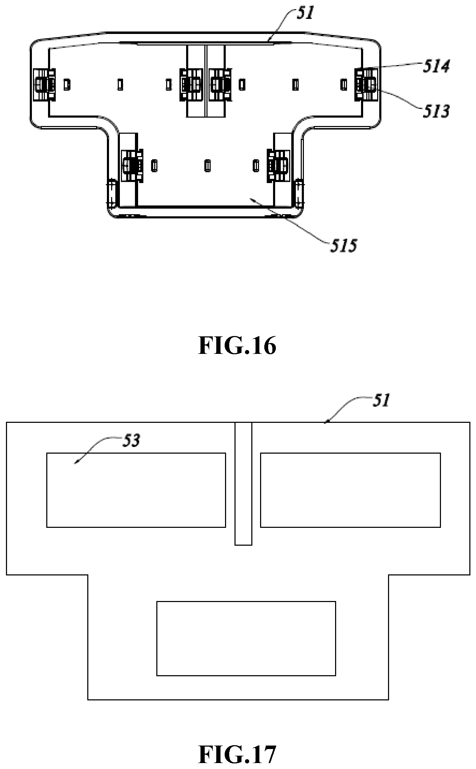

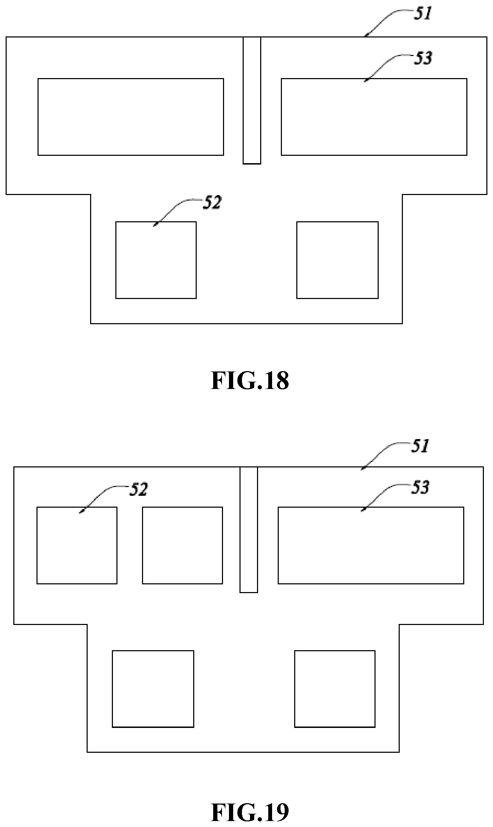

As shown in FIGS. 16 to 20, in some embodiments, the battery compartment 51 includes a third side wall and a fourth side wall arranged opposite to each other. At least part of the third side wall of the battery compartment 51 protrudes towards a direction away from the fourth side wall to form an auxiliary compartment 515 capable of accommodating the first-type battery pack 52 or the second-type battery pack 53. A terminal mounting base is provided on a side of the fourth side wall close to the third side wall, and the terminal mounting base is at least used for mounting the electrical connection terminals 513. In some embodiments, the third side wall protrudes along the first straight direction 101, so that the battery compartment 51 forms an integrated compartment structure, which is overall T-shaped, better fits space at the rear of the outdoor garden lawn mower, thereby improving utilization of the rear space. Specifically, the battery compartment 51 of such a structure can accommodate three second-type battery packs 53; or two second-type battery packs 53 and two first-type battery packs 52; or one second-type battery pack 53 and four first-type battery packs 52; or six first-type battery packs 52.

In some embodiments, the battery compartment 51 can further be configured as a plurality of compartments of different sizes, such as 3, 4, 5, or more compartments.

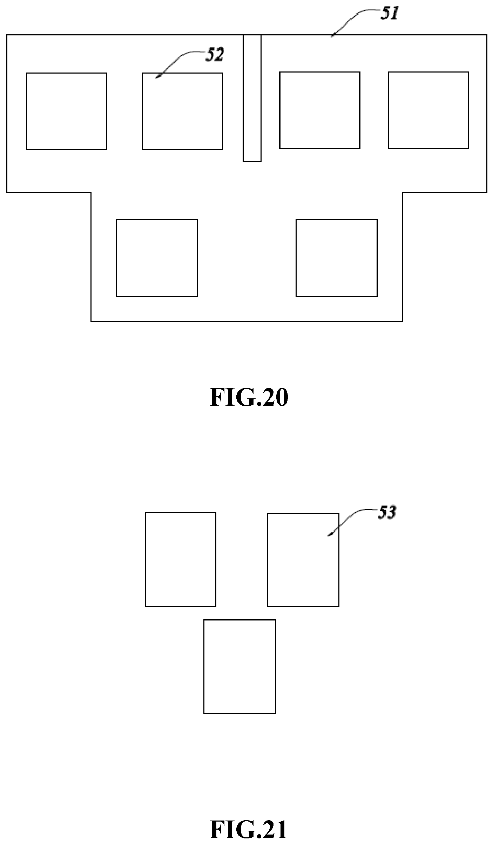

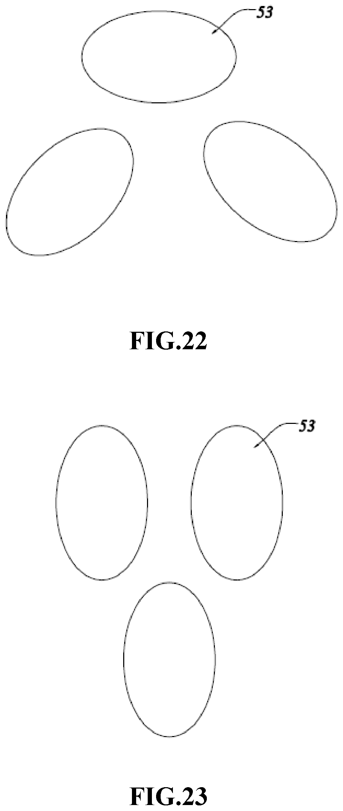

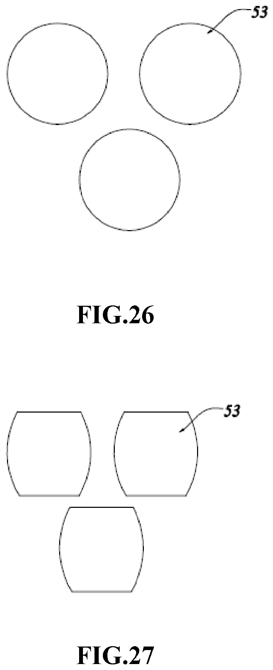

As shown in FIGS. 21 to 26, in some embodiments, taking the second-type battery pack 53 as an example, a cross-sectional structure of the second-type battery pack 53 along a direction perpendicular to a insertion direction (a direction along which the second-type battery pack 53 is inserted into the battery compartment 51) can be rectangular, elliptical, rhombic, circular, or other polygons, e.g., a roughly rectangular as shown in FIG. 27. Battery packs of the same shape can further be arranged into different combinations within the battery compartment 51, as shown in FIGS. 22 and 23, and FIGS. 24 and 25.

In some embodiments, to drive the outdoor garden lawn mower to operate, at least one first-type battery pack 52 or one second-type battery pack 53 may be installed in the battery compartment 51 to supply power to the lawn mower.

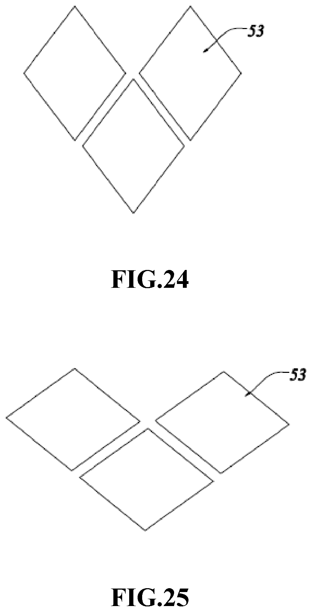

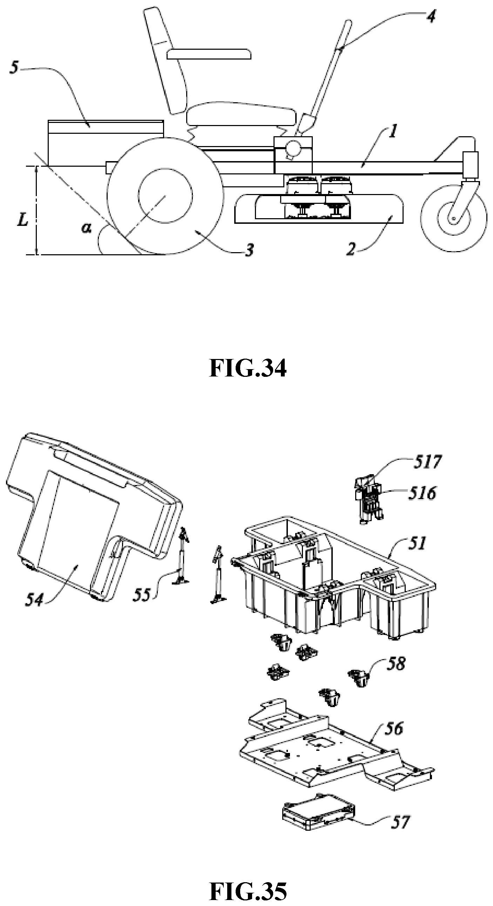

As shown in FIG. 35, in some embodiments, a compartment cover 54 is pivotally connected to an edge of an opening of the battery compartment 51. The compartment cover 54 is connected to the battery compartment 51 through a pivot pin, such that driving the compartment cover 54 to open or close can switch the battery compartment 51 between an open state and a closed state. A gas spring 55 is further connected between the battery compartment 51 and the compartment cover 54 to support opening and closing actions of the compartment cover 54. A shape of the compartment cover 54 matches a shape of the opening of the battery compartment 51, which is not limited to the structure shown in FIG. 24 and can be rectangular, circular, etc.

The battery compartment 51 includes an inwardly recessed groove, and the first-type battery pack 52 or the second-type battery pack 53 can be detachably inserted into and be pulled out from the groove along a second straight direction 102.

In some embodiments, the first straight direction 101 intersects the second straight direction 102, and an angle between the two is less than 60°, for example, 30°, 45°, or 59°.

In some embodiments, the first straight direction 101 is parallel to the second straight direction 102, that is, the groove also extends along the first straight direction 101.

In some embodiments, the first straight direction 101 is perpendicular to the second straight direction 102.

In some embodiments, insertion angles of the first-type battery pack 52 and the second-type battery pack 53 into the battery compartment 51 are different. Alternatively or optionally, the insertion angles between a plurality of first-type battery packs 52 are different. Alternatively or optionally, the insertion angles between a plurality of second-type battery packs 53 are different.

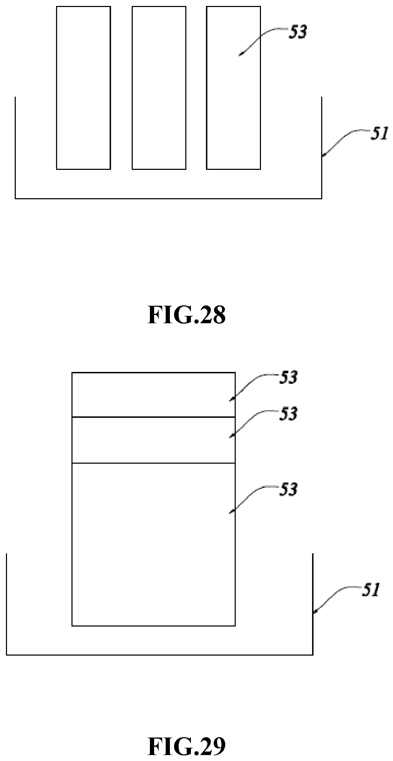

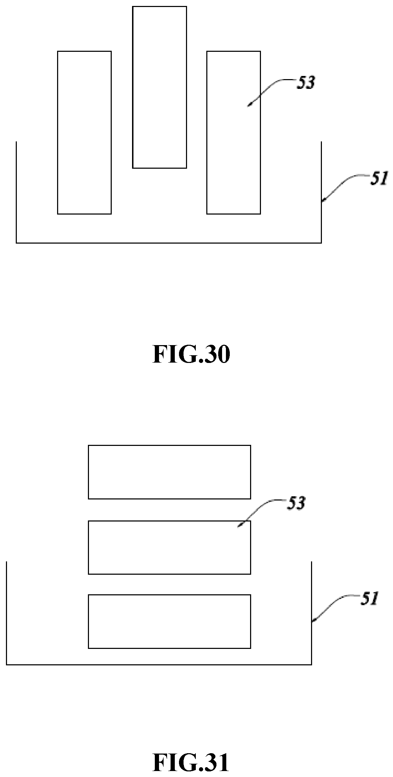

The plurality of first-type battery packs 52 or the plurality of second-type battery packs 53 can be assembled with the outdoor garden lawn mower in a manner perpendicular to the first straight direction 101. For example, the plurality of first-type battery packs 52 or the plurality of second-type battery packs 53 can be arranged parallel to each other at a same height (as shown in FIG. 28); or arranged at different heights, for example, roughly in a stepped shape (as shown in FIG. 29); or arranged in a low-high-low alternating pattern (as shown in FIG. 30). Setting different installation heights for the battery packs facilitates the user to take or place the battery packs.

In addition, the plurality of first-type battery packs 52 or the plurality of second-type battery packs 53 can also be assembled with the outdoor garden lawn mower at an angle relative to the first straight direction 101, that is, arranged in an inclined and interleaved manner.

As shown in FIG. 31, the plurality of first-type battery packs 52 or the plurality of second-type battery packs 53 can also be sequentially stacked and assembled in a vertical direction within the battery compartment 51.

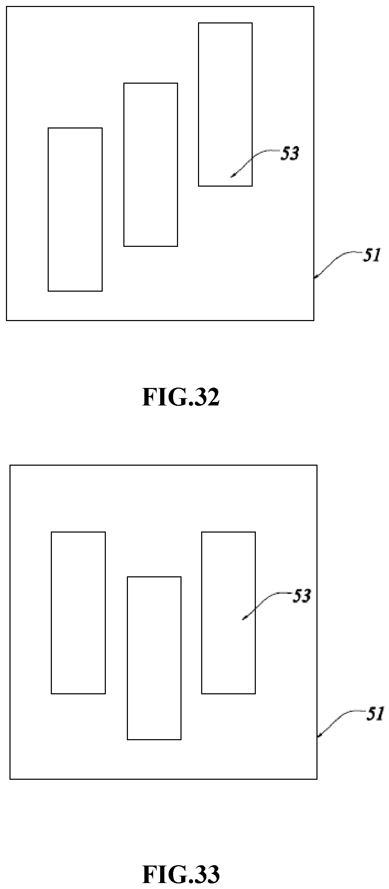

As shown in FIGS. 32 and 33, taking the second-type battery packs 53 as an example, when viewing the outdoor garden lawn mower from a top of the battery compartment 51, heights of the second-type battery packs 53 along the first straight direction 101 are different, for example, being arranged in a stepped shape along the first straight direction, or in a high-low-high arrangement.

In some embodiments, in addition to being arranged at the rear of the outdoor garden lawn mower, the first-type battery pack 52 and the second-type battery pack 53 can also be arranged on two sides or the front of the lawn mower. Such arrangement can improve battery life (or battery runtime) of the outdoor garden lawn mower.

In some embodiments, a volume ratio of the first-type battery pack 52 to the second-type battery pack 53 ranges from 0.01 to 0.9. For example, the volume ratio is 0.2.

In some embodiments, a length, width, and height of the first-type battery pack 52 respectively range from 160 millimeters (mm) to 200mm, 110mm to 130mm, 150mm to 180mm. A length, width, and height of the second-type battery pack 53 respectively range from 360mm to 390mm, 160mm to 190mm, 200mm to 230mm.

In some embodiments, the length, width, and height of the first-type battery pack 52 are: 188.5mm, 124mm, and 160mm, respectively. The length, width, and height of the second-type battery pack 53 are: 371mm, 179mm, and 221mm, respectively. This size configuration enables the first-type battery pack 52 and the second-type battery pack 53 to fully utilize the space within the battery compartment 51, avoiding space waste and a difficulty in placing a large second-type battery pack 53 into insufficient space.

As shown in FIG. 34, in some embodiments, the battery compartment 51 is arranged at the rear of the outdoor garden lawn mower, and a distance L from a lowest point of the battery compartment 51 to the ground is at least 380mm. This configuration can reduce the probability of the battery compartment coming into contact with a slope surface when the lawn mower travels up or down slopes, thereby reducing the risk of damage to the battery compartment. For example, the distance L from the lowest point of the battery compartment 51 to the ground is 430mm or 450mm. An angle α is formed between a tangent line, drawn from a rearmost protruding point of the lawn mower body to the rear travelling wheel, and the ground. The greater the angle α is, the higher the risk that the battery compartment touches the ground. Setting the battery compartment 51 at a higher position also helps reduce a bending degree of the user when taking and placing the battery packs, optimizing the user experience.

In some embodiments, the energy density of the first-type battery pack 52 is greater than or equal to 200 Wh/kg and less than or equal to 500 Watt-hours per kilogram (Wh/kg), and the energy density of the second-type battery pack 53 is greater than or equal to 100 Wh/kg and less than or equal to 250 Wh/kg. Merely by way of example, the energy density of the first-type battery pack 52 is 200 Wh/kg, 300 Wh/kg, or 500 Wh/kg; and the energy density of the second-type battery pack 53 is 100 Wh/kg, 120 Wh/kg, or 250 Wh/kg.

In some embodiments, the electrical capacity of the first-type battery pack 52 is greater than or equal to 90 Wh and less than or equal to 1000 Wh, and the electrical capacity of the second-type battery pack 53 is greater than or equal to 1000 Wh. Merely by way of example, the electrical capacity of the first-type battery pack 52 is 90 Wh, 300 Wh, or 1000 Wh; and the electrical capacity of the second-type battery pack 53 is 1000 Wh, 13000 Wh, or 24000 Wh. To mow a small area, only the first-type battery pack 52 can be selected to supply power to the outdoor garden lawn mower. The first-type battery pack 52 has a smaller volume and thus a lighter weight, reducing a burden on the user when carrying the battery pack. To mow a medium area, a combination of the first-type battery pack 52 and the second-type battery pack 53 can be selected to supply power to the lawn mower. To mow a large area, multiple second-type battery packs 53 can be selected to supply power to the lawn mower, increasing battery life of the lawn mower and avoiding frequent charging or battery replacement.

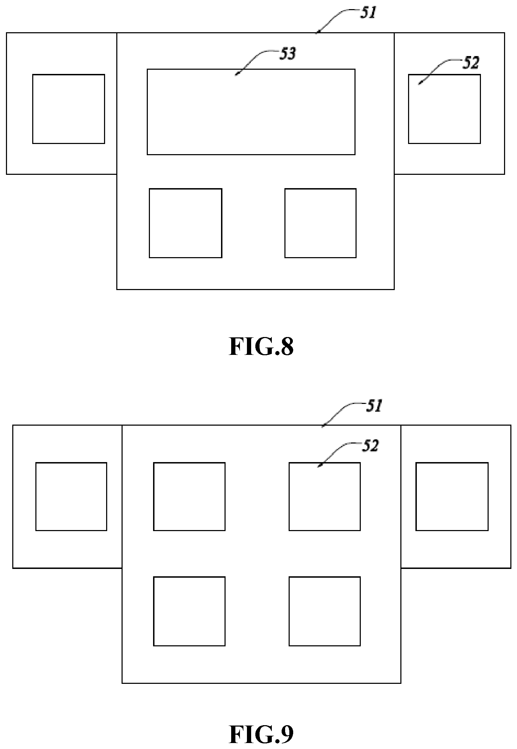

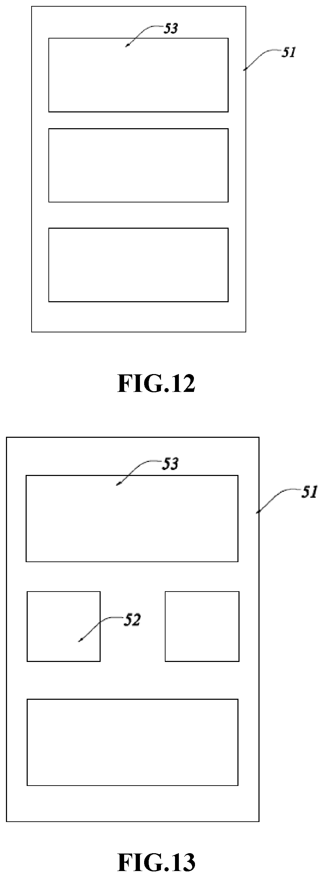

In some embodiments, as shown in FIGS. 12 and 17, when three second-type battery packs are selected to supply power to the outdoor garden lawn mower, the three second-type battery packs can jointly provide a discharge capacity of at least 20,000 Wh. As shown in FIGS. 6, 13, and 18, when two first-type battery packs 52 and two second-type battery packs 53 are selected to supply power to the lawn mower, they can jointly provide a discharge capacity of at least 15,000 Wh. As shown in FIGS. 7, 8, 14, and 19, when four first-type battery packs and one second-type battery pack are selected to supply power to the lawn mower, they can jointly provide a discharge capacity of at least 10,000 Wh. As shown in FIGS. 9, 15, and 20, when six first-type battery packs 52 are selected to supply power to the lawn mower, they can jointly provide a discharge capacity of at least 6,000 Wh.

In some embodiments, the electrical connection terminals 513 of the outdoor garden lawn mower are further provided with identification terminals respectively for identifying the first-type battery pack 52 and the second-type battery pack 53. By identifying the type of the battery pack through the identification terminals, operating power of the lawn mower may be adjusted accordingly.

In some embodiments, the discharge power of the first-type battery pack 52 is greater than or equal to 2000 watts (W) and less than or equal to 4350 W, and the discharge power of the second-type battery pack 53 is greater than or equal to 3500 W and less than or equal to 6960 W. Merely by way of example, the discharge power of the first-type battery pack 52 is 2000 W, 3000 W, or 4350 W; and the discharge power of the second-type battery pack 53 is 3500 W, 5000 W, or 6960 W. The first-type battery pack 52 is suitable for small-area vegetation cutting tasks, being easy to carry, install, and remove. The second-type battery pack 53 is suitable for large-area vegetation cutting tasks, providing long battery life without the need for frequent charging or mid-task battery pack replacement.

In some embodiments, as shown in FIGS. 12 and 17, when three second-type battery packs are selected to supply power to the outdoor garden lawn mower, the three second-type battery packs can jointly provide a discharge power of at least 18,000 W. As shown in FIGS. 6, 13, and 18, when two first-type battery packs 52 and two second-type battery packs 53 are selected to supply power to the lawn mower, they can jointly provide a discharge power of at least 16,000 W. As shown in FIGS. 7, 8, 14, and 19, when four first-type battery packs and one second-type battery pack are selected to supply power to the lawn mower, they can jointly provide a discharge power of at least 15,000 W. As shown in FIGS. 9, 15, and 20, when six first-type battery packs 52 are selected to supply power to the lawn mower, they can jointly provide a discharge power of at least 12,000 W.

In some embodiments, a nominal voltage of the first-type battery pack 52 is equal to a nominal voltage of the second-type battery pack 53. The nominal voltages of the first-type battery pack 52 and the second-type battery pack 53 are greater than or equal to 58 volts (V). For example, the nominal voltage of the first-type battery pack 52 or the second-type battery pack 53 can be 62 V, 72 V, etc. Furthermore, the first-type battery pack 52 includes a plurality of single first battery cells, each having a nominal voltage of 3.7 V. The second-type battery pack 53 includes a plurality of single second battery cells, each having a nominal voltage of 3.2 V. In some embodiments, the plurality of first battery cells can be connected in series, parallel, or series-parallel, for example, in series. The plurality of second battery cells can be connected in series, parallel, or series-parallel, for example, in series.

In some embodiments, a direct-current (DC) impedance of the first-type battery pack 52 is greater than that of the second-type battery pack 53. Furthermore, the DC impedance of the first-type battery pack 52 is greater than or equal to 70 mΩ and less than or equal to 280 mΩ, and the DC impedance of the second-type battery pack 53 is greater than or equal to 15 mΩ and less than or equal to 48 mΩ. For example, the DC impedance of the first-type battery pack 52 is 70 mΩ, 150 mΩ, or 280 mΩ, and the DC impedance of the second-type battery pack 53 is 15 mΩ, 30 mΩ, or 48 mΩ.

In some embodiments, the first-type battery pack 52 and the second-type battery pack 53 include any one of lithium iron phosphate batteries, ternary lithium batteries, supercapacitors, graphene batteries, or sodium-ion batteries. The first-type battery pack 52 and the second-type battery pack 53 can also be other energy supply sources compatible with the present disclosure. Different batteries can be selected according to different usage environments. For example, lithium iron phosphate batteries have better low-temperature performance than ternary lithium batteries, so they can be preferred for powering the outdoor garden lawn mower in low-temperature environments.

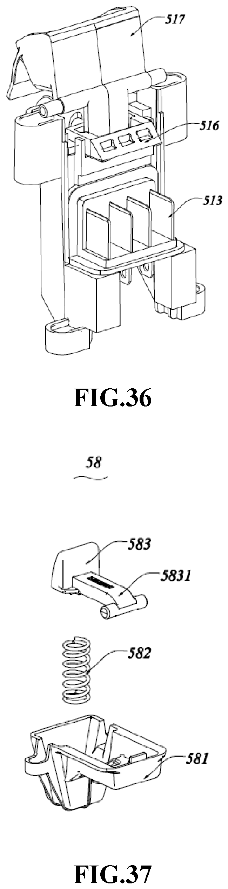

As shown in FIGS. 35 and 36, in some embodiments, the battery compartment 51 is provided with a locking structure for locking the first-type battery pack 52 and/or the second-type battery pack 53 onto the battery compartment 51. The locking structure is used to lock the first-type battery pack 52 and/or the second-type battery pack 53 within the battery compartment 51 to provide a stable power source for the outdoor garden lawn mower. Specifically, the locking structure includes a locking member 516 and a trigger member 517. The first-type battery pack 52 and the second-type battery pack 53 are respectively provided with a first locking portion 522 and a second locking portion 532 capable of engaging with the locking member 516. When the trigger member 517 is actuated, it can drive the locking member 516 to disengage from the first locking portion 522 or the second locking portion 532, thereby releasing the first-type battery pack 52 or the second-type battery pack 53 to facilitate their replacement.

As shown in FIGS. 35 and 37, in some embodiments, the battery compartment 51 is provided with an ejection structure 58 capable of pushing the first-type battery pack or the second-type battery pack to move relative to the battery compartment. When the first-type battery pack 52 is connected to the battery compartment 51, the first-type battery pack 52 is matched with at least one ejection structure 58. When the second-type battery pack 53 is connected to the battery compartment 51, the second-type battery pack 53 is matched with at least three ejection structures 58.

In some embodiments, a weight of the first-type battery pack 52 is lighter than that of the second-type battery pack 53, and the weight of the second-type battery pack 53 is more than twice that of the first-type battery pack 52. In practical use, one first-type battery pack 52 only needs to be matched with one ejection structure 58 to complete an ejection action, while the second-type battery pack 53 needs to be matched with at least three ejection structures to complete the ejection action.

The ejection structure 58 includes a housing 581 with a receiving cavity, a spring 582, and a moving block 583. An opening is provided at the bottom of the battery compartment 51 for the moving block 583 to move substantially along an ejection direction. The moving block 583 is provided with a limiting portion 5831 extending substantially perpendicular to a moving direction of the moving block 583. The limiting portion 5831 can abut against the bottom of the battery compartment 51 in the moving direction, preventing the moving block 583 from separating from the spring 582 at the opening. The spring 582 can also be replaced by other feasible elastic elements.

One end of the spring 582 is located inside the housing 581, and the other end abuts against the moving block 583. The moving block 583 can move substantially along a compression direction of the spring 582. Usually, the ejection structure 58 is arranged at the bottom of the battery compartment 51. When the locking structure unlocks the first-type battery pack 52 or the second-type battery pack 53, the moving block 583 pushes the first-type battery pack 52 or the second-type battery pack 53 to eject under an elastic force of the spring 582, moving the first-type battery pack 52 or the second-type battery pack 53 a distance away from its original position, facilitating the user's removal and placement.

To reduce an impact on the first-type battery pack 52 or the second-type battery pack 53 caused by a travel of the outdoor garden lawn mower and ensure a safe use of the battery packs, a shock-absorbing structure is provided between the power supply device 5 and the main frame 1. For example, the shock-absorbing structure is provided between a battery compartment bottom plate 56 and the main frame 1. The shock-absorbing structure can be a compression spring, an elastic sheet, etc.

To increase a multifunctional use of the battery compartment 51, at least a part of the battery compartment 51 can be further configured as a storage compartment for items other than the first-type battery pack 52 or the second-type battery pack 53. This storage compartment can store tools or other miscellaneous items.

The battery compartment 51 is provided with a heat dissipation structure for dissipating heat from the first-type battery pack 52 and/or the second-type battery pack 53, effectively preventing the reduction of charging/discharging efficiency due to overheating. Specifically, the heat dissipation structure can be a heat dissipation fan or heat dissipation fins.

The battery compartment 51 is provided with drainage holes to drain liquids such as wastewater from the compartment in time. This can reduce a weight of the battery compartment 51 and effectively prevent liquid contamination of the battery packs, thereby avoiding affecting a performance and service life of the first-type battery pack 52 or the second-type battery pack 53. Usually, the drainage holes are provided at a junction of a bottom wall and a side wall of the battery compartment to facilitate drainage.

As shown in FIG. 35, in some embodiments, the outdoor garden lawn mower further includes a battery compartment bottom plate 56 for fixing the battery compartment 51 to the main frame 1. A power management module 57 is provided on a side of the battery compartment bottom plate 56 facing away from the battery compartment 51. This arrangement reduces wires used for connecting the power management module 57 with the battery packs.

In some embodiments, the power management module 57 can also be arranged between the battery compartment 51 and the battery compartment bottom plate 56.

In some embodiments, the cutting assembly 2 includes a cutting motor, and the travelling assembly 3 includes a traveling motor. A maximum output power of the cutting motor is different from that of the traveling motor. For example, the output power of the cutting motor is 1200 W, and the output power of the traveling motor is 1500 W.

**Table 1 is a numerical relationship table of the output power and torque of the lawn mowing motor of the present disclosure:**

| Power (W) | Torque (newton metre, n·m) |
|---|---|
| 32.02 | 0.06 |
| 42.65 | 0.08 |
| 58.57 | 0.11 |
| 111.3 | 0.21 |
| 173.8 | 0.33 |
| 357.7 | 0.69 |
| 471.9 | 0.92 |
| 608 | 1.2 |
| 683.3 | 1.36 |
| 915 | 1.86 |
| 1267 | 2.65 |
| 1456 | 3.09 |
| 1657 | 3.57 |
| 1857 | 4.06 |
| 2068 | 4.59 |
| 2278 | 5.19 |
| 2491 | 5.7 |
| 2698 | 6.2 |
| 2809 | 6.6 |
| 3140 | 7.49 |
| 3374 | 8.13 |
| 3569 | 8.75 |

**Table 2 shows a numerical relationship table of the output power and torque of the traveling motor of the present disclosure:**

| Power(W) | Torque(n·m) |
|---|---|
| 29.77 | 0.07 |
| 55.2 | 0.13 |
| 84.71 | 0.2 |
| 126.6 | 0.3 |
| 271.4 | 0.65 |
| 360.7 | 0.87 |
| 468.9 | 1.14 |
| 587 | 1.44 |
| 714.7 | 1.77 |
| 859.5 | 2.15 |
| 1001 | 2.53 |
| 1169 | 2.99 |
| 1324 | 3.43 |
| 1368 | 3.59 |
| 1848 | 4.96 |
| 2021 | 5.49 |
| 2420 | 6.73 |
| 2613 | 7.35 |
| 2785 | 7.91 |
| 2934 | 8.45 |
| 3143 | 9.1 |
| 3351 | 9.9 |

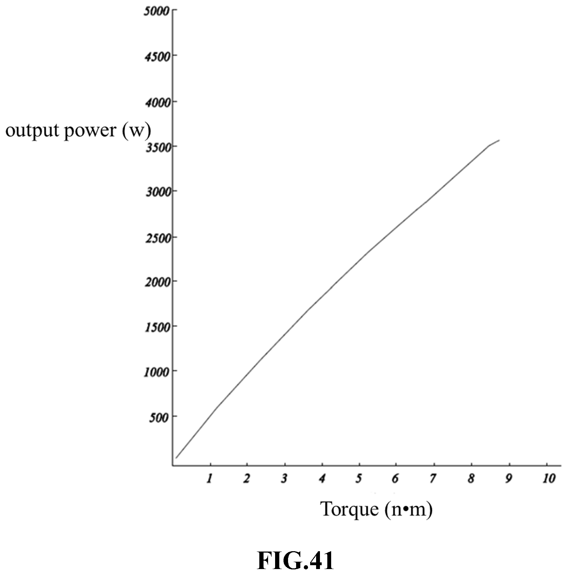

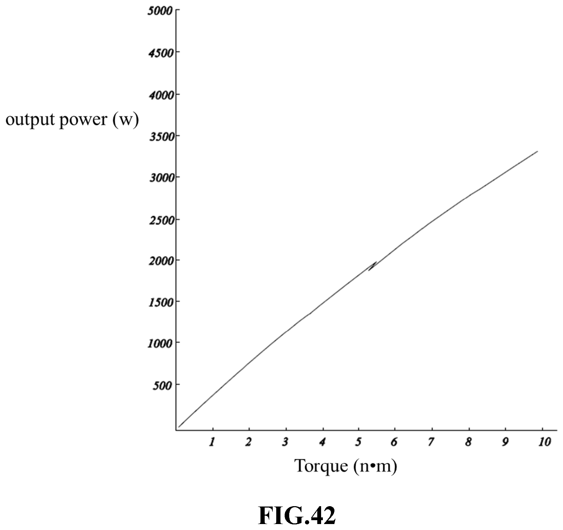

Fig. 41 shows a curve relationship between output power and torque of the lawn mowing motor, and Fig. 42 shows a curve relationship between the output power and torque of the traveling motor.

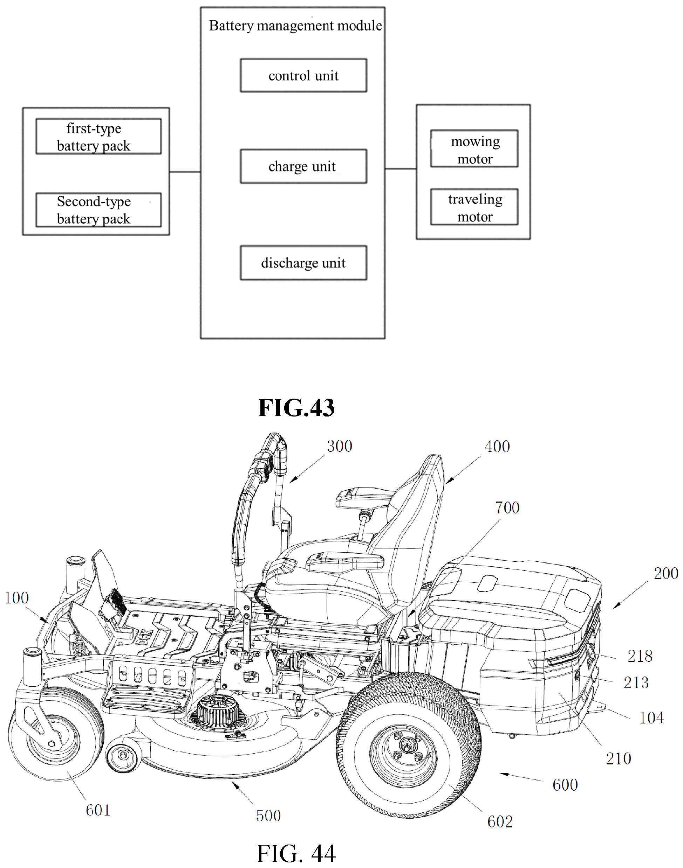

As shown in FIG. 43, the power management module 57 includes a control unit, a charge unit, and a discharge unit, and the control unit controls the charging and discharging of the first type battery pack 52 and the second type battery pack 53, respectively, and controls the first type battery pack 52 and the second type battery pack 53 to power the mowing motor, the traveling motor, or other electrical components. The maximum power that the control unit can withstand is 2500W.

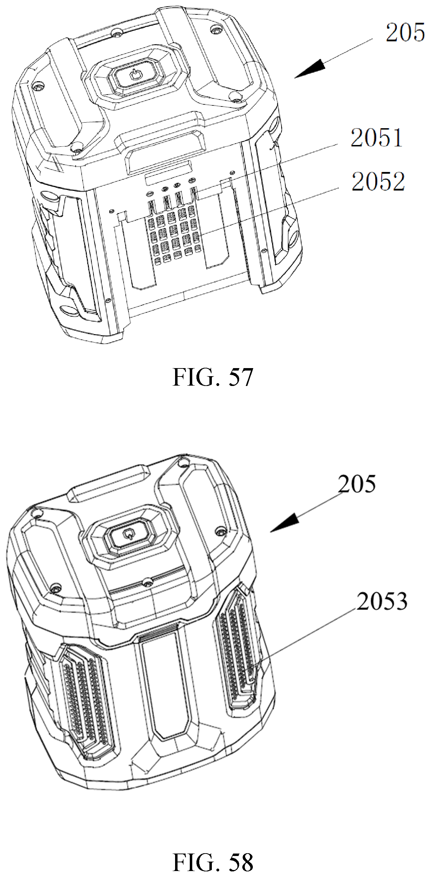

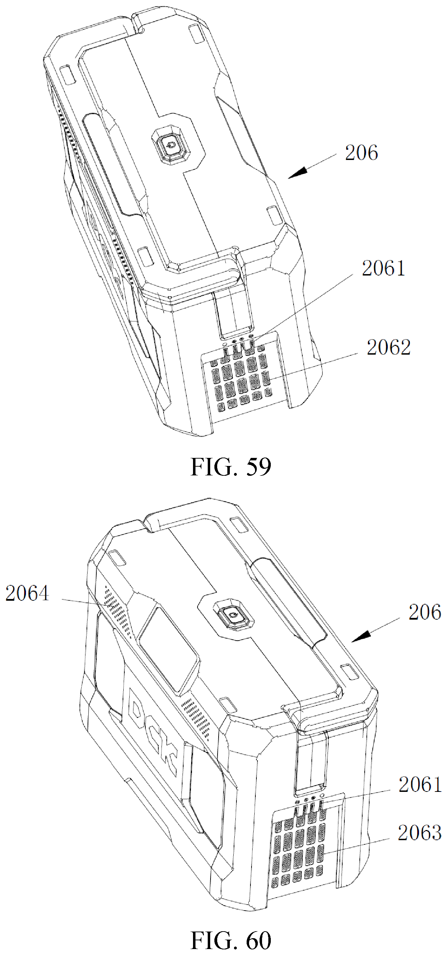

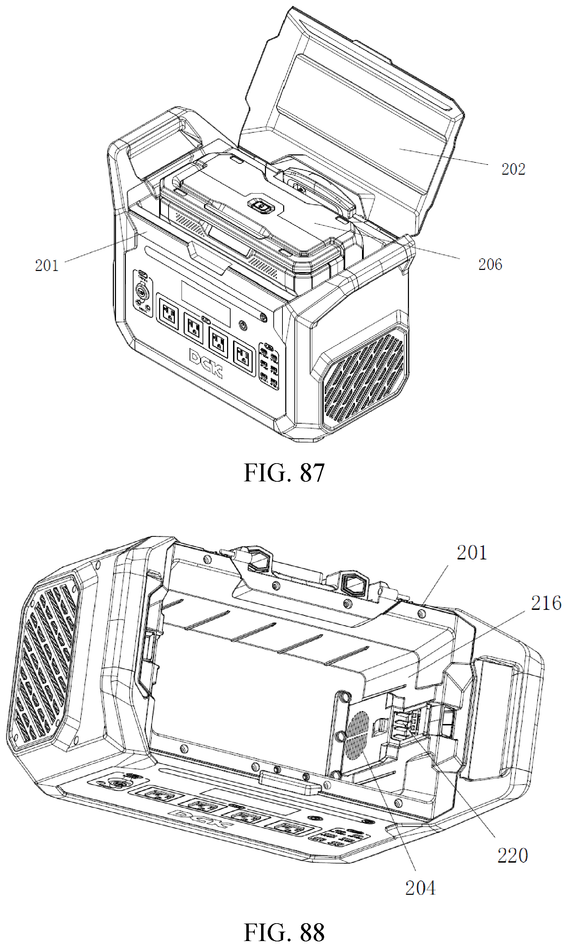

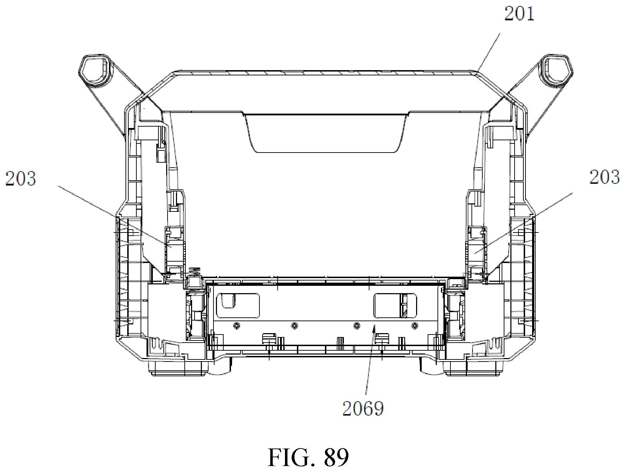

FIGS. 44 to 89, which illustrate an outdoor working device according to some embodiments of the present disclosure. The outdoor working device includes a vehicle frame (also referred to as a frame herein) 100, a power supply device 200, an operating assembly 300, a seat 400, a power output assembly 500, and a travelling assembly 600.

The vehicle frame 100 extends along a direction. The power supply device 200 is mounted at a rear portion of the vehicle frame 100, and includes a battery pack, a power management device 219 for controlling output and input of the battery pack, and a battery compartment 201 for accommodating the battery pack. The battery pack is electrically connected to electrical connection terminals 220 arranged on the battery compartment 201 via power connection terminals thereof, so as to supply power to the outdoor working device. The battery pack includes a first-type battery pack 205 and a second-type battery pack 206. In some embodiments, the battery compartment 201 is configured to accommodate the first-type battery pack 205 and the second-type battery pack 206 with different electric capacities or dimensions, so as to improve compatibility of the outdoor working device with various battery packs. In addition, the battery pack can be detached to supply power to other electric tools, achieving multi-purpose application. Compared with devices powered by fossil fuels, the outdoor working device of the present disclosure is more environmentally friendly and better aligned with long-term development plans. In some embodiments, the battery pack adopts lithium iron phosphate battery cells or ternary lithium battery cells.

In some embodiments, the first-type battery pack 205 has a length ranging from 180 millimeters (mm) to 193 mm, a width ranging from 155 mm to 165 mm, and a height ranging from 85 mm to 110 mm. For example, the dimensions of the first-type battery pack 205 are 189 mm in length, 162 mm in width, and 108 mm in height, or 189 mm in length, 162 mm in width, and 88 mm in height. A weight of a single first-type battery pack 205 ranges from 2.8 kilograms (kg) to 3.0 kg. In some embodiments, the weight of the single first-type battery pack 205 is 2.9 kg. A nominal voltage of the first-type battery pack 205 is greater than or equal to 58 V, for example, 62 V, 68 V, 72 V, 20 V, 30 V, 45 V or other voltages meeting operational requirements. In some embodiments, the first-type battery pack 205 adopts ternary lithium battery cells. In some embodiments, a nominal voltage of a single battery cell is greater than or equal to 3.2 V, for example, 3.6 V. A nominal capacity of the first-type battery pack 205 is greater than or equal to 7 ampere-hours (Ah), for example, 7.5 Ah. A nominal energy of the first-type battery pack 205 is greater than or equal to 300 Wh, for example, 378 Wh. A discharge temperature is not higher than 70°C±5°C, and a charge temperature ranges from 0°C to 50°C. A discharge cut-off voltage per cell is greater than or equal to 2.7 V/cell, for example, 2.7 V/cell. A charge cut-off voltage per cell is greater than or equal to 4.2 V/cell, for example, 4.2 V/cell.

In some embodiments, the second-type battery pack 206 has a length ranging from 360 mm to 380 mm, a width ranging from 165 mm to 175 mm, and a height ranging from 220 mm to 245 mm. For example, the second-type battery pack 206 is 371.8 mm in length, 170.3 mm in width, and 241 mm in height. A weight of a single second-type battery pack 206 ranges from 16 kg to 17 kg. In some embodiments, the weight thereof is 16.5 kg. A nominal voltage of the second-type battery pack 206 is greater than or equal to 58 V. In some embodiments, the nominal voltage of the second-type battery pack 206 is 62 V, 68 V, 72 V, etc. In some other embodiments, the nominal voltage of the second-type battery pack 206 is 20 V, 30 V, 45 V, or other voltages satisfying usage requirements. The second-type battery pack 206 may adopt lithium iron phosphate battery cells. A nominal voltage of a single battery cell of the second-type battery pack is greater than or equal to 3.2 V, for example, 3.6 V. A nominal capacity of the second-type battery pack 206 is greater than or equal to 40 Ah, for example, 40 Ah. A nominal energy of the second-type battery pack 206 is greater than or equal to 2000 Wh, for example, 2048 Wh. A discharge temperature ranges from -20°C to 60°C, and a charging temperature ranges from 0°C to 45°C. The second-type battery pack 206 may adopts lithium iron phosphate cells.

In some embodiments, internal dimensions of the battery compartment 201 are 360 mm to 375 mm in length, 500 mm to 540 mm in width, and 210 mm to 230 mm in height, for example, 370 mm (length), 520 mm (width), and 220 mm (height). A total width of three second-type battery packs 206 arranged side by side is 510.9 mm. In some embodiments, a width of the battery compartment 201 is 520 mm. When the three second-type battery packs 206 are installed inside the battery compartment 201, the internal space of the battery compartment 201 is fully utilized, enabling compact installation of the second-type battery packs 206. In some embodiments, a ratio of the total nominal energy of the three second-type battery packs 206 to the width of the battery compartment 201 is 11.8 watts per millimeter (W/mm).

In some embodiments, the first-type battery pack includes a ternary lithium battery pack, and the second-type battery pack includes a lithium iron phosphate battery pack.

The operating assembly 300 includes a left operating lever and a right operating lever disposed on the left and right sides of the outdoor working device respectively. By manipulating the left and right operating levers, a user may control the outdoor working device to move forward, backward or make turns. In some embodiments, the operating assembly 300 may be a steering wheel for controlling the outdoor working device.

In some embodiments, the operating assembly 300 is provided with control buttons for adjusting operating speeds of the power output assembly 500 and the travelling assembly 600, so as to facilitate quick and accurate speed adjustment. Further, the operating assembly 300 is further provided with buttons for adjusting brightness of vehicle lights of the outdoor working device.

The seat 400 is mounted on the vehicle frame 100. The left and right operating levers are disposed adjacent to the seat 400 on two sides thereof, so that the user sitting on the seat 400 can conveniently operate the levers to control the device.

The power output assembly 500 serves as an executing component for implementing working functions. In some embodiments, when the outdoor working device is a riding-on lawn mower, the power output assembly 500 is specifically one or more cutting assemblies mounted below the vehicle frame 100 to output power for lawn mowing. The cutting assemblies include two or three cutting assemblies.

Each cutting assembly includes a cutter disc, a mowing element, and a cutting motor. The cutting motor is controlled by the control button(s) on the operating assembly 300, and the mowing element cuts vegetation such as grass during high-speed rotation. For example, the mowing element is a blade for trimming lawn grass. The cutter disc defines a mowing space for accommodating the mowing element, and the mowing element is at least partially disposed inside the mowing space. In some embodiments, two mowing elements and two cutting motors are provided, wherein each cutting motor independently drives a corresponding mowing element. In some other embodiments, three mowing elements and three cutting motors are adopted, with each cutting motor driving a corresponding mowing element independently.

The power output assembly 500 is detachable from the outdoor working device and can be replaced with other functional assemblies to meet various garden operation requirements. Therefore, the outdoor garden lawn mower can be equipped with snow shoveling, snow sweeping, snow blowing, water flushing and other functional components in place of the cutting assemblies. A person skilled in the art can make adaptive replacements of various functional components without creative efforts, and all such replacements shall fall within the protection scope of the present disclosure.

When the cutting assemblies are replaced with the snow shoveling, snow sweeping or snow blowing components, the power supply device 200 of the present outdoor working device can adapt to low-temperature environments and supply power to the above functional components.

The travelling assembly 600 includes travelling wheels mounted on the vehicle frame 100 and traveling motors for driving the travelling wheels. The travelling wheels are arranged on two sides of the vehicle frame 100, so that a center of gravity of the outdoor working device is kept within the vehicle frame 100 to reduce a risk of rollover during traveling.

In some embodiments, four travelling wheels are provided, including two front travelling wheels 601 and two rear travelling wheels 602. The front travelling wheels 601 may be universal wheels. The traveling motors are connected to and drive the rear travelling wheels 602. Each rear travelling wheel 602 is matched with a corresponding traveling motor, and rotating speeds of the two traveling motors can be the same or different. When the outdoor working device travels straight, the two traveling motors operate at approximately the same speed. When the outdoor working makes turns, the two traveling motors run at different speeds, and the outdoor working turns toward a side where one of the traveling motors runs at a lower motor speed. In some embodiments, a diameter of the front travelling wheels 601 is smaller than that of the rear travelling wheels 602.

Referring to FIGS. 2, 3 and 4, the power supply device 200 is configured to at least supply power to the outdoor working device, and includes a battery compartment 201. The battery compartment 201 can be installed with the first-type battery pack 205, the second-type battery pack 206, or a combination thereof. The first-type battery pack 205 and the second-type battery pack 206 are detachably mounted inside the battery compartment 201.

The first-type battery pack 205 and the second-type battery pack 206 can be detached from the battery compartment 201 to supply power to other tools.

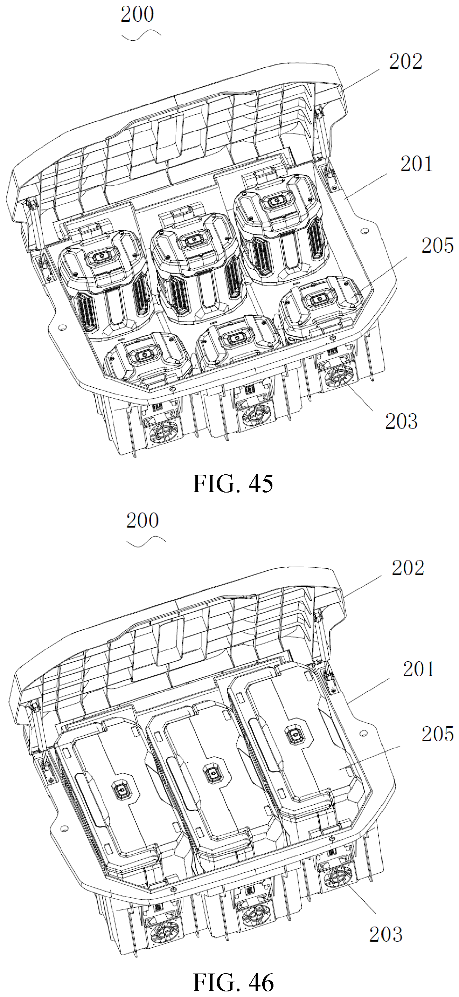

Referring to FIGS. 45, 46 and 47, the battery compartment 201 is further provided with a plurality of temperature adjustment assemblies 203. The temperature adjustment assemblies 203 obtain electric power from the battery packs of the outdoor working device to adjust temperature. The temperature adjustment assemblies 203 is configured to perform temperature adjustment on the first-type battery pack 205 and/or the second-type battery pack 206. In some embodiments, the temperature adjustment includes heating and cooling. In the present disclosure, heating and cooling can be selectively implemented on the first-type battery pack 205 and/or the second-type battery pack 206 according to actual demands.

The temperature adjustment assemblies 203 can be powered by the first-type battery pack 205 or the second-type battery pack 206 inside the battery compartment 201, or other battery packs capable of supplying power equipped on the outdoor working device.

Referring to FIGS. 45, 46, and 47, when the first-type battery pack 205 and the second-type battery pack 206 need to be cooled down, each temperature adjustment assembly 203 may include an airflow generator 2031 capable of generating airflow, which may be a heat dissipation fan for cooling the first-type battery pack 205 and the second-type battery pack 206.

When the first-type battery pack 205 and the second-type battery pack 206 need to be heated, each temperature adjustment assembly 203 may include an airflow generator 2031 and a heater. The airflow generator 2031 blows heat generated by the heater toward the first-type battery pack 205 and the second-type battery pack 206 to perform heating treatment thereon.

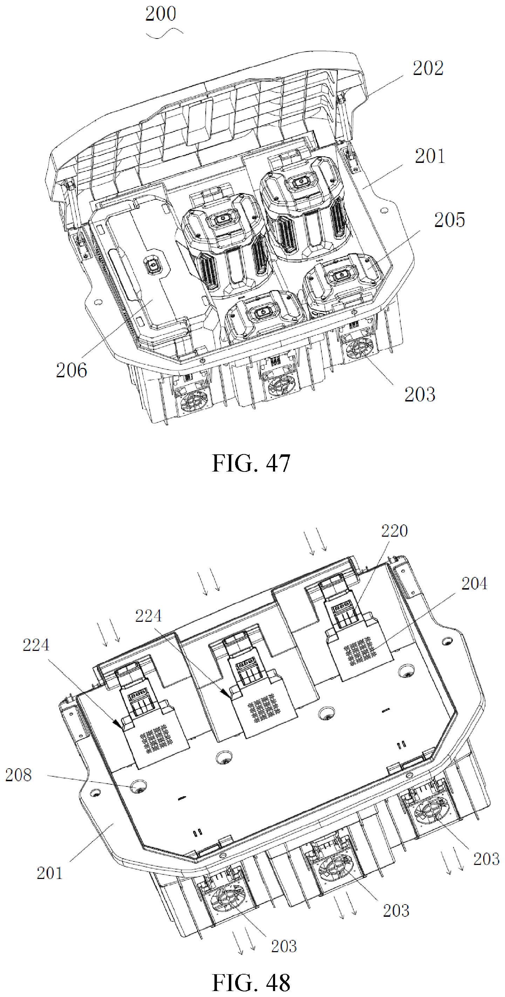

As shown in FIGS. 45 and 47, in some embodiments, if the number of the first-type battery packs 205 installed in the battery compartment 201 is x, the number of the temperature adjustment assemblies 203 configured to adjust the temperature of the first-type battery packs 205 is also x. Specifically, there are x temperature adjustment assemblies 203 provided to adjust temperature of the x first-type battery packs 205, respectively.

In some embodiments, if an internal temperature of m first-type battery packs 205 of the x first-type battery packs 205 exceeds a maximum value of a normal range and is within a first range, the power management device 219 activates m temperature adjustment assemblies 203 to adjust the temperature of the m corresponding first-type battery packs 205 until the temperature returns to the normal range.

The one-to-one matching configuration between the first-type battery packs 205 and the temperature adjustment assemblies 203 is designed for the following purpose. When the temperature of a first-type battery pack 205 deviates from the normal range during charging or discharging yet only requires a limited degree of temperature adjustment, one temperature adjustment assembly 203 can independently meet the heat dissipation or heating demand of the corresponding first-type battery pack 205. Meanwhile, those first-type battery packs 205 whose temperatures stay within the normal range are not subjected to temperature adjustment. Since the temperature adjustment assemblies 203 draw power from the battery packs, electric energy stored in the battery packs can be conserved, and the battery battery life of the battery packs is improved.

A minimum value of the first range can be greater the maximum temperature of the normal range, or a maximum value of the first range can be smaller than a minimum temperature of the normal range. When the minimum value of the first range is greater than the maximum temperature of the normal range, only the airflow generator 2031 is activated to dissipate heat and rapidly cool the first-type battery pack 205 to a normal temperature, which facilitates charging and discharging of the first-type battery pack 205. When the maximum value of the first range is smaller than the minimum temperature of the normal range, both the airflow generator 2031 and the heater are activated. The airflow generator 2031 directs heat generated by the heater toward the first-type battery pack 205 for heating treatment, so as to improve the internal temperature of the first-type battery pack 205 to the normal range, which facilitates charging and discharging of the first-type battery pack 205.

It should be understood that heater (not shown in the figures) may be heating wires or other heat-generating components, and is disposed corresponding to an air outlet of the airflow generator 2031.

In some embodiments, when such a one-to-one temperature adjustment mode cannot meet cooling or heating demands, i.e., the internal temperature of m first-type battery packs 205 falls within a second range, the number of the temperature adjustment assemblies 203 configured to adjust the temperature of the m first-type battery packs 205 is at least m+1 and a maximum of the total number of temperature adjustment assemblies 203 on the outdoor working device. Specifically, the power management device 219 controls the operation of the temperature adjustment assemblies 203 according to the internal temperature of the first-type battery packs 205. When the internal temperature of a first-type battery pack 205 falls within the second range, the power management device 219 activates multiple temperature adjustment assemblies 203 simultaneously to perform temperature adjustment on the corresponding first-type battery packs 205, thereby satisfying normal charging and discharging requirements of the first-type battery pack 205.

It should be noted that, when the internal temperature of the first-type battery packs 205 or the second-type battery packs 206 falls within the first range and is greater than the maximum value of the normal range, and a minimum value of the second range is greater than the maximum value of the first range, heat dissipation treatment shall be performed on the first-type battery packs 205 or the second-type battery packs 206. When the internal temperature of the first-type battery packs 205 or the second-type battery packs 206 falls within the first range and is smaller than the minimum value of the normal temperature range, and a maximum temperature of the second range is lower than the minimum temperature of the first range, heating treatment shall be performed on the first-type battery packs 205 or the second-type battery packs 206.

In some embodiment, the electric energy capacity of the first-type battery pack 205 is greater than or equal to 90 Wh and less than 1000 Wh, for example, 90 Wh, 600 Wh, or 999 Wh.

As shown in FIGS. 46 and 47, in some embodiments, if the number of the second-type battery packs 206 installed in the battery compartment 201 is y, the number of the temperature adjustment assemblies 203 configured to adjust the temperature of the second-type battery packs 206 is 2y. In this way, the second-type battery pack 206 are arranged in a one-to-two correspondence with the temperature adjustment assemblies 203. This configuration is adopted under a circumstance that a single temperature adjustment assembly 203 cannot satisfy the heat dissipation or heating demands of one second-type battery pack 206.

In some embodiments, the second-type battery pack 206 has a large electric energy capacity, which is generally greater than or equal to 1000 Wh and not more than 4000 Wh, for example, 1000 Wh, 2500 Wh or 4000 Wh.

In some embodiments, if the internal temperature of n of the y second-type battery packs 206 falls within the first range, the power management device 219 activates 2n temperature adjustment assemblies 203 to adjust the temperature of the n second-type battery packs 206.

The one-to-two correspondence between the second-type battery packs 206 and the temperature adjustment assemblies 203 is provided for the following purpose. When the heat generated by one second-type battery pack 206 during charging and discharging exceeds processing capacity of a single temperature adjustment assembly 203, two temperature adjustment assemblies 203 are configured to jointly satisfy the heat dissipation or heating demand of the second-type battery pack 206. By contrast, any second-type battery pack 206 whose internal temperature remains within the normal range is not subjected to temperature adjustment. Since the temperature adjustment assemblies 203 draw power from the battery packs, activating fewer temperature adjustment assemblies 203 while meeting temperature adjustment demands conserves the electric energy of the battery packs and improves the battery life of the battery packs.

In some embodiments, when n of the y second-type battery packs 206 accommodated in the battery compartment 201 have internal temperatures falling within the second range, the power management device 219 activates at least (2n+1) temperature adjustment assemblies 203 and a maximum of the total number of the temperature adjustment assemblies 203 on the outdoor working device, to adjust temperature of the n second-type battery packs 206.

As shown in FIGS. 45 to 51, the battery compartment 201 includes two opposite side plates 216. Each side plate 216 is mounted with a plurality of temperature adjustment assemblies 203, and the temperature adjustment assemblies 203 on the two side plates 216 are arranged in one-to-one correspondence. A corresponding one of the electrical connection terminals 220 is disposed on the battery compartment 201 adjacent to each temperature adjustment assembly 203. Multiple electrical connection terminals 220 are respectively arranged on the two opposite side plates 216. The first-type battery pack 205 is provided with one electrical connector 2051, which is electrically connected to one electrical connection terminal 220 when the first-type battery pack 205 is installed. The second-type battery pack 206 is provided with two electrical connectors 2061 at two ends thereof. When the second-type battery pack 206 is installed, one of the two electrical connectors 2061 is connected to the electrical connection terminal 220 on one side plate 216, and the other the two electrical connectors 2061 is connected to the electrical connection terminal 220 on the other side plate 216. The first-type battery pack 205 supplies power to the outdoor working device via the one electrical connector 2051, while the second-type battery pack 206 supplies power to the outdoor working device via the two electrical connectors 2061.

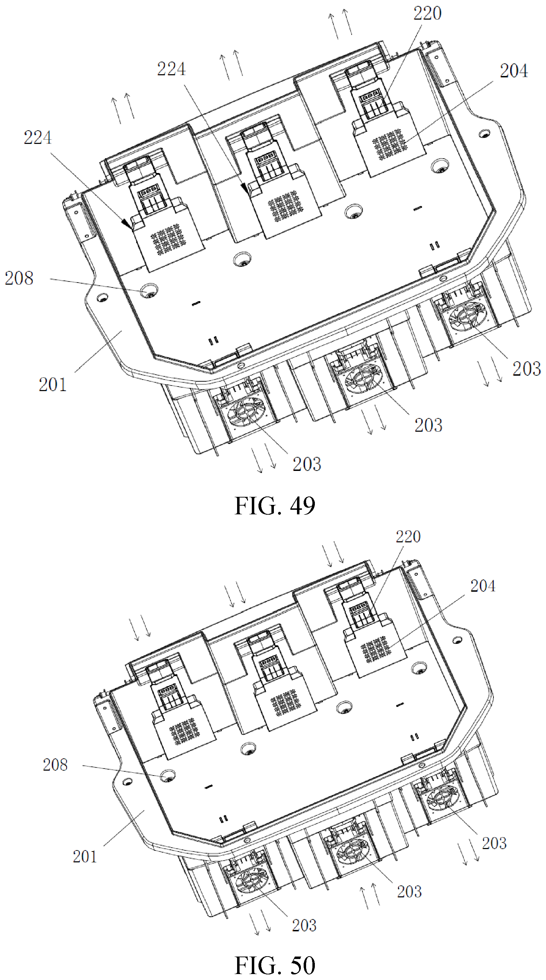

As shown in FIGS. 48 and 49, in some embodiments, the battery compartment 201 includes two opposite side plates 216, and each of the two opposite side plates 216 is provided with a plurality of mounting seats 224. The mounting seats 224 on one of the two opposite side plates 216 are arranged in one-to-one correspondence with the mounting seats 224 on the other of the two opposite side plates 216. Every two mounting seats 224 that have one-to-one correspondence define one pair of mounting seats 224. At least one pair of mounting seats 224 is arranged in a staggered manner relative to the remaining mounting seats 224. Such staggered layout of the mounting seats 224 helps improve a structural strength of the battery compartment 201.

In some embodiments, an offset distance (along the first straight direction) between each of a pair of mounting seats, which is arranged staggered relative to other pairs of mounting seats 224, and its adjacent mounting seat 224 arranged on the same side plate 216 as that of the mounting seat 224 ranges from 20 mm to 40 mm, for example, 20 mm, 30 mm or 40 mm.

As shown in FIGS. 48-51, further, each mounting seat 224 is provided with an electrical connection terminal 220, so that at least one pair of electrical connection terminals 220 is also arranged in a staggered manner relative to the other electrical connection terminals 220.

As shown in FIGS. 48 to 51, in some embodiments, three airflow exchange portions 204 are disposed on each of the two opposite side plates 216 of the battery compartment 201, totaling six airflow exchange portions 204 arranged on the two side plates 216. One temperature adjustment assembly 203 is correspondingly arranged for each airflow exchange portion 204, such that six temperature adjustment assemblies 203 are provided. Correspondingly, six electrical connection terminals 220 are arranged on the two side plates 216 (three electrical connection terminals 220 on each side plate 216). Each electrical connection terminal 220 is disposed above the corresponding airflow exchange portion 204.

As shown in FIGS. 45-47, the battery compartment 201 is formed with an opening for loading and unloading the first-type battery pack 205 and/or the second-type battery pack 206. A compartment cover 202 is arranged corresponding to the opening to seal the battery compartment 201 into a relatively closed cavity, which prevents foreign matters from entering and ensures stable operation of the first-type battery pack 205 and/or the second-type battery pack 206.

As shown in FIGS. 48 to 51, each of the two opposite side plates 216 of the battery compartment 201 is provided with a plurality of airflow exchange portions 204. Each temperature adjustment assembly 203 is matched with a corresponding airflow exchange portion 204. The temperature adjustment assembly 203 can perform air intake and exhaust inside the battery compartment 201 through its corresponding airflow exchange portion 204.

As shown in FIGS. 48-51, in some embodiments, when the internal temperature of the first-type battery pack 205 falls within the first range, the temperature adjustment assembly 203 blows air toward the first-type battery pack 205 or exhausts air outwards through the corresponding airflow exchange portion 204 to dissipate heat.

When the internal temperature of the first-type battery pack 205 falls within the second range, the power management device 219 activates multiple temperature adjustment assemblies 203 for joint temperature adjustment. The multiple temperature adjustment assemblies 203 can blow air into the battery compartment 201 simultaneously, exhaust air out of the battery compartment 201 simultaneously. Additionally or alternatively, some of the multiple temperature adjustment assemblies 203 blows air into the battery compartment 201, while the other temperature adjustment assemblies 203 exhaust air out of the battery compartment 201.

As shown in FIGS. 46 to 51, in some embodiments, when the internal temperature of the second-type battery pack 206 falls within the first range, the two temperature adjustment assemblies 203 may blow air simultaneously, exhaust air simultaneously, or operate with one assembly blowing air and the other exhausting air toward the second-type battery packs 206 accommodated in the battery compartment 201 via the airflow exchange portions 204. For example, the two temperature adjustment assemblies 203 are respectively arranged on the two opposite side plates 216 of the battery compartment 201. The two electrical connectors 2061 on two ends of the second-type battery pack 206 are respectively connected to two corresponding electrical connection terminals 220 on the battery compartment 201. Each of the two temperature adjustment assemblies 203 is arranged adjacent to a corresponding one of the two electrical connection terminals 220 on one of the two opposite side plates 126. In this way, the temperature adjustment assembly 203 may dissipate heat generated when the electrically connection terminal 220 contacts its corresponding electrical connector 2061.

When the internal temperature of the second-type battery pack 206 falls within the second range, the multiple temperature adjustment assemblies 203 may act on the second-type battery packs 206 accommodated in the battery compartment 201 through the airflow exchange portions 204 in one of the following modes: simultaneously blowing air inward, simultaneously exhausting air outward (outward air extraction), or operating with at least one temperature adjustment assembly blowing air inward while at least one temperature adjustment assembly exhausting air outward (outward air extraction).

Referring to FIGS. 45, 47, 57 and 58, to enhance heat dissipation or heating performance, in some embodiments, the first-type battery pack 205 is provided with a first ventilation opening 2052 and a second ventilation opening 2053, and one of the first ventilation opening 2052 and the second ventilation opening 2053 aligns with an air outlet direction of the airflow generator 2031. With this arrangement, when the temperature adjustment assembly 203 performs temperature adjustment on the first-type battery pack 205 (or the second-type battery pack 206), heat inside the first-type battery pack 205 can be carried away by discharging air out of the first ventilation opening 2052 and drawing air in through the second ventilation opening 2053, thereby rapidly dissipating the heat inside the first-type battery pack 205 until its internal temperature reaches the normal range. Alternatively, the first-type battery pack 205 may be heated by drawing air in through the first ventilation opening 2052 and discharging air out of the second ventilation opening 2053, so that the internal temperature of the first-type battery pack 205 quickly rises to the normal range.

Referring to FIGS. 45, 47, 55, 56, 59 and 60, in some embodiments, the second-type battery pack 206 is provided with a third ventilation opening 2062 and a fourth ventilation opening 2063. For example, the third ventilation opening 2062 and the fourth ventilation opening 2063 are respectively disposed at two ends of the second-type battery pack 206 where the electrical connectors 2061 are arranged, and are below the electrical connectors 2061. The third ventilation opening 2062 and the fourth ventilation opening 2063 are aligned with the airflow exchange portions 204 on the two opposite side plates 216 of the battery compartment 201, respectively. This arrangement enables the two airflow exchange portions 204 to cooperate to ventilate and dissipate heat for one second-type battery pack 206. Accordingly, the temperature adjustment assemblies 203 may rapidly remove internal heat or raise the internal temperature of the second-type battery pack 206 via the airflow exchange portions 204, so as to bring the second-type battery pack 206 back to the normal range.

In some embodiments, when the second-type battery pack 206 needs to be cooled down, the power management device 219 may control the airflow generators 2031 of the temperature adjustment assemblies 203 to operate while the heaters keep inactive. Air is blown into the second-type battery pack 206 through one of the third ventilation opening 2062 and the fourth ventilation opening 2063, and hot air is exhausted through the other of the third ventilation opening 2062 and the fourth ventilation opening 2063, so as to remove heat inside the second-type battery pack 206 through a heat exchange with the external environment, thereby rapidly reducing the temperature of the second-type battery pack 206 to the normal range.

When the second-type battery pack 206 needs to be heated, the power management device 219 activates both the airflow generators 2031 and the heaters. Air is blown into the second-type battery pack 206 through both the third ventilation opening 2062 and the fourth ventilation opening 2063. The second-type battery pack 206 is further provided with one or more fifth ventilation openings 2064 for exhausting internal cold air, so that the internal temperature of the second-type battery pack 206 can rise rapidly to the normal range. In some embodiments, the one or more fifth ventilation openings 2064 are disposed on two sides of the electrical connectors 2061 on the second-type battery pack 206.

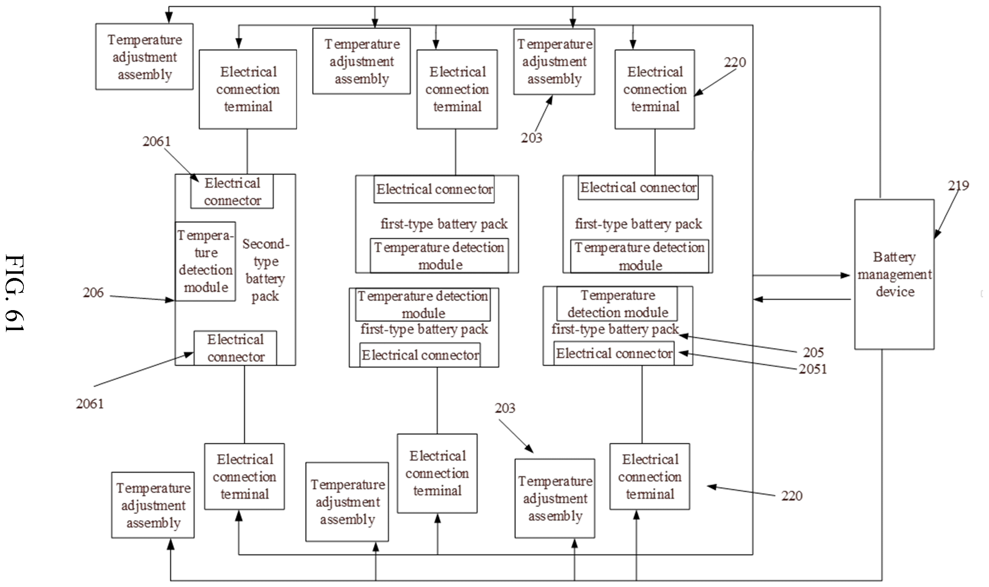

As shown in FIG. 61, the power supply device 200 includes a power supply unit, including a temperature detection module for detecting a temperature of the power supply unit provided inside the power supply unit; a battery compartment 201 configured to accommodate the power supply unit; a power management module electrically connected to the temperature detection module and configured to process temperature data transmitted from the temperature detection module; and a plurality of temperature adjustment assemblies 203 electrically connected to the power management module. When a temperature detected by the temperature detection module falls within the first range, the power management module controls the temperature adjustment assemblies 203 to perform heating or cooling treatment on the power supply unit. When the temperature detected by the temperature detection module falls within the second range, the power management module controls the temperature adjustment assemblies 203 to continuously heat or cool the battery pack, and the power supply unit operates under low-current charging or discharging.

The power supply unit is the first-type battery pack 205, the second-type battery pack 206, or a combination thereof. Each battery pack is internally provided with a temperature detection module. The power management module is the aforementioned power management device 219. When the internal temperature of the battery pack falls within the first range, the power management device 219 controls the temperature adjustment assemblies 203 to adjust the temperature; when the temperature falls within the second range, multiple temperature adjustment assemblies 203 are activated for continuous temperature adjustment, and the battery pack operates under low-current charging or discharging until the process is completed.

In some embodiments, the temperature adjustment assembly 203 includes an airflow generator 2031 capable of generating airflow. When a minimum value of the first range exceeds a normal operating temperature of the power supply unit, the airflow generator 2031 functions to dissipate heat from the power supply unit. When the minimum value of the second range exceeds a maximum value of the first range, the airflow generator 2031 continues to dissipate heat from the power supply unit.

In some embodiments, the temperature adjustment assembly 203 includes the airflow generator 2031 configured to generate airflow and a heater configured to generate heat. When the maximum value within the first range is lower than the normal operating temperature of the power supply unit, the airflow generator 2031 blows the heat generated by the heater toward the corresponding power supply unit for heating.

When the maximum value of the second range, the airflow generator 2031 blows heat generated by the heater toward its corresponding power supply unit for heating.

As shown in FIGS. 45 and 61, in some embodiments, the power supply unit includes the first-type battery packs 205. When the number of the first-type battery packs 205 whose internal temperatures fall within the first range is m, the number of the temperature adjustment assemblies 203 configured to adjust the temperature of the m first-type battery packs 205 is m. Specifically, if only one first-type battery pack 205 has an internal temperature within the first range, one temperature adjustment assembly 203 is configured to adjust the temperature of the single first-type battery pack 205.

In some embodiments, the power supply unit includes first-type battery packs 205. When the number of the first-type battery packs 205 whose internal temperatures fall within the second range is m, the number of the temperature adjustment assemblies 203 configured to adjust the temperatures of the m first-type battery packs 205 is at least m+1 and a maximum of the total number of the temperature adjustment assemblies 203 arranged on the outdoor working device.

If the number of the first-type battery packs 205 whose internal temperatures fall within the second range is 1, the number of the temperature adjustment assemblies 203 configured to adjust the temperature of the single first-type battery pack 205 is at least two and a maximum of the total number of the temperature adjustment assemblies 203 mounted on the outdoor working device. In some embodiments, six temperature adjustment assemblies 203 are provided. Two, three or five of the temperature adjustment assemblies 203 may operate simultaneously, and a maximum of all the six temperature adjustment assemblies 203 can operate simultaneously to cool or heat one first-type battery pack 205.

It should be noted that when six first-type battery packs 205 are accommodated in the battery compartment 201, a maximum of six temperature adjustment assemblies 203 may perform heat dissipation for the first-type battery packs 205.

As shown in FIGS. 46 and 61, if the power supply unit includes the second-type battery packs 206 and the number of second-type battery packs 206 with internal temperature in the first range is n, the number of matched temperature adjustment assemblies 203 is 2n. For a single such second-type battery pack 206, two temperature adjustment assemblies 203 are configured.

In some embodiments, the power supply unit includes second-type battery packs 206. When the number of the second-type battery packs 206 whose internal temperatures fall within the second range is n, the number of the temperature adjustment assemblies 203 configured to adjust the temperatures of the n second-type battery packs 206 is at least 2n+1 and a maximum of the total number of the temperature adjustment assemblies 203 arranged on the outdoor working device. When only one second-type battery pack 206 has an internal temperature within the second range, the number of the temperature adjustment assemblies 203 configured to adjust the temperature of the single second-type battery pack 206 is at least three and a maximum of all temperature adjustment assemblies 203 arranged on the outdoor working device. In some embodiments, six temperature adjustment assemblies 203 are provided, and a maximum of six temperature adjustment assemblies 203 can simultaneously cool or heat the one second-type battery pack 206. In some embodiments, the number of temperature adjustment assemblies 203 may be set to eight, nine, ten or even more according to actual requirements.

It should be noted that when the internal temperature of the first-type battery pack 205 or the second-type battery pack 206 is heated or cooled back to the normal range, the temperature adjustment assemblies 203 cease operation to save power of the first-type battery pack 205 or the second-type battery pack 206. When the internal temperature of the first-type battery pack 205 or the second-type battery pack 206 falls outside the normal range, the temperature adjustment assemblies 203 operate again to adjust the temperatures of the first-type battery pack 205 or the second-type battery pack 206.

A value within the first range, the second range, or the normal range is not limited to fixed specific values and are adjustable, which can be modified according to different application requirements.

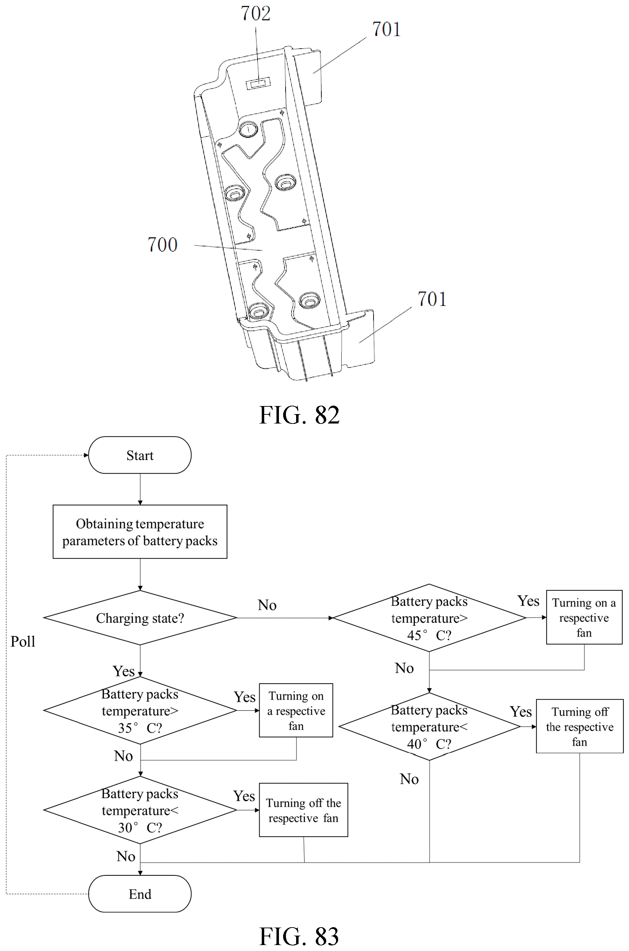

Referring to FIGS. 61 and 83, in some embodiments, the temperature detection module inside each battery pack detects an internal temperature and transmits the detected temperature to the power management device 219. The power management device 219 executes corresponding operations when the detected temperature exceeds a preset threshold.

In a charging state, when the detected internal temperature of a battery pack is higher than 35°C, the power management device 219 activates the airflow generator 2031 (heat dissipation fan) corresponding to the battery pack. The airflow generator 2031 operates to generate airflow, and to blow the airflow toward the battery pack for heat dissipation via the airflow exchange portion 204 arranged on the battery compartment 201. When the detected internal temperature of the battery pack is less than or equal to 30°C, the power management device 219 deactivates the corresponding airflow generator 2031 to reduce power consumption of the airflow generator 2031 and save electric energy of the battery pack. The system repeatedly polls and judges a state of each battery pack in turn.

In a discharging state, when the detected internal temperature of a battery pack is higher than 45°C, the power management device 219 activates the airflow generator 2031 (heat dissipation fan) corresponding to the battery pack. The airflow generator 2031 operates to generate airflow, to blow the airflow to the battery pack for heat dissipation through the airflow exchange portion 204 provided on the battery compartment 201. When the detected internal temperature of the battery pack is less than or equal to 40°C, the power management device 219 deactivates the airflow generator 2031 corresponding to the battery pack.

When a feedback signal of the airflow generator 2031 indicates a protection state (including short circuit, overcurrent, overtemperature, communication abnormality and other faults of the airflow generator 2031), the power management device 219 deactivates the airflow generator 2031 and reports specific details of the protection state to a vehicle management module.

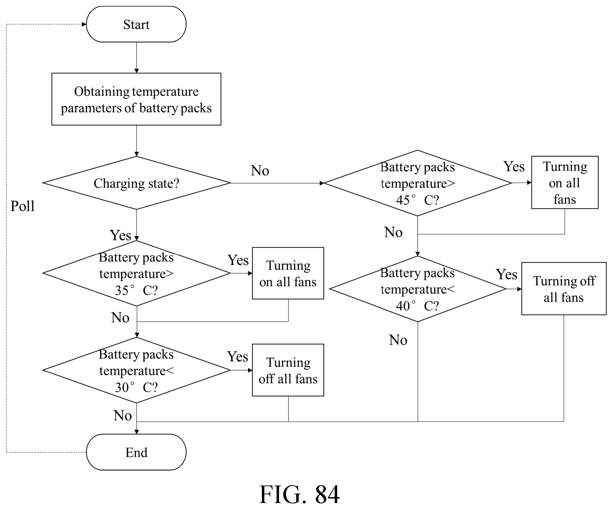

Please refer to FIGS. 61 and 84. In some other embodiments, the temperature detection module disposed inside each battery pack (the first-type battery pack 205 and/or the second-type battery pack 206) detects the internal temperature of the battery pack and transmits the detected internal temperature to the power management device 219. The power management device 219 determines whether the detected temperature exceeds a threshold and executes corresponding processing accordingly.

In the charging state, when the detected internal temperature of the battery pack is higher than 35°C, the power management device 219 activates all airflow generators 2031 arranged on the battery compartment 201 for cooling the battery pack. The airflow generators 2031 operate to generate airflow, and to blow the airflow toward the battery pack for heat dissipation via the airflow exchange portion 204 of the battery compartment 201. When the detected internal temperature of the battery pack is less than or equal to 30°C, the power management device 219 deactivates all airflow generators 2031 on the battery compartment 201, to reduce power consumption of the airflow generators 2031 and save electric energy of the battery pack.

In the discharging state, when the detected internal temperature of the battery pack is higher than 45°C, the power management device 219 activates all airflow generators 2031 provided on the battery compartment 201 for cooling the battery pack. The airflow generators 2031 operate to generate airflow, and to blow the airflow toward the battery pack for heat dissipation through the airflow exchange portion 204 of the battery compartment 201. When the detected internal temperature of the battery pack is less than or equal to 40°C, the power management device 219 deactivates all the airflow generators 2031 on the battery compartment 201 to reduce power consumption of the airflow generators 2031 and save electric energy of the battery pack.

When a feedback signal of the airflow generator 2031 indicates a protection state (including short circuit, overcurrent, overtemperature, communication abnormality, and other faults of the airflow generator 2031), the power management device 219 deactivates the airflow generator 2031 and reports specific details of the protection state to a vehicle management module.

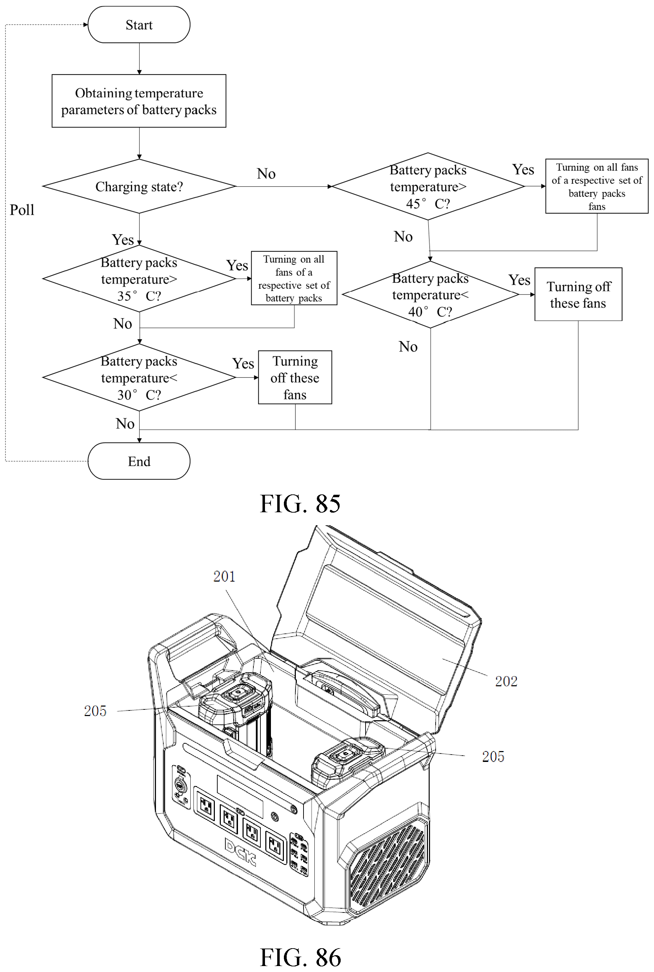

Please refer to FIGS. 61 and 85. In some other embodiments, a plurality of battery packs are grouped into one set of battery packs, and a plurality of such sets are provided in total. In the charging state, when the detected internal temperature of one or more battery packs within a set of battery packs exceeds 35°C, the power management device 219 activates the multiple airflow generators 2031 matched to the corresponding set of battery packs. The multiple airflow generators 2031 operate to generate airflow, and to blow the airflow towards the battery packs for heat dissipation through the airflow exchange portions 204 arranged on the battery compartment 201. When the detected internal temperature of the battery packs is smaller than or equal to 30°C, the power management device 219 deactivates all airflow generators 2031 of this set of battery packs to reduce power consumption of the airflow generators 2031 and save electric energy of the battery packs.

In the discharging state, when the detected internal temperature of one or more battery packs within a set of battery packs exceeds 45°C, the power management device 219 activates the multiple airflow generators 2031 matched to the corresponding set of battery packs. The multiple airflow generators 2031 operate to generate airflow, and to blow the airflow toward the battery packs for heat dissipation through the airflow exchange portions 204 arranged on the battery compartment 201. When the detected internal temperature of the battery packs is smaller than or equal to 40°C, the power management device 219 deactivates all the airflow generators 2031 of this set of battery packs, to reduce power consumption of the airflow generators 2031 and save electric energy of the battery packs.

When a feedback signal of the airflow generator 2031 indicates a protection state (including short circuit, overcurrent, overtemperature, communication abnormality, and other faults of the airflow generator 2031), the power management device 219 deactivates the airflow generator 2031 and reports specific details of the protection state to a vehicle management module.

In some embodiments, when the battery packs are used for discharging, all heat dissipation fans disposed inside the battery compartment 201 operate to dissipate heat from the battery packs, as long as a battery pack is installed in the battery compartment 201, regardless of the total number of installed battery packs.

In some other embodiments, when the battery packs accommodated in the battery compartment 201 are charged, all heat dissipation fans inside the battery compartment 201 start running to cool the battery packs, once a charging gun is plugged into a charging connector 218 for charging, irrespective of how many battery packs are arranged within the battery compartment 201.

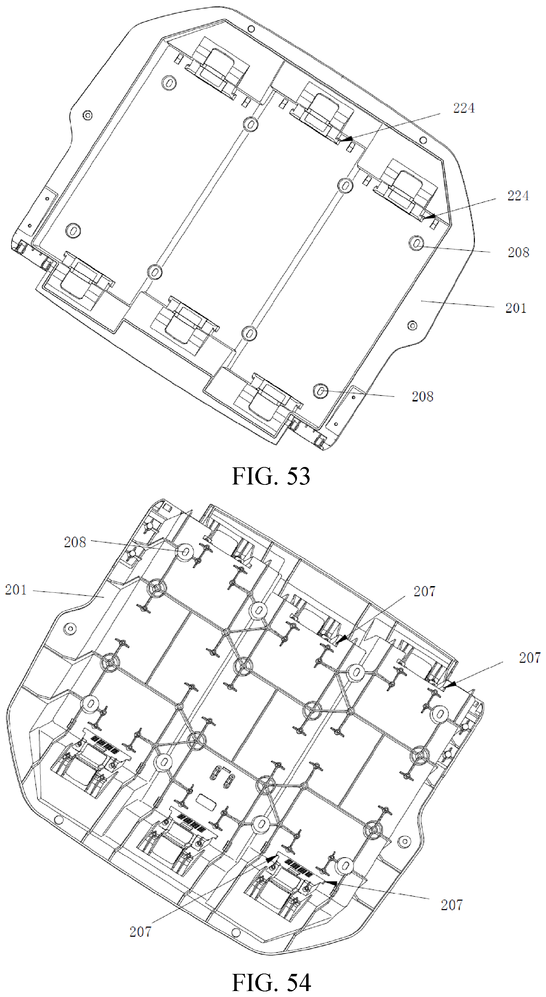

As shown in FIGS. 48 and 54, a mounting groove 207 is formed on the battery compartment 201 around each airflow exchange portion 204. Each temperature adjustment assembly 203 includes a mounting bracket 2032, and an airflow generator 2031 and a heater fixed on the mounting bracket 2032. When the mounting bracket 2032 is assembled with the mounting groove 207, an air outlet of the airflow generator 2031 is aligned with the airflow exchange portion 204. This structure enables quick assembly and disassembly of the temperature adjustment assemblies 203 for convenient replacement and maintenance. The airflow generator 2031 is fixed on the mounting bracket 2032 by screws. A guide rail 2033 is arranged on the mounting bracket 2032 and cooperate with the mounting groove 207 to realize installation of the mounting bracket 2032 on the outer side of the battery compartment 201.

In some embodiments, a bottom of the mounting bracket 2032 is a fixing part 2034 provided with fixing holes 2035. Fasteners such as bolts pass through the fixing holes 2035 to fix the fixing part 2034 to the battery compartment 201, thereby fixing the mounting bracket 2032 and the airflow generator mounted thereon to the battery compartment 201. After the mounting bracket 2032 is slid into place in sliding fit with the mounting groove 207, fasteners such as screws may be used to fasten the mounting bracket 2032 to the battery compartment 201.

As shown in FIGS. 48 to 51, 53, and 54, in some embodiments, drain holes 208 are formed at a bottom of the battery compartment 201 to drain accumulated water or waste liquid, thereby avoiding adverse impact on a normal operation of the battery packs.

As shown in FIGS. 44, 46 and 55, in some embodiments, the present disclosure includes a traveling assembly 600 configured to support travel of the outdoor working equipment; and a power supply device 200. The power supply device 200 includes: a battery compartment 201 provided with heat dissipation fans, wherein the heat dissipation fans operates to generate airflow; and a battery pack detachably mounted inside the battery compartment 201. Each battery pack includes a battery housing 2065 and a plurality of battery cells 2068 arranged within the battery housing 2065.

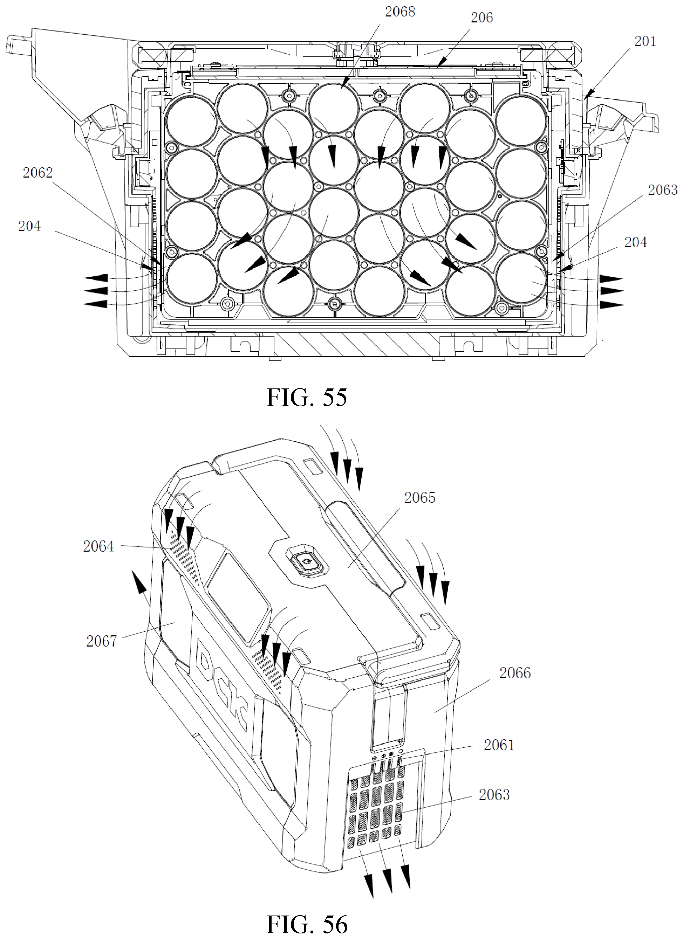

As shown in FIGS. 55 and 56, in some embodiments, the battery housing 2065 is of rectangular configuration. The battery housing 2065 includes a first housing wall 2067 extending along a direction perpendicular to an axial direction of each battery cell 2068 and a second housing wall 2066 extending along a direction parallel to the axial direction of the battery cell 2068. The first housing wall 2067 and the second housing wall 2066 intersect perpendicularly. The first housing wall 2067 is provided with first air holes, and the second housing wall 2066 is provided with second air holes. Airflow generated by operation of the heat dissipation fans may flow into the battery housing 2065 through the first air holes, flow across the battery cells 2068, and then discharge out through the second air holes. Such airflow circulation carries away heat generated by the battery cells 2068 to cool the whole battery pack. Accordingly, the battery pack can be charged and discharged within a proper temperature range, thereby improving charging and discharging performance.

As shown in FIGS. 56, 59, and 60, in some embodiments, when the battery pack is the second-type battery pack 206, the first air holes are the fifth ventilation openings 2064, and the second air holes are the third ventilation openings 2062 or the fourth ventilation openings 2063.

In some embodiments, an air intake direction of the first air holes is perpendicular to an air outlet direction of the second air holes.

As shown in FIG. 56, to increase an air intake volume per unit time, a plurality of first air holes may be arranged on the first housing walls 2067. In some embodiments, two first housing walls 2067 are provided and disposed on two opposite sides of the battery housing 2065, respectively. Two first air holes are formed on the first housing wall 2067 of each side, and each first air hole is composed of a plurality of honeycomb holes. The plurality of honeycomb holes can prevent large-volume foreign matter from entering the battery housing 2065 while ensuring sufficient air intake.

As shown in FIGS. 48 to 51, 55, and 56, in some embodiments, an airflow exchange portion 204 is arranged on the battery compartment 201. A blowing direction of the heat dissipation fans is consistent with a flow direction of air passing through the airflow exchange portion 204 and a flow direction of air passing through the second air holes. In some embodiments, the blowing direction of the heat dissipation fans, the airflow direction through the airflow exchange portion 204 and the airflow direction through the second air holes are identical and collinear. With such an arrangement, airflow entering the battery housing 2065 through the first air holes flows around the battery cells 2068 and then exits the battery housing 2065 via the second air holes. The airflow exiting the battery housing 2065 is further discharged out of the battery compartment 201 via the airflow exchange portion 204. The foregoing airflow circulation discharges hot air inside the battery pack from the battery compartment 201.

As shown in FIGS. 48 to 51, FIGS. 55, and 56, in some embodiments, the battery compartment 201 includes two side plates 216 disposed opposite to each other, each side plate 216 being provided with heat dissipation fans. The heat dissipation fans mounted on one of the side plates 216 are arranged in one-to-one correspondence with the heat dissipation fans mounted on the other of the side plates 216. Along a direction perpendicular to the axial direction of the battery cells 2068, the second air holes are formed on the second housing walls 2066 located at both ends of the battery housing 2065. The two opposite side plates 216 are each provided with an airflow exchange portion 204. When the battery pack is installed into the battery compartment 201, the second air holes and the airflow exchange portions 204 are disposed adjacent to one another in spatial position.

In some embodiments, when the battery pack is installed in the battery compartment 201 and the heat dissipation fans are in operation, the heat dissipation fans are controlled to draw air from an interior of the battery compartment 201 and exhaust the air to the outside. The first air holes formed on both sides of the battery housing 2065 serve as air inlets. Airflow entering the battery housing 2065 circulates around the battery cells 2068 inside the battery housing 2065, such that the flowing airflow carries away hot air surrounding the battery cells 2068. The flowing hot air then exits the battery housing 2065 through the second air holes disposed at both ends of the battery housing 2065, and is subsequently discharged outward via the airflow exchange portions 204 arranged on the two opposite side plates 216, so as to cool the battery packs.

As shown in FIGS. 45 to 47, in some embodiments, a compartment cover 202 is provided at an opening of the battery compartment 201, and a gap is reserved between the battery compartment 201 and the compartment cover 202. Airflow can enter the battery compartment 201 through the gap to supplement the air exhausted by the heat dissipation fans.

Please refer to FIGS. 45 to 47, FIGS. 62, 68 and 69. In some embodiments, the outdoor working device of the present disclosure further includes a battery compartment 201 provided with an opening. The battery compartment 201 further includes a bottom plate and a plurality of side plates 216 surrounding the bottom plate. At least one side plate 216 is provided with a first terminal. The battery pack is provided with a second terminal and configured to be detachably mounted to the battery compartment 201 along the opening. When the battery pack is installed in the battery compartment 201, the second terminal is electrically connected to the first terminal. The power management device 219 is connected to the first terminal via wiring harnesses. A first voltage reduction module 2191 is disposed inside the power management device 219. The first voltage reduction module 2191 is capable of acquiring a voltage of the battery pack and performing voltage reduction. Heat dissipation fans are arranged on the side plates 216 and connected to the power management device 219 through wiring harnesses. The heat dissipation fans can receive electric energy of the battery pack after undergoing voltage reduction by the first voltage reduction module 2191, and the operation of the heat dissipation fans can realize heat dissipation for the battery pack.

As shown in FIGS. 48, 57, and 59, the first terminals are the electrical connection terminals 220, and the second terminals are the electrical connectors 2051 of the first-type battery pack or the electrical connectors 2061 of the second-type battery pack.

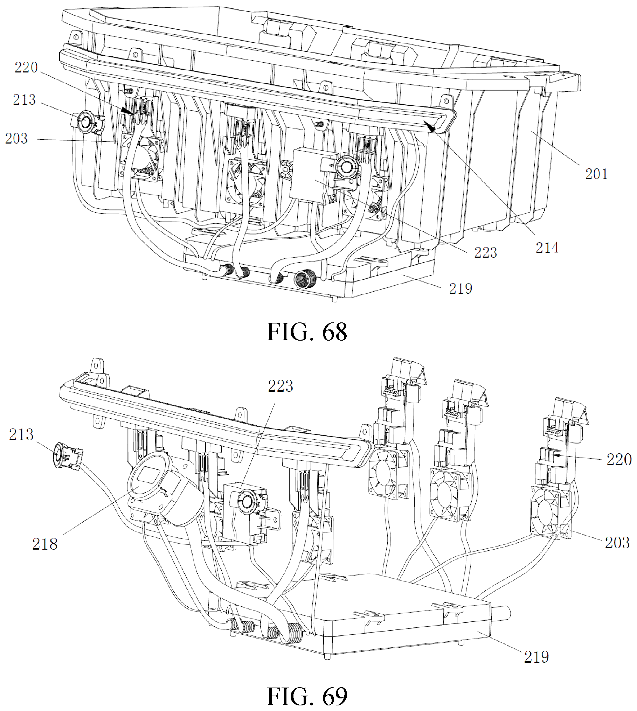

As shown in FIGS. 68 and 69, in some embodiments, the power management device 219 is disposed below the battery compartment 201, and the heat dissipation fans are disposed below the first terminals and between the first terminals and the power management device 219. In this way, the wiring harness connecting the first terminals to the power management device 219 and the wiring harness connecting the heat dissipation fans to the power management device 219 can both be routed downward to the power management device 219. The harnesses run downward together, resulting in a neat and rational wiring layout.

In some embodiments, forward and backward traveling directions of the outdoor working device are defined as a front side and a rear side respectively; the two lateral sides of the outdoor working device are defined as a left side and a right side; and vertical directions of the outdoor working device are defined as an upper side and a lower side. In addition to being arranged below the battery compartment 201, the power management device 219 can be arranged at a plurality of different positions including above, on the left of, on the right of, in front of, and behind the battery compartment 201.

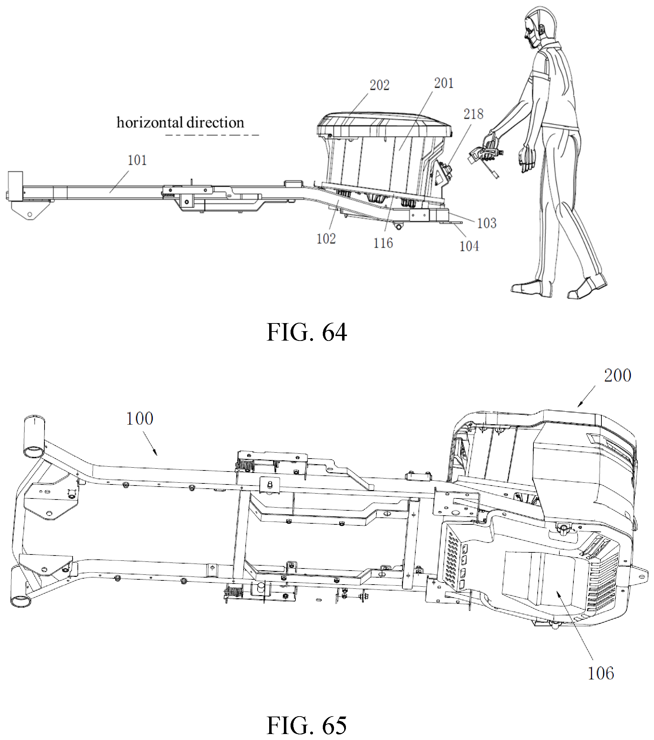

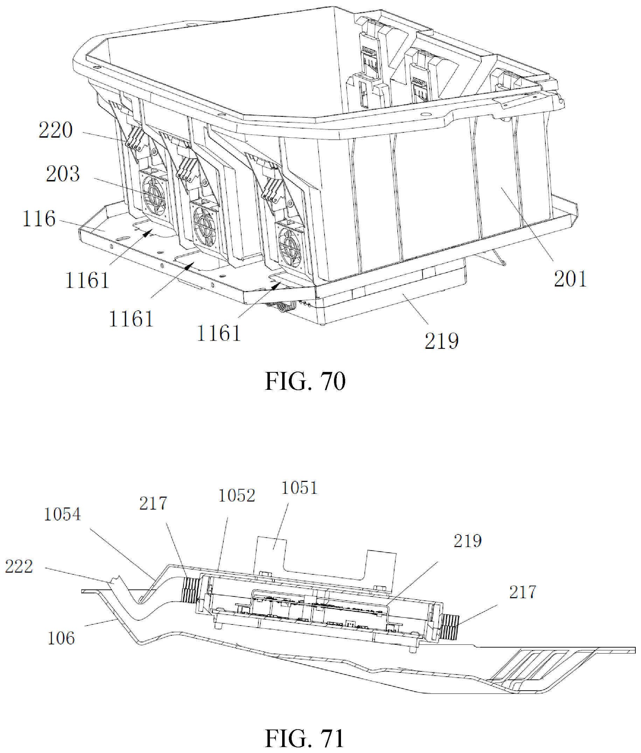

Referring to FIGS. 64 and 70, in some embodiments, the present disclosure further includes a vehicle frame 100. The vehicle frame 100 is provided with a power fixing member 116 for fixing the battery compartment 201. The power fixing member 116 is arranged between the battery compartment 201 and the power management device 219. The power fixing member 116 is provided with a wire routing hole 1161 positioned below the first terminals. The heat dissipation fans are disposed below the first terminals, and the wire routing hole 1161 is located below the heat dissipation fans. The wire routing hole 1161 is configured to allow wiring harnesses to pass therethrough and directly connect the first terminals to the power management device 219 as well as the heat dissipation fans to the power management device 219. If the wiring harnesses were routed around the power fixing member 116, a required length of wiring harnesses would be increased, raising material costs of the harnesses and resulting in an unreasonable wiring layout.

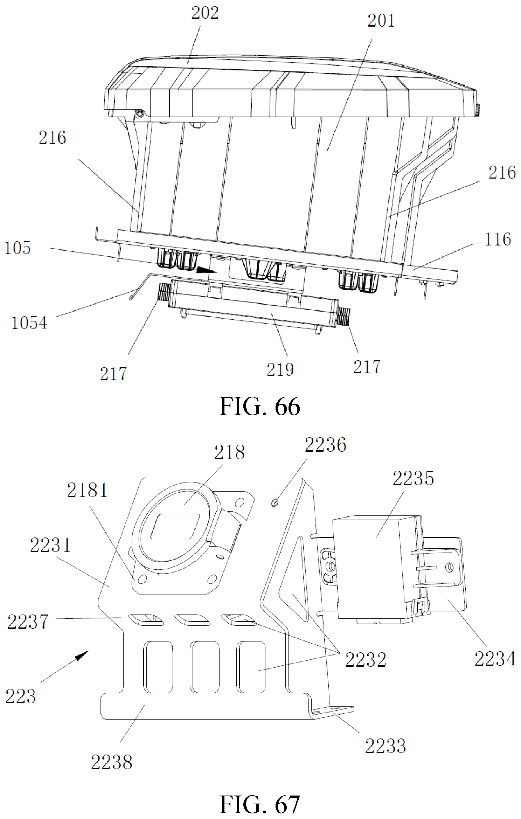

As shown in FIGS. 66, 68, and 69, in some embodiments, the two side plates 216 are arranged along a front-rear direction of the outdoor working device. The power management device 219 is disposed below the battery compartment 201 and horizontally between the two side plates 216. The power management device 219 has a front end and a rear end arranged along the front-rear direction of the outdoor working device. The front end of the power management device 219 is connected to a front one of the two side plates 216 in the front-rear direction of the outdoor working device, and the rear end of the power management device 219 is connected to a rear one of the two side plates 216 in the front-rear direction of the outdoor working device. In some embodiments, a plurality of first terminals are provided and respectively arranged on the two side plates 216 extending along the front-rear direction of the outdoor working device. Each first terminal is connected to the power management device 219 via a wiring harness passing through the wire routing hole 1161 thereunder. Such an arrangement reduces the consumption of wiring harnesses and allows the front and rear ends of the power management device 219 to be connected to the first terminals on the side plates 216 with short, nearby wiring harnesses. In some embodiments, a plurality of heat dissipation fans are provided. Below each first terminal, a corresponding one heat dissipation fan is arranged. The heat dissipation fan disposed below its corresponding first terminal and the first terminal are both connected to the power management device 219 through the same wire routing hole 1161 located below them via wiring harnesses.

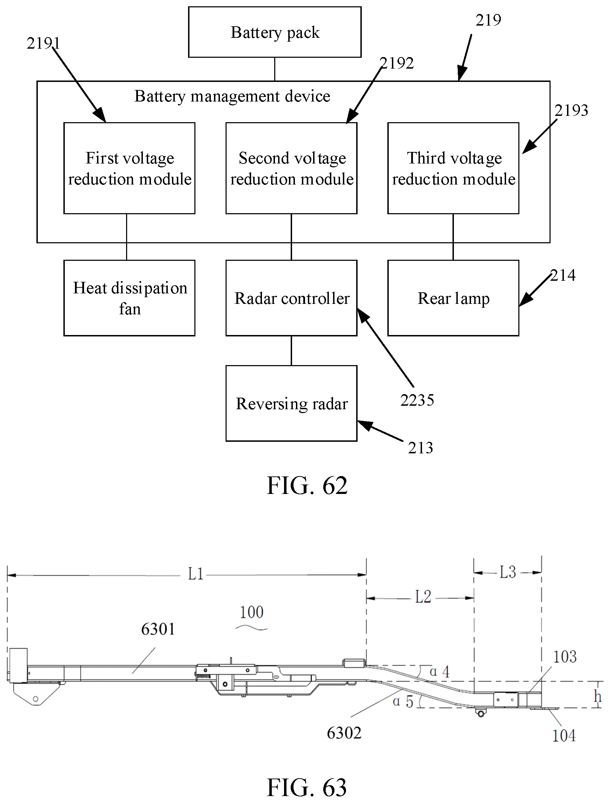

As shown in FIG. 62, the first voltage reduction module 2191 may be a 12 V voltage reduction module, which reduces the voltage of the battery pack to 12 V to supply power to the heat dissipation fans. Alternatively, a 5 V or 24 V voltage reduction module can be adopted.

An effective operating ambient temperature of the heat dissipation fan of the present disclosure ranges from -10°C to 70°C, and an effective operating ambient humidity of the heat dissipation fan ranges from 35% Relative Humidity (RH) to 85%RH. For example, a storage temperature of the heat dissipation fan ranges from -10°C to 70°C, and a storage humidity of the heat dissipation fan ranges from 35%RH to 85%RH.

In some embodiments, when an operating voltage of the heat dissipation fan is 12 V and an input current of the heat dissipation fan is 0.08 amperes (A), the power of the heat dissipation fan is 1 W, and a rotational speed of fan blades of the heat dissipation fan is 2500 revolutions per minute (RPM). Under such operating conditions, an air flow rate discharged by the fan blades is 12.31 cubic feet per minute (CFM), the pressure generated by air output from the fan blades is 1.45 milimetres of water column (mm-H₂O), and the noise generated by the heat dissipation fan is 19.99 decibels (dB).

In some embodiments, when the operating voltage of the heat dissipation fan is 12 V and the input current of the heat dissipation fan is 0.12 A, the power of the heat dissipation fan is 1.4 W, and the rotational speed of the fan blades of the heat dissipation fan is 3300 RPM. Under such operating conditions, the air flow rate discharged by the fan blades is 16.50 CFM, the pressure generated by the air output from the fan blades is 2.5 mm-H₂O, and the noise generated by the heat dissipation fan is 23.85 dB.

In some embodiments, when the operating voltage of the heat dissipation fan is 12 V and the input current of the heat dissipation fan is 0.17 A, the power of the heat dissipation fan is 2.0 W, and the rotational speed of the fan blades of the heat dissipation fan is 4000 RPM. Under such operating conditions, the airflow rate discharged by the fan blades is 20.28 CFM, the pressure generated by the air output from the fan blades is 3.65 mm-H₂O, and the noise generated by the heat dissipation fan is 29.04 dB.

In some embodiments, when the operating voltage of the heat dissipation fan is 12 V and the input current of the heat dissipation fan is 0.17 A, the power of the heat dissipation fan is 2.0 W, and the rotational speed of the fan blades of the heat dissipation fan is 4000 RPM. Under such operating conditions, the airflow rate discharged by the fan blades is 20.28 CFM, the pressure generated by the air output from the fan blades is 3.65 mm-H₂O, and the noise generated by the heat dissipation fan is 29.04 dB.

Please refer to FIGS. 44, 62 and 78. In some embodiments, the battery compartment 201 is provided with a rear cover 210, and the rear cover 210 is provided with a rear lamp 214. A second voltage reduction module 2192 is arranged inside the power management device 219, and the second voltage reduction module 2192 is connected to the rear lamp 214 via a wiring harness. In some embodiments, the second voltage reduction module 2192 is a 15 V voltage reduction module. The 15 V voltage reduction module acquires electric energy from the battery pack, reduces a voltage of the electric energy from the battery pack to 15 V, and supplies power to the rear lamp 214. It is understood that the second voltage reduction module 2192 may also be other voltage reduction modules capable of achieving different voltage reduction objects, such as an 18 V voltage reduction module or a 20 V voltage reduction module.

Please refer to FIGS. 62, 68, 69, 78, and 79. In some embodiments, one side plate 216 of the battery compartment 201 is provided with a rear cover 210, and the rear cover 210 is provided with a reversing radar 213. A radar controller 2235 is arranged on the side plate 216 corresponding to the rear cover 210. The radar controller 2235 is connected to the reversing radar 213 and the power management device 219 via wiring harnesses. A third voltage reduction module 2193 connected to the power management device 219 is disposed inside the power management device 219. In some embodiments, the third voltage reduction module 2193 may be a 15 V voltage reduction module. The 15 V voltage reduction module obtains electric energy from the battery pack, reduces the voltage to 15 V, and supplies power to the radar controller 2235. The radar controller 2235 further transmits the electric energy to the reversing radar 213 through wiring harnesses. It is understood that the third voltage reduction module 2193 may also be other voltage reduction modules that achieve different voltage reduction objects, such as an 18 V voltage reduction module or a 20 V voltage reduction module.

As shown in FIG. 68, in some embodiments, a plurality of heat dissipation fans are mounted on the side plate 216, and the radar controller 2235 is arranged between two adjacent heat dissipation fans. This arrangement avoids the radar controller 2235 from affecting an air blowing effect of the heat dissipation fans and avoids a hot airflow blown out from the heat dissipation fans from affecting the normal operation of the radar controller 2235.

As shown in FIGS. 48 to 51, in some embodiments, each side plate 216 provided with the heat dissipation fans is provided with a plurality of airflow exchange portions 204. The airflow exchange portions 204 and the heat dissipation fans and are arranged in a one-to-one correspondence.

As shown in FIGS. 46, 55, 56, and 70, in some embodiments, the outdoor working device of the present disclosure includes a battery compartment 201 provided with an opening. The battery compartment 201 further includes a bottom plate and a plurality of side plates 216 surrounding the bottom plate. A first terminal is provided at an upper section of an inner wall of each of at least one side plate 216, and an airflow exchange portion 204 connecting the interior and exterior of the battery compartment 201 is provided at a lower section of the side plate 216. The battery pack is configured to be detachably mounted in the battery compartment 201. A second terminal capable of being electrically connected to the first terminal is disposed at an upper section of the battery pack along its mounting direction, and a second air hole corresponding to the airflow exchange portion 204 is disposed at a lower section of the battery pack. When the battery pack is mounted in the battery compartment 201, the first terminal is electrically connected to the second terminal, and the airflow exchange portion 204 is aligned with the second air hole. When the first terminal and the second terminal are electrically connected to perform charging or discharging, the battery pack can exhaust air outward through the second air hole thereof, and the air exhausted from the second air hole is discharged out of the battery compartment 201 via the airflow exchange portion 204.

The battery pack is installed along the vertical direction. Along the installing direction of the battery pack, an upper part of the side plate 216 is defined as the upper section, and a lower part of the side plate 216 is defined as the lower section.

As shown in FIGS. 48 to 51, in some embodiments, a heat dissipation fan corresponding to the airflow exchange portion 204 is mounted on an outer wall of the side plate 216. When the battery pack is installed in the battery compartment 201, the airflow exchange portion 204 is aligned with both the second air hole and the heat dissipation fan. Such an arrangement enables the heat dissipation fan to directly utilize negative pressure generated during its operation to discharge the air passing through the airflow exchange portion 204 out of the battery compartment 201.

In some embodiments, the heat dissipation fan is arranged at the lower section of the side plate 216, which is configured to be correspond to (opposite to) the airflow exchange portion 204.

As shown in FIG. 48, in some embodiments, a mounting groove 207 is formed on an outer wall of the side plate 216 provided with the first terminal, and the heat dissipation fan is detachably mounted inside the mounting groove 207. In some embodiments, the mounting groove 207 may be a slide groove extending along the mounting direction of the battery pack, and a notch of the slide groove is opened adjacent to and facing a lower side of the bottom plate. The heat dissipation fan is fixed to a mounting bracket 2032, on which guide rails 2033 are arranged. By bringing the guide rails 2033 of the mounting bracket 2032 into sliding engagement with the mounting groove 207 in an upward insertion motion from the bottom of the battery compartment 201, the heat dissipation fan can be mounted onto the outer wall of the side plate 216 of the battery compartment 201.

In some embodiments, the battery pack is further provided with a first air hole. One of the first air hole and the second air hole serves as an air inlet, and the other serves as an air outlet, realizing heat exchange between the inside and outside of the battery pack for heat dissipation of the battery pack.

As shown in FIGS. 48 to 51 and FIGS. 55 to 56, in some embodiments, the present disclosure further provides an outdoor working device, including: a battery compartment 201 provided with an opening, wherein an airflow exchange portion 204 connecting the interior and exterior of the battery compartment 201 is disposed on the battery compartment 201; a battery pack configured to be detachably mounted inside the battery compartment 201, wherein the battery pack is provided with second air holes corresponding to (opposite to) the airflow exchange portion 204; a heat dissipation fan at least configured to cool the battery pack, wherein the heat dissipation fan is configured to blow air along a first direction. When the battery pack is mounted in the battery compartment 201, orthographic projections of the airflow exchange portion 204, the second air hole, and the heat dissipation fan along the first direction at least partially overlap each other. With such arrangement, during heat dissipation of the battery pack, gas inside the battery pack can be directly exhausted outward or air can be blown inward. An airflow path is short without any detour, thereby improving heat dissipation efficiency of the battery pack.

As shown in FIGS. 46 to 51 and FIGS. 55 to 56, in some embodiments, an outdoor working device according to the present disclosure includes: a battery compartment 201 provided with an opening. The battery compartment 201 further includes a bottom plate and a plurality of side plates 216 surrounding the bottom plate. A mounting seat 224 is arranged on the inner wall of at least one side plate 216, and a mounting groove 207 is arranged on the outer wall of the at least one side plate 216. The outdoor working device further includes a battery pack configured to be mounted onto the mounting seat 224 from an upper end of the side plate 216, and a heat dissipation fan configured to be mounted into the mounting groove 207 from a lower end of the side plate 216.

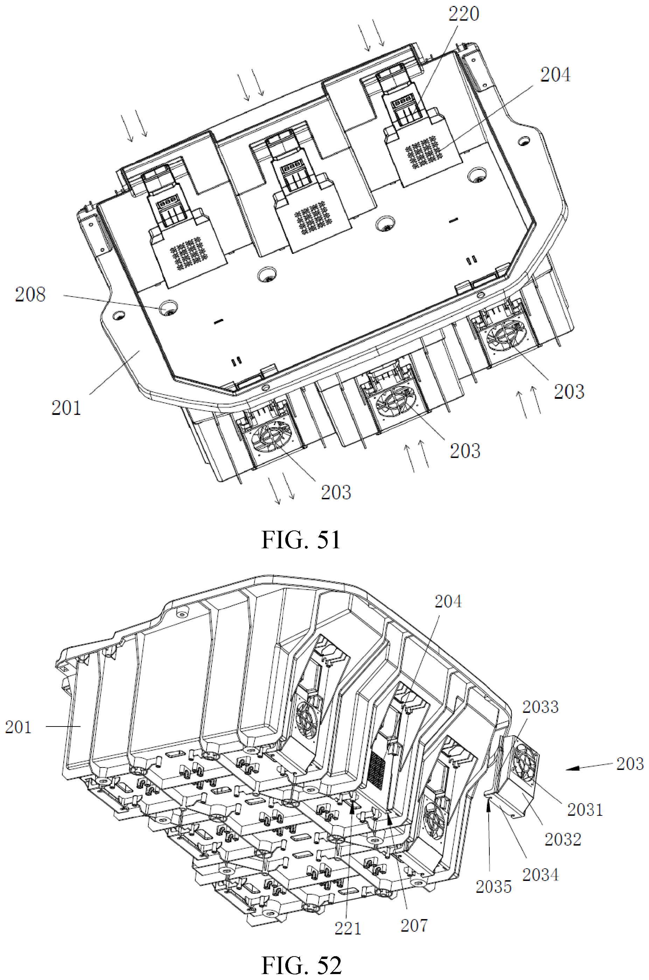

As shown in FIGS. 52-54, in some embodiments, a mounting direction of the battery pack on the battery compartment 201 is opposite to that of the heat dissipation fan on the battery compartment 201. Specifically, FIG. 10 is an internal schematic view of the battery compartment 201, and FIG. 11 is a schematic bottom view of the battery compartment. Along a vertical direction, the battery pack is mounted downward from the top on the inner wall of the battery compartment 201, while the heat dissipation fan is mounted upward from the bottom on the outer wall of the battery compartment 201.

As shown in FIG. 55, in some embodiments, at least one side plate 216 is provided with an airflow exchange part 204 that connects the interior and exterior of the battery compartment 201. When the battery pack and heat dissipation fan are properly installed in the battery compartment 201, an airflow direction of the heat dissipation fan is the same as an outlet direction of the airflow exchange part 204 and lies on the same straight line.

As shown in FIGS. 55-56, in some embodiments, the battery pack further includes a first air hole and a second air hole arranged thereon. One of the first air hole and the second air hole serves as an air inlet for admitting air into the battery pack, and the other serves as an air outlet for exhausting air out of the battery pack.

As shown in FIGS. 55 and 56, in some embodiments, when the battery pack and the heat dissipation fan are installed in place on the battery compartment 201, one of the first air hole and the second air hole is collinear with the air blowing direction of the heat dissipation fan.

In some embodiments, the air blowing direction of the heat dissipation fan is defined as a first direction. When the battery pack is installed inside the battery compartment 201, the orthographic projections of the airflow exchange portion 204, the first air hole, and the heat dissipation fan along the first direction at least partially overlap. In some embodiments, a ratio of an overlapping area between the orthographic projection of the airflow exchange portion 204 and the orthographic projection of the first air hole to the orthographic projection of the airflow exchange portion 204 ranges from 20% to 40%. For example, the ratio of the overlapping area between the orthographic projection of the airflow exchange portion 204 and the orthographic projection of the first air hole to the orthographic projection of the airflow exchange portion 204 is 20%, 30%, or 40%.

In some embodiments, a ratio of an area of the first air hole to an area of the airflow exchange portion 204 ranges from 0.5 to 2.0, for example, 0.5, 0.6, 1.2, or 1.9.

In some embodiments, when the battery pack is a first-type battery pack 205, its heat dissipation requirement is relatively low due to the small electric capacity, and a hole area of the first air hole is accordingly designed to be small. For example, the area ratio of the first air hole to the airflow exchange portion 204 is 0.5 or 0.6. When the battery pack is a second-type battery pack 206, it has a relatively high heat dissipation requirement due to the large electric capacity, and the hole area of the first air hole is accordingly designed to be large. For example, the area ratio of the first air hole to the airflow exchange portion 204 is 1.2 or 1.9.

As shown in FIGS. 52 to 54, in some embodiments, to save installation space and material cost, the battery compartment 201 of the present disclosure further includes a mounting portion. At least a part of the mounting portion is inside the battery compartment 201 and is configured as a mounting seat 224, and at least a part of the mounting portion is outside the battery compartment 201 and is configured as a mounting groove 207. The mounting seat 224 and the mounting groove 207 are of an integrated structure. A part of the mounting portion is designed as the mounting seat 224 for installing the battery pack, and the other part of the mounting portion is designed as the mounting groove 207 for installing the heat dissipation fan. This design not only saves space and material cost, but also shortens an installation distance between the heat dissipation fan and the battery pack. In this way, the heat dissipation fan can exhaust heat generated during charging and discharging of the battery pack in close proximity, thereby improving heat dissipation effect.

Please refer to FIGS. 86 to 89. In some embodiments, the present disclosure further provides an energy source system, including a battery compartment 201, a battery pack, and an inverter 2069. The battery pack is installed inside the battery compartment 201. The electrical connectors arranged on the battery pack are electrically connected to electrical connection terminals 220 disposed on the battery compartment 201, and the electrical connection terminals 220 are connected to the inverter 2069. The inverter 2069 can convert electric energy from the battery pack to supply power to other electrical loads, and can also convert mains electricity to charge the battery pack.

Please refer to FIGS. 56 and 86 to 89. In some embodiments, the battery compartment 201 of the energy source system according to the present disclosure is provided with a heat dissipation fan that generates airflow during operation. The battery pack is detachably mounted inside the battery compartment 201 and includes a battery housing 2065 and a plurality of battery cells 2068 accommodated within the battery housing 2065. The battery housing 2065 includes a first housing wall 2067 perpendicular to an axial direction of the battery cells 2068 and a second housing wall 2066 parallel to the axial direction of the battery cells 2068. The first housing wall 2067 is provided with a first air hole, and the second housing wall 2066 is provided with a second air hole. Airflow generated by the running heat dissipation fan can enter the battery housing 2065 through the first air hole, flow through the battery cells 2068, and then exit via the second air hole to discharge hot air inside the battery pack, thereby realizing heat dissipation of the battery pack.

In some embodiments, the battery compartment 201 of the energy source system is provided with an airflow exchange portion 204. The air blowing direction of the heat dissipation fan is collinear with the airflow direction passing through the airflow exchange portion 204 and the airflow direction passing through the second air hole. This configuration enables direct outward exhaust or inward air supply for the battery pack with a short airflow path free of detours, improving the heat dissipation efficiency of the battery pack.

In some embodiments, the battery compartment 201 of the energy source system includes two oppositely arranged side plates 216, each of which is provided with heat dissipation fans. The heat dissipation fans on one of the two side plates 216 are arranged in one-to-one correspondence with the heat dissipation fans on its opposite side plate 216. Along a direction perpendicular to an axial direction of the battery cells 2068, the second housing walls 2066 located at both ends of the battery housing 2065 are each provided with a second air hole, and the two opposite side plates 216 are each provided with an airflow exchange portion 204. When the battery pack is installed into the battery compartment 201, each second air hole align with a corresponding airflow exchange portion 204.

In some embodiments, the battery compartment of the energy source system is compatible with the first-type battery pack 205 and the second-type battery pack 206.

In some embodiments, the heat dissipation fans for dissipating heat from the battery pack are only disposed on a single side plate 216 of the battery compartment 201. In some embodiments, the heat dissipation fans on the single side plate 216 can blow air inward into the battery compartment 201, draw air outward from the battery compartment 201, or partially draw air outward and partially blow air inward. In some embodiments, a single side plate 216 of the battery compartment 201 is provided with 3 or 6 heat dissipation fans. Other quantities of heat dissipation fans are also permissible and can be set according to actual application requirements.

As shown in FIGS. 44, 63, and 64, in some embodiments, the outdoor working device of the present disclosure includes a vehicle frame 100 (also referred to as a frame 100). The frame 100 includes: a seat 400 configured for an operator to sit thereon; a traveling assembly 600 configured to support the travel of the outdoor working device, the traveling assembly 600 including a front traveling wheel 601 and a rear traveling wheel 602; a power output assembly 500 configured to perform outdoor working operations; a power supply device 200 configured to supply power to the outdoor working device. The frame 100 includes a first bearing section 101 at least configured to carry the seat 400, and a second bearing section 103 at least configured to carry the power supply device 200, wherein the first bearing section 101 and the second bearing section 103 have different heights.

As shown in FIGS. 44, 63 and 64, in some embodiments, the frame 100 is formed to have the first bearing section 101 and second bearing section 103 of differing heights, enabling the frame 100 to withstand greater impact loads.

As shown in FIGS. 44, 63, and 64, in some embodiments, a front portion of the frame 100 serves as the first bearing section 101 for mounting the operator seat 400, and a tail portion of the frame 100 carries the power supply device 200. When the second bearing section 103 is lower in height than the first bearing section 101, an overall center of gravity of the outdoor working device is lowered, enhancing operational stability during travel.

Furthermore, where vertical overhead space is limited, the tail portion of the frame 100 for mounting the power supply device 200 is designed with a recessed profile. This configuration maximizes a volume of the battery compartment 201 of the power supply device 200 within the limited space, enabling the battery compartment 201 to accommodate large-size, high-capacity battery packs and thereby extending the battery life of the outdoor working device.

As shown in FIG. 63, in some embodiments, a height difference h between the first bearing section 101 and the second bearing section 103 ranges from 100 mm to 150 mm, for example, 100 mm, 125 mm, and 150 mm.

As shown in FIG. 64, in some embodiments, the frame 100 is provided with a power supply fixing member 116 obliquely connected between the connection section 102 and the second bearing section 103. Specifically, the first bearing section 101 is higher than the second bearing section 103, such that the connection section 102 joining the first bearing section 101 and the second bearing section 103 is at least partially higher than the second bearing section 103. In some embodiments, the entire connection section 102 is higher than the second bearing section 103. In some embodiments, the power supply fixing member 116 is a flat plate, with one end overlapping the connection section 102 and the other end overlapping the second bearing section 103. This arrangement inclines a bottom surface of the power supply fixing member 116 toward a forward travel direction of the outdoor working device. The battery compartment 201 has a flat bottom surface. When placed on the inclined power supply fixing member 116, the opening of the battery compartment 201 tilts toward the rear of the outdoor working device. The rearward inclined opening facilitates the operator's access to replace the battery packs inside the battery compartment 201. The battery packs applicable to this embodiment include the aforementioned first-type battery pack 205 and second-type battery pack 206.

In some embodiments, the frame 100 is formed with the first bearing section 101 and a second bearing section 103 of differing heights, enabling the frame 100 to withstand greater impact loads.

As shown in FIGS. 44 and 63, in some embodiments, the vertical clearance between a lower surface of the first bearing section 101 and the ground ranges from 279 mm to 381 mm, for example, 279 mm, 300 mm, and 381 mm. Further, a ratio of the vertical clearance between the lower surface of the first bearing section 101 and the ground to a radius of the front traveling wheel 601 ranges from 2 to 3, for example, 2, 2.5, and 3.

In some embodiments, a vertical distance between the lower surface of the second bearing section 103 and the ground ranges from 228 mm to 366 mm, for example, 228 mm, 300 mm, and 366 mm. Further, a ratio of the vertical clearance between the lower surface of the second bearing section 103 and the ground to a radius of the rear traveling wheel 602 ranges from 1 to 1.2, for example, 1, 1.1, and 1.2.

As shown in FIGS. 44, 63, and 64, the second bearing section 103 is provided with a hitch 104 for towing an outdoor working device. Vertically, a distance between the hitch 104 and an axle center of the rear traveling wheel 602 ranges from 200 mm to 380 mm, for example, 200 mm, 300 mm, and 380 mm. This design prevents vehicle rollover during towing caused by an excessively high or low hitch point.

As shown in FIG. 63, in some embodiments, the present disclosure further includes a connection section 102 joining the first bearing section 101 and the second bearing section 103, the connection section 102 being arranged obliquely. An included angle α4 between the connection section 102 and the first bearing section 101 ranges from 10° to 30°, for example, 10°, 20° and 30°. The included angle α5 between the connection section 102 and the second bearing section 103 ranges from 10° to 30°, for example, 10°, 20°, and 30°.

It is understood that the first bearing section 101 and the second bearing section 103 may also be horizontally arranged, with the connection section 102 perpendicularly connected to both the first bearing section 101 and the second bearing section 103.

As shown in FIG. 20, in some embodiments, along an extension direction of the frame 100, a length ratio of the first bearing section 101, the connection section 102, and the second bearing section 103 satisfies L1:L2:L3 = (5~8):(6~10):(30~40). For example, L1:L2:L3 = 5:6:30, L1:L2:L3 = 6:8:35, and L1:L2:L3 = 8:10:40.

In some embodiments, the first bearing section 101, the second bearing section 103, and the connection section 102 form an integrated structure. An integral frame 100 delivers superior structural strength relative to a split frame and reduces overall assembly time for the outdoor working device.

In some embodiments, the connection section 102 and the first bearing section 101 form an integral structure, while the connection section 102 and the second bearing section 103 form a split structure. In some other embodiments, the connection section 102 and the first bearing section 101 form a split structure, while the connection section 102 and the second bearing section 103 form an integral structure. In some other embodiments, the connection section 102 is split from both the first bearing section 101 and the second bearing section 103. This split design facilitates disassembly of the frame 100 for transportation.

In some other embodiments, when the second bearing section 103 is higher than the first bearing section 101, a tail height of the frame 100 is increased. For operation on uneven terrain, particularly surfaces requiring repeated uphill and downhill travel, the elevated tail section of the frame 100 increases a departure angle of the frame 100 and improves the off-road passing capability of the outdoor working device.

As shown in FIGS. 65 and 71 to 75, in some embodiments, the outdoor working device of the present disclosure includes a frame 100. The frame 100 includes: a power supply device 200 at least configured to supply power to the outdoor working device; a power management device 219 disposed below the power supply device 200 and at least configured to control charging and discharging of the power supply device 200; a protective cover 106 at least configured to cover the power management device 219, wherein the protective cover 106 is arranged below the power management device 219 and provided with at least a first through-hole 108 and a second through-hole 110 for heat dissipation. The power management device 219 is arranged below the power supply device 200 and shielded by the protective cover 106 to prevent damage from liquid, hard foreign objects and other contaminants. Since the power management device 219 generates heat during operation, the first through-hole 108 and second through-hole 110 are formed on the protective cover 106 to dissipate heat from the power management device 219.

As shown in FIGS. 44 and 73 to 74, the cutting assembly of the outdoor working device is mounted under the frame 100, and the power management device 219 is disposed under the frame 100 and behind the cutting assembly. When the outdoor working device travels forward to cut vegetation, debris and residues are generated and thrown rearward, some of which may enter the protective cover 106 through the first through-hole 108 or second through-hole 110. Long-term accumulation of such debris impairs the heat dissipation performance of the power management device 219.

To address the above issues, in some embodiments of the present disclosure, a portion of the lower surface of the protective cover 106, specifically a section adjacent to the cutting assembly, is formed as a first inclined surface 107 sloping along the forward travel direction of the outdoor working device. The first through-hole 108 and the second through-hole 110 are arranged at the upper end and lower end of the first inclined surface 107, respectively. During forward travel of the outdoor working device, an airflow velocity passing through the first through-hole 108 outside the protective cover 106 is lower than an airflow velocity passing through the second through-hole 110. At least part of the debris entering the protective cover 106 via the first through-hole 108 can flow out through the second through-hole 110 under negative pressure. This configuration preserves ventilation of the protective cover 106 and leverages Bernoulli's principle to effectively expel debris entering via the first through-hole 108 out of the protective cover 106 through the second through-hole 110 via negative pressure.

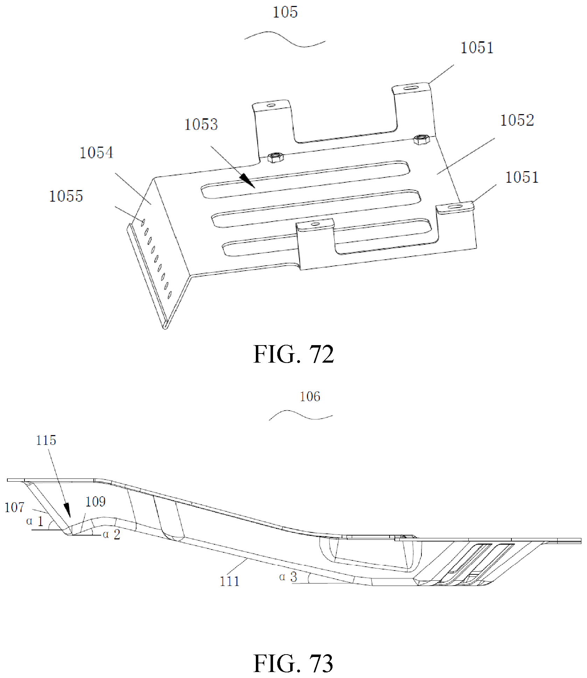

As shown in FIG. 73, in some embodiments, the included angle α1 between the first inclined surface 107 and a horizontal plane ranges from 40° to 85°, for example, 40°, 52°, and 85°. It should be noted that a larger included angle between the first inclined surface 107 and the horizontal plane creates a greater airflow velocity difference between the first through-hole 108 and the second through-hole 110, generating a larger pressure difference and stronger negative pressure at the second through-hole 110 for improved debris evacuation performance.

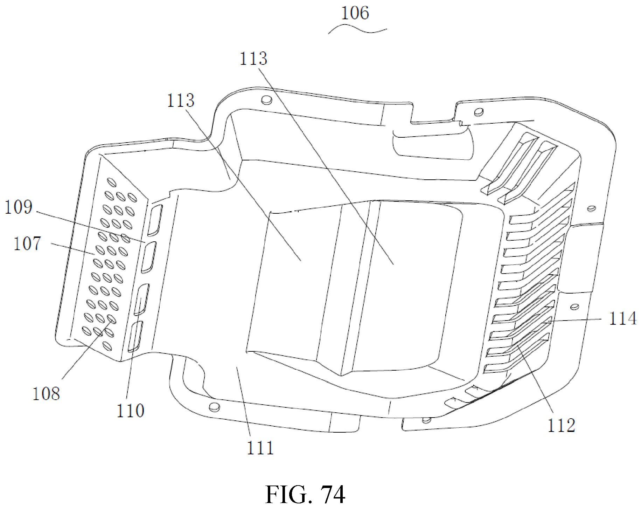

As shown in FIG. 74, in some embodiments, an area of the first through-hole 108 ranges from 60 mm² to 80 mm², for example, 60 mm², 70 mm², and 80 mm².

As shown in FIG. 74, an area of the second through-hole 110 is 3 times to 50 times (e.g., 3, 30, and 50 times) that of the first through-hole 108. The area of the first through-hole 108 is designed to be small, which minimizes debris ingress into the protective cover 106 while maintaining adequate ventilation and heat dissipation. The area of the second through-hole 110 is made larger than that of the first through-hole 108 to facilitate the discharge of debris that has entered the protective cover 106 through the enlarged second through-hole 110.

As shown in FIGS. 73 and 74, in some embodiments, the protective cover 106 is formed with a recessed groove 115 capable of collecting debris, and the second through-hole 110 is formed on a wall of the recessed groove 115. Specifically, the recessed groove 115 includes a second inclined surface 109 connected to the first inclined surface 107. A lower end of the second inclined surface 109 is connected to a lower end of the first inclined surface 107, and the second through-hole 110 located at a joint of the first inclined surface 107 and the second inclined surface 109. The second inclined surface 109 functions to block incoming debris, guiding debris having entered the recessed groove 115 toward the recessed groove 115, and limiting rearward migration within the protective cover 106.

As shown in FIG. 73, in some embodiments, an included angle α2 between the second inclined surface 109 and the horizontal plane ranges from 0° to 60°, for example, 0°, 30°, and 60°. A larger included angle α2 enhances a debris blocking effect of the second inclined surface 109 and reduces rearward debris migration inside the protective cover 106.

Please refer to FIGS. 73 and 74. In some embodiments, to discharge debris that fails to exit through the second through-hole 110 and migrates to a rear portion of the protective cover 106, the rear portion of the protective cover 106 is formed with a third inclined surface 111 connected to the second inclined surface 109 and sloping along the forward travel direction of the outdoor working device. An upper end of the third inclined surface 111 is connected to an upper end of the second inclined surface 109. Specifically, a third through-hole 114 is formed on the protective cover 106 at a lower end of the third inclined surface 111. During forward travel of the outdoor working device, the airflow velocity passing through the second through-hole 110 outside the protective cover 106 is lower than the airflow velocity passing through the third through-hole 114, such that at least part of the debris trapped inside the protective cover 106 can flow out through the third through-hole 114 under negative pressure. This facilitates evacuation of debris not discharged via the second through-hole 110. Two-stage negative pressure debris removal fully expels debris from the protective cover 106 while sustaining ventilation performance.

As shown in FIGS. 73 and 74, in some embodiments, an included angle α3 between the third inclined surface 111 and the horizontal plane ranges from 10° to 45°, for example, 10°, 13.65°, and 45°. The inclined structural design of the protective cover 106 accelerates airflow flowing from the first through-hole 108 toward the second through-hole 110. The accelerated airflow is further accelerated while traveling to the third through-hole 114, which creates a stronger negative pressure effect at the third through-hole 114 and enables more thorough evacuation of debris from the interior of the protective cover 106.

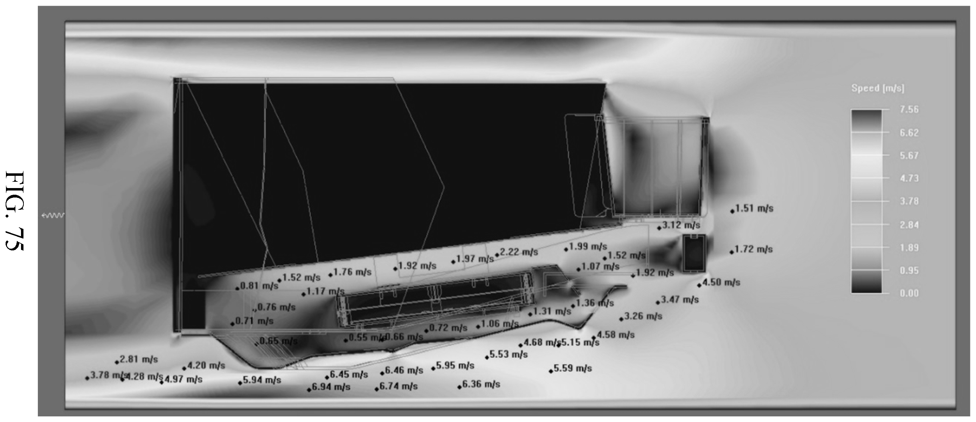

In some embodiments, as illustrated in FIG. 75, a fluid simulation is performed with an incoming airflow velocity of 3.6 m/s blowing from the front to the rear of the outdoor working device. The included angle between the first inclined surface 107 and the horizontal plane is set to 52°, and the included angle between the third inclined surface 111 and the horizontal plane is set to 13.65°. The airflow velocities adjacent to the first through-hole 108, the second through-hole 110, and the third through-hole 114 are measured as illustrated in the figure. At an incoming airflow velocity of 3.6 m/s on an outer side of the bottom of the protective cover 106, the airflow velocity near the first through-hole 108 is 3.26 m/s, the airflow velocity near the second through-hole 110 is 5.15 m/s, and the airflow velocity near the third through-hole 114 is 5.94 m/s. It is evident that under the incoming airflow velocity of 3.6 m/s, the airflow velocity near the third through-hole 114 is higher than that near the second through-hole 110, and the airflow velocity near the second through-hole 110 is higher than that near the first through-hole 108. This design leverages Bernoulli's principle (Bernoulli's principle states that for a fluid, low flow velocity corresponds to high pressure, while high flow velocity corresponds to low pressure. Applicable to all ideal fluids including liquids and gases, this principle is a fundamental characteristic of steady fluid flow and describes the inverse correlation between fluid pressure and flow velocity: the higher the flow velocity of a fluid, the lower its pressure; the lower the flow velocity of a fluid, the higher its pressure). Accordingly, the airflow velocity outside the protective cover 106 at the second through-hole 110 and the third through-hole 114 exceeds the airflow velocity inside the protective cover 106, generating an outward pressure gradient at the two through-holes. As the airflow circulates, negative pressure is formed to expel debris and other residues inside the protective cover 106 out through the second through-hole 110 and the third through-hole 114.

As shown in FIGS. 73 and 74, in some embodiments, the vertical heights of the first through-hole 108, second through-hole 110, and third through-hole 114 arranged on the protective cover 106 decrease sequentially. Specifically, the bottom surface of the protective cover 106 is mounted as an inclined surface on the frame 100, with the vertical heights of the first through-hole 108, second through-hole 110, and third through-hole 114 descending in order. Airflow velocity increases sequentially as it passes through the first through-hole 108, second through-hole 110, and third through-hole 114, producing stronger negative pressure at the second through-hole 110 and third through-hole 114 than at the first through-hole 108. This aids evacuation of debris entering via the first through-hole 108 through the second through-hole 110 and third through-hole 114, reduces internal debris accumulation inside the protective cover 106, and optimizes heat dissipation for the power management device 219 housed within.

As shown in FIGS. 73 and 74, in some embodiments, the vertical heights of lowest edges of the first through-hole 108, second through-hole 110, and third through-hole 114 decrease sequentially along the vertical direction. Where debris mass is high and negative pressure delivers limited evacuation performance, the sequentially lowered minimum edge heights leverage vibration generated during operation of the outdoor working device to discharge heavy debris. To discharge large-volume debris, the areas of the second through-hole 110 and third through-hole 114 are designed to be relatively large, such that the vertical heights of the upper edges of the second through-hole 110 and the third through-hole 114 are greater than that of the first through-hole 108.

As shown in FIG. 74, in some embodiments, the third through-hole 114 is formed as an elongated slot structure.

As shown in FIG. 74, in some embodiments, the protective cover 106 is formed with a recessed portion 112 close to the lower end of the third inclined surface 111, and the third through-hole 114 is formed on one side wall of the recessed portion 112. Specifically, the recessed portion 112 is indented inward from the outer surface of the protective cover 106 and defined by one bottom surface and multiple side walls, with the third through-hole 114 arranged on a single side wall thereof. This configuration prevents liquid splashing directly onto the power management device through the third through-hole 114 and blocks impact from hard foreign objects to avoid damage to the power management device 219.

In some embodiments, multiple recessed portions 112 are provided to enhance heat dissipation performance, with a corresponding third through-hole 114 formed on each recessed portion 112. Multiple third through-holes 112 further improve a success rate of debris evacuation. Furthermore, the third through-holes 114 formed on at least some recessed portions 112 face different directions. Specifically, the recessed portions 112 are arranged on the outer side of the rear of the power management device 219, and the third through-holes 114 are configured to face away from the power management device 219. This orientation prevents liquid or hard objects entering the third through-holes 114 from splashing or striking the power management device 219 to cause damage.

As shown in FIGS. 66 and 71 to 74, in some embodiments, the frame 100 is fitted with a power supply fixing member 116. The power supply device 200 includes a battery compartment 201 for installing battery packs, which is fixed above the power supply fixing member 116. A power management fixing bracket 105 is mounted below the power supply fixing member 116, and the power management device 219 is installed on the power management fixing bracket 105. Through the power management fixing bracket 105, the power management device 219 is mounted below the battery pack with a predetermined clearance, facilitating independent heat dissipation of both the battery pack and the power management device 219 without mutual thermal interference.

As shown in FIGS. 66 and 67, in some embodiments, the power management fixing bracket 105 includes fixing feet 1051 and a fixing plate 1052 connected to each other. The fixing feet 1051 are configured to be fixed to the power supply fixing member 116, and the fixing plate 1052 is configured to support mounting of the power management device 219. The fixing plate 1052 is provided with ventilation holes 1053 to promote airflow circulation and dissipate heat from the upper surface of the power management device 219. A front baffle 1054 is provided at and extends downward from a front section of the fixing plate 1052, to protect the power management device 219. The front baffle 1054 is further provided with baffle openings 1055 to be opposite to the power management device 219. During forward travel of the outdoor working device, airflow enters the baffle openings 1055 to create a circulating airflow field below the power management fixing bracket 1052 and improve heat dissipation for the power management device 219.

Please refer to FIGS. 48 to 51, 66, and 68 to 69. In some embodiments, to optimize a structural layout, the battery compartment 201 of the present disclosure includes two oppositely disposed side plates 216 each fitted with electrical connection terminals 220 for connecting the battery packs. The power management device 219 is positioned below the battery compartment 201 and located between the two side plates 216 along the front-rear direction of the outdoor working device. This layout allows the power management device 219 to be electrically connected directly upward via wiring harnesses to the electrical connection terminals 220 on the two side plates 216. Mounting the power management device 219 between the two side plates 216 carrying the electrical connection terminals 220 shortens a wiring harness length required for electrical connection with the terminals 220, reducing wiring material consumption and reserved routing space.

Please refer to FIGS. 48 to 51 and 66. In some embodiments, each of the two side plates 216 of the battery compartment 201, arranged along the front-rear direction of the outdoor working device, is fitted with three electrical connection terminals 220. Correspondingly, a front portion of the power management device 219 is provided with interfaces 217 connected to the electrical connection terminals 220 on the front side of the battery compartment 201, and a rear portion of the power management device 219 is provided with interfaces 217 connected to the electrical connection terminals 220 on the rear side of the battery compartment 201. This layout optimizes spatial routing of wiring harnesses for connecting the electrical connection terminals to the power management device 219, and the battery pack can establish electrical communication with the power management device 219 via the electrical connection terminals 220.

Please refer to FIGS. 48 to 51. In some embodiments, an airflow generator 2031 (heat dissipation fan) is disposed below each electrical connection terminal 220. Each airflow generator 2031 is directly connected downward to the power management device 219 via wiring harnesses, reducing wiring material consumption, cutting raw material costs, and delivering a more rational overall layout for the outdoor working device.

Please refer to FIG. 71. In some embodiments, the interfaces 217 on the front portion of the power management device 219 can be connected to the vehicle control module, airflow generators 2031, and electrical connection terminals 220 via cables 222, with their connection heights greater than the height of the front interfaces 217 of the power management device 219. A height of the interfaces 217 on the front portion of the power management device 219 is higher than a bottommost end of the front baffle 1054. The cables 222 pass through the bottommost end of the front baffle 1054 and connects to the interfaces 217 on the front portion of the power management device 219, such that a lowest point of the cable 222 lies beneath the bottommost end of the front baffle 1054. This design positions the lowest point of the cables 222 below the bottommost end of the front baffle 1054. Since the connection points between the cables 222 and the vehicle control module, airflow generators 2031, and electrical connection terminals 220 are higher than the interfaces 217 on the front portion of the power management device 219, liquid adhering to the cables 222 cannot flow downward along the cables 222 into the power management device 219, preventing moisture ingress and delivering effective protection for the power management device 219.

As shown in FIGS. 48 to 51 and 66, further, the battery compartment 201 includes two oppositely disposed side plates 216 each fitted with heat dissipation fans for dissipating heat from the battery pack. Horizontally, the power management device 219 is positioned between the two side plates 216, and can be electrically connected to the heat dissipation fans mounted on the two side plates 216 via wiring harnesses, respectively. This layout rationally minimizes a wiring harness length required for connection between the power management device 219 and the heat dissipation fans.

As shown in FIGS. 44, 66, 71, and 74, in some embodiments, the lower surface of the power management device 219 inclines toward a forward travel direction of the outdoor working device. During forward travel of the outdoor working device, this inclined lower surface increases a contact area between the power management device 219 and airflow entering through the first through-hole 108, improving heat dissipation efficiency for the power management device 219.

Further, the protective cover 106 is fixed to the frame 100 and detachably connected to the frame via screw fasteners for convenient assembly and disassembly.

As shown in FIGS. 44, 65 and 71, in some embodiments, an outdoor working device according to the present application includes a frame 100, a power management device 219, and a protective cover 106. The frame 100 carries a power supply device 200 at least configured to supply power to the outdoor working device. The power management device 219 is fixed below the frame 100 and is configured to control charging and discharging of the power supply device 200. The protective cover 106 is disposed below the power management device 219. A bottom surface of the power supply device 200, the frame 100, and the protective cover 106 collectively form an enclosed protective cavity surrounding the power management device 219, to shield the power management device 219 from damage caused by external liquid or solid contaminants.

As shown in FIG. 74, two interconnected protruding ribs 113 project inward from the bottom surface of the protective cover 106. The protruding ribs 113 reinforce a structural strength of the protective cover 106 and reduce excess internal cavity volume. Positioned between the second through-hole 110 and third through-hole 114, the protruding ribs 113 guide incoming debris toward the third through-hole 114 for evacuation and limit debris accumulation inside the protective cover 106.

As shown in FIGS. 44, 76, and 78, in some embodiments, the present disclosure includes a frame 100, a power output assembly 500, a seat 400, a power supply device 200, rear cover 210, a reversing radar 213, and rear lamp 214. The frame 100 carries a traveling assembly 600 configured to support travel of the outdoor working device. The power output assembly 500 is configured to perform outdoor working operations. The seat 400 is configured for an operator to sit thereon. The power supply device 200 is configured to supply power to the outdoor working device fitted with a rear cover 210. The rear cover 210 is mounted on the power supply device 200, and is at least fitted with a reversing radar 213 for monitoring a rear area of the outdoor working device during reverse travel. The rear lamp 214 is at least configured to display an operating status of the outdoor working device fitted with the rear cover 210.

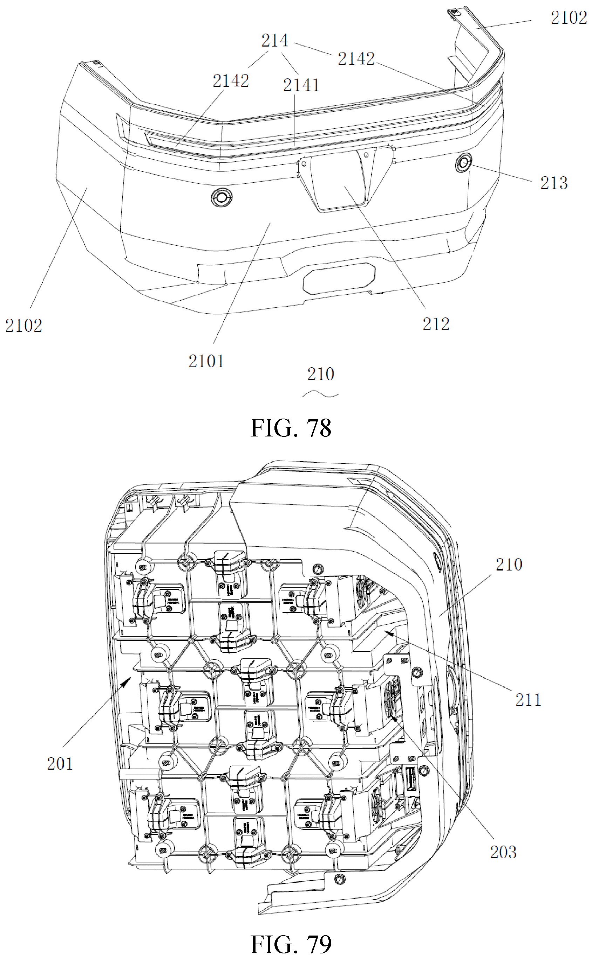

As shown in FIG. 78, in some embodiments, the rear cover 210 includes a main panel 2101 arranged at a rear of the outdoor working device and two auxiliary side panels 2102 that are connected to the main panel 2101 and arranged on two lateral sides of the outdoor working device. The power supply device 200 includes a battery compartment 201 for installing battery packs. The battery compartment 201 includes a rear panel for mounting heat dissipation fans and two side panels connected to the rear panel. The main panel 2101 aligns with the rear panel of the battery compartment 201, and the auxiliary side panels 2102 align with the side panels of the battery compartment 201. This arrangement fully encloses and protects the rear and lateral sides of the battery compartment 201 via the rear cover 210, mitigating direct impact damage to the battery compartment 201 and internal battery packs during collisions, while delivering a streamlined, aesthetic rear profile for the entire outdoor working device.

As shown in FIG. 78, in some embodiments, the rear lamp 214 includes a main lamp section 2141 disposed on the main panel 2101 and auxiliary lamp sections 2142 extending from both ends of the main lamp section 2141 to the auxiliary side panels 2102. This lamp layout enables the operator to observe the operating state of the rear lamp 214 from two lateral sides and the rear of the outdoor working device. The operator can directly view rear lamp flashing from multiple positions to confirm whether the battery pack is properly installed in the battery compartment 201.

As shown in FIG. 79, the power supply device 200 includes the battery compartment 201 for installing the battery packs, with the rear cover 210 connected to the battery compartment 201. An accommodation cavity 211 is formed between the rear cover 210 and the battery compartment 201, and the reversing radar 213 is placed in the accommodation cavity 211 for protective shielding.

As shown in FIG. 68, in some embodiments, a radar controller 2235 electrically connected to the reversing radar 213 is further mounted externally on the battery compartment 201, the radar controller 2235 configured to receive and process signal data from the reversing radar 213.

In some embodiments, the power management device 219 is arranged below the power supply device 200. The rear lamp 214 and radar controller 2235 are mounted on the power supply device 200 and are directly connected via wiring harnesses to the power management device 219 located below, receiving electric power and control command signals from the power management device 219.

As shown in FIG. 79, in some embodiments, one side plate 216 of the battery compartment 201 is provided with a heat dissipation fan for dissipating heat from the battery pack. The accommodation cavity 211 is formed between the rear cover 210 and the battery compartment 201, and the heat dissipation fan and wiring harnesses connecting the heat dissipation fan are housed within the accommodation cavity 211. This design reserves sufficient airflow circulation space for the heat dissipation fan while shielding the heat dissipation fan and wiring harnesses from contamination by external debris.

As shown in FIGS. 64 and 79, in some embodiments, a battery pack is installed inside the battery compartment 201, a charging connector 218 is provided on an outer surface of the battery compartment 201, and a power management device 219 is disposed below the battery compartment 201. The charging connector 218 is electrically connected to the power management device 219 disposed located below via wire harnesses for electrical signal transmission. The power management device 219 is electrically connected to the battery pack via the electrical connection terminals 220 arranged on the battery compartment 201. When a charging gun is plugged into the charging connector 218, the power management device 219 charges the battery pack via the electrical connection terminals 220 on the battery compartment 201. Such an arrangement improves wiring harness layout.

As shown in FIG. 64, in some embodiments, the charging connector 218 is mounted at an inclined angle relative to the horizontal plane, with the included angle ranging from 0° to 90°, for example, 45° and 60°. The 45° and 60° inclined angles facilitate plugging and unplugging of the charging gun by the operator.

Please refer to FIGS. 64, 67 and 78. In some embodiments, the battery compartment 201 is provided with a mounting base 223 for installing the charging connector 218. The rear cover 210 is mounted on the mounting base 223, and the rear cover 210 is provided with a charging clearance opening 212 exposing the charging connector 218. The charging connector 218 extends through the charging clearance opening 212 of the rear cover 210 to be connected with the charging gun.

Please refer to FIG. 67. In some embodiments, the mounting base 223 includes a mounting surface 2231 facing a rear upper side of the outdoor working device. The mounting surface 2231 is provided with a through-hole. The charging connector 218 is provided with a mounting flat plate 2181, with the charging connector 218 arranged on both sides of the mounting flat plate 2181. During assembly, one end of the charging connector 218 passes through the through-hole, such that the mounting flat plate 2181 is attached closely to the mounting surface 2231, after which the mounting flat plate 2181 and the mounting surface 2231 are fastened via screw fasteners. Since the mounting surface 2231 faces the rear upper side of the outdoor working device the outdoor working device, this arrangement allows the charging connector 218 to be obliquely disposed at an angle toward the rear upper side of the outdoor working apparatus when the charging connector 218 is mounted on the mounting surface 2231, so as to facilitate connection with the charging gun.

Please refer to FIG. 67. In some embodiments, the included angle between the mounting surface 2231 and the horizontal plane ranges from 0° to 90°, for example, 45° and 60°. This allows the charging connector 218 mounted on the mounting surface 2231 to tilt rearward at an angle of 45° or 60°. Such an angular arrangement is reasonably configured to facilitate plugging and unplugging of the charging gun by an operator.

As shown in FIG. 67, further, the mounting base 223 further includes a first panel 2237 connected to the mounting surface 2231 and a second panel 2238 connected to the first panel 2237. The first panel 2237 and second panel 2238 are arranged on an inner side below the mounting surface 2231 to provide structural support for the mounting surface 2231 with minimal spatial occupation.

In some embodiments, the temperature adjustment assembly 203 is configured to correspond to one mounting base 223. To avoid obstructing air intake or exhaust of the temperature adjustment assembly 203, vent holes 2232 are formed on a side surface of each of the first panel 2237, the second panel 2238, and the mounting surface 2231, to facilitate air circulation for the temperature adjustment assembly 203.

As shown in FIG. 24, in some embodiments, a connection portion 2233 is further provided under the second panel 2238. The connection portion 2233 is configured to be connected to the power supply fixing member 116, enhancing mounting stability of the mounting base 223.

As shown in FIG. 67, in some embodiments, a connection auxiliary plate 2234 is arranged on a side surface of the mounting base 223. The radar controller 2235 is mounted on the connection auxiliary plate 2234. The radar controller 2235 is electrically connected to the reversing radar 213.

As shown in FIG. 67, in some embodiments, the mounting surface 2231 is further provided with mounting holes 2236. The rear cover 210 is provided with openings matching the mounting holes 2236. Bolt fasteners are inserted through the openings and the mounting holes 2236 to fix the rear cover 210 to the mounting base 223 for fixed installation.

As shown in FIG. 67, in some embodiments, the rear lamp 214 is arranged above the rear cover 210. The charging connector 218 is arranged under the rear lamp and at a center of the rear cover 210. The reversing radars 213 are mounted on two sides of the charging connector 218 at substantially the same vertical height as the charging connector 218.

In some embodiments, the reversing radar 213 may be directly mounted on the battery compartment 201, on the frame 100, or alternatively on the seat 400, with the mounting seat selected and designed according to actual application requirements.

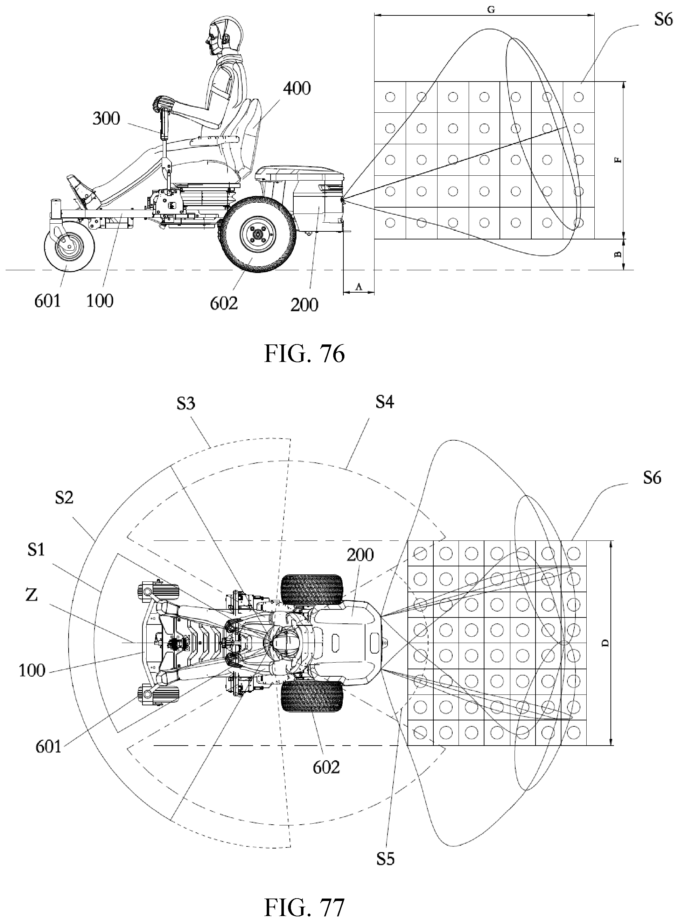

As shown in FIGS. 76 and 77, ergonomic analysis shows that the frame 100 is symmetrically arranged on the left and right sides about a center line Z extending along a length of the frame 100 in the horizontal direction, and the center of the seat 400 lies on the center line Z. When an operator is seated stationary on the outdoor working device, an optimal viewing zone spans approximately 30° to the left and 30° to the right of the center line Z directly in front of the operator (the included angle of zone S1 is 60°). A normal clear binocular viewing zone covers roughly 60° on each side of the center line Z (the included angle of zone S2 is 120°). A zone with an included angle ranging from 60° to 95° on a single side (zone S3) corresponds to a blurred visible area.

The operator maintains continuous motion during vehicle operation, reducing an effective visual perception angle relative to static conditions. The 120° binocular clear viewing zone is adopted as a reference parameter per ergonomic theory. Vision simulation diagrams confirm that when an operator performs normal working operations with hands on the operating assembly 300, the maximum total clear vision zone accessible via left and right head rotation spans 300° (zone S4), leaving a 60° angular blind spot directly to the rear of the vehicle (zone S2).

As shown in FIGS. 76 and 77, to compensate for the 60° rear blind spot of the vehicle, in some embodiments, the outdoor working device of the present disclosure includes a frame 100, a traveling assembly 600, a cutting assembly, a seat 400, and a detection assembly. The traveling assembly 600 is mounted on the frame 100 and is configured to support travel of the outdoor working device. The cutting assembly is mounted on the frame 100 and is configured to cut vegetation. The seat 400 is mounted on the frame 100 and is configured for an operator to sit thereon. When operating the outdoor working device on the seat 400, the operator's horizontal vision field covers at least the front and both lateral sides of the device over a total angular range of 300°. The detection assembly is mounted at a rear of the outdoor working device, the detection assembly covering a horizontal detection angle of at least 60°. Collectively, the operator's vision field and the detection assembly's sensing range provide full 360° angular coverage surrounding the outdoor working device in the horizontal plane.

As shown in FIG. 77, in some embodiments, a spatial region (denoted as S6) at least detected by the detection assembly has a length ranging from 1.4 m to 1.6 m, a width ranging from 1.5 m to 1.7 m, and a height ranging from 1.1 m to 1.3 m. For example, the spatial region (denoted as S6) at least detected by the detection assembly has a length of 1.4 m, 1.5 m and 1.6 m, a width of 1.5 m, 1.6 m and 1.7 m, and a height of 1.1 m, 1.2 m and 1.3 m.

As shown in FIG. 76, in some embodiments, a horizontal distance A between the sensed spatial region (S6) and the outdoor working device ranges from 100 mm to 250 mm, for example, 100 mm, 180 mm and 250 mm.

As shown in FIG. 76, in some embodiments, a vertical distance B between the sensed spatial region (S6) and a working surface ranges from 100 mm to 200 mm, for example, 100 mm, 150 mm and 200 mm.

As shown in FIG. 78, in some embodiments, the detection assembly includes reversing radars 213, with two reversing radars 213 arranged on each lateral side of the central axis. A distance between the two reversing radars 213 ranges from 350 mm to 400 mm, for example, 360 mm.

As shown in FIGS. 44 and 76, in some embodiments, a height of the reversing radars 213 relative to the ground ranges from 320 mm to 360 mm, for example, 320 mm, 340 mm, and 360 mm. This height configuration allows the reversing radars to cover short children and small animals to prevent accidental collision injuries.

It should be noted that the battery compartment 201 is further provided with a radar controller 2235 for controlling the reversing radars 213 The radar controller 2235 receives signal data from the reversing radars 213, is connected to the vehicle control module via CAN (Controller Area Network) bus signals, and transmits control commands to trigger a vehicle alarm system (an audible warning) to alert the operator and prevent collision incidents.

The radar controller 2235 may be connected to the vehicle control module via the power management device 219.

As shown in FIGS. 82 and 82, in some embodiments, the outdoor working device includes a frame 100, and a traveling assembly 600, a power output assembly 500, a seat 400, a power supply device 200, and a storage box 700 that are arranged on the frame 100. The traveling assembly 600 is configured to support travel of the outdoor working device. The power output assembly 500 is configured to perform outdoor working operations. The seat 400 is configured for an operator to sit thereon. The power supply device 200 is configured to supply power to the outdoor working device. The storage box 700 is arranged between the seat 400 and the power supply device 200. Mounting the storage box 700 in a gap between the seat 400 and power supply device 200 utilizes otherwise wasted spatial volume. Positioned adjacent to the seat 400, the storage box 700 provides convenient operator access to tools and other stored articles during operation of the outdoor working device.

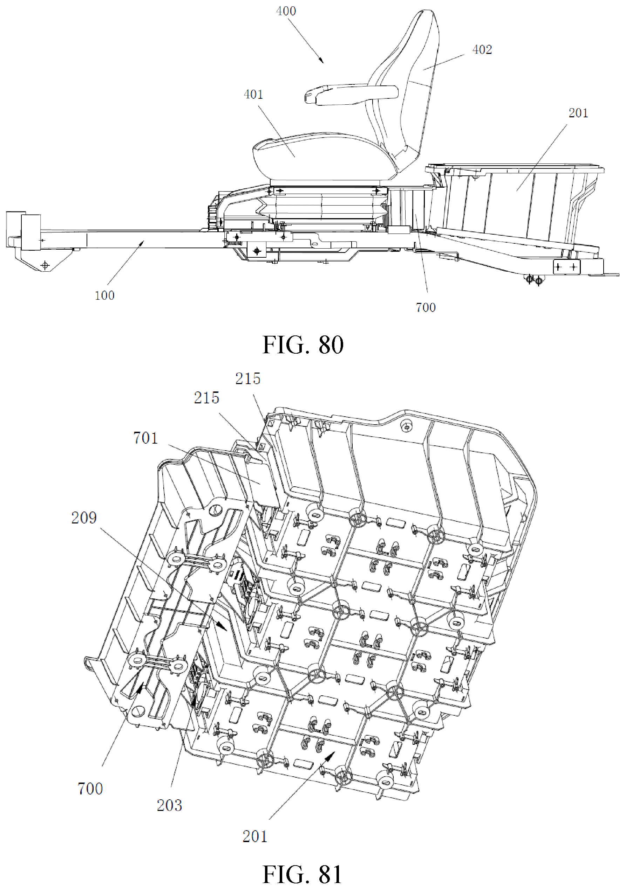

As shown in FIGS. 81 and 82, in some embodiments, the storage box 700 is positioned adjacent to one end of the power supply device 200, with two extension plates 701 respectively protruding laterally from two sides of the storage box 700. The two lateral extension plates 701 overlap the power supply device 200 to form an enclosed accommodation cavity 209. Since the heat dissipation fans are mounted on the battery compartment 201, the accommodation cavity 209 is configured to form a ventilation channel for exhausting heat generated by the battery packs housed inside the battery compartment 201 to facilitate heat dissipation. In addition, wiring harnesses connected to the heat dissipation fans can be routed within the accommodation cavity 209 for protective shielding.

As shown in FIG. 81, in some embodiments, the power supply device 200 includes a battery compartment 201 including multiple reinforcing ribs 215 on its outer wall. Each lateral extension plate 701 overlaps a corresponding one of the reinforcing ribs 215.

As shown in FIG. 80, in some embodiments, the seat 400 includes a cushion section 401 and a backrest section 402. A sliding rail arranged along the front-rear direction of the frame 100 are mounted between the frame 100 and the seat 400, enabling the seat 400 to slide forward and backward along the rail. When the seat 400 slides to a rearmost position on the rail, at least a portion of the backrest section 402 is positioned directly above the storage box 700. This arrangement can cover items stored within the storage box 700 to a degree and reduces ejection of the stored items caused by vibration during vehicle travel.

As shown in FIG. 80, in some embodiments, the storage box 700 is positioned vertically below the seat 400, to avoid interfering with forward and backward sliding adjustment of the seat 400.

In some embodiments, an opening of the storage box 700 is provided with a box cover to block ingress of external debris and prevent contamination or damage to the items stored within the storage box 700.

As shown in FIG. 80, in some embodiments, the storage box 700 is detachably mounted on the frame 100 without creating assembly interference during installation or removal of the seat 400 or power supply device 200.

It is understood that the storage box 700 may be configured to accommodate battery packs for powering the outdoor working device. To extend vehicle battery life and expand a maximum working area per charge, the storage box 700 can be equipped with an auxiliary battery pack connected via wiring harnesses to the power management device 219. The power management device 219 controls charging and discharging cycles of the auxiliary battery pack. The battery pack installed inside the storage box 700 may function as a backup power source. In such a case, when the primary power inside the battery compartment 201 is depleted or nearly exhausted, the auxiliary battery pack inside the storage box 700 supplies power to return the outdoor working device to a service station or sustain continuous working operations. The auxiliary battery pack inside the storage box 700 may also supply power to the aforementioned temperature adjustment assembly 203 to reduce power consumption load on the first-type battery pack 205 and second-type battery pack 206.

In some embodiments, an internal volume of the storage box 700 ranges from 3 liters (L) to 20 L, for example, 3 L, 6.6 L, and 20 L.

As shown in FIG. 82, in some embodiments, the storage box 700 is provided with a charging port 702 electrically connected to the battery pack inside the battery compartment 201 and/or to the auxiliary battery pack housed inside the storage box 700. The charging port 702 can supply power to 3C consumer electronics such as mobile phones and music players, or provide power output for other garden tools.

The present disclosure is not limited to the specific embodiments described above. A person of ordinary skill in the art can readily conceive numerous alternative configurations for the outdoor garden lawn mower of the present disclosure without departing from the spirit and scope of the present disclosure. The protection scope of the present application shall be defined by the appended claims

## Claims

1. An outdoor garden lawn mower, **characterized by** comprising:
a main frame;
a cutting assembly configured to cut vegetation;
a traveling assembly configured to support the outdoor garden lawn mower to move along a first straight direction;
an operating assembly configured for a user to operate to control traveling of the outdoor garden lawn mower; and
a power supply device, comprising:
one or more first-type battery packs configured to supply power to at least one of the cutting assembly or the traveling assembly,
one or more second-type battery packs configured to supply power to the at least one of the cutting assembly or the traveling assembly, and
a battery compartment configured to accommodate the first-type battery packs and/or the second-type battery packs,
wherein a plurality of electrical connection terminals are provided inside the battery compartment, at least one of the plurality of electrical connection terminals is configured to match at least one of the first-type battery packs or the second-type battery packs, such that one or more electrical connectors of the first-type battery packs and/or one or more electrical connectors of the second-type battery packs are electrically connected to the plurality of electrical connection terminals, providing an energy source for the outdoor garden lawn mower to perform a predetermined outdoor task;
wherein the cutting assembly, the traveling assembly, the operating assembly, and the power supply device are provided on the main frame.

2. The outdoor garden lawn mower according to claim 1, **characterized in that** the battery compartment comprises a first side wall and a second side wall arranged opposite to each other, and
the plurality of electrical connection terminals comprise at least one pair of electrical connection terminals, wherein the at least one pair of electrical connection terminals are respectively arranged on the first side wall and the second side wall, and are configured to be detachably electrically connected to the first-type battery packs and/or the second-type battery packs.

3. The outdoor garden lawn mower according to claim 2, **characterized in that**:
each pair of the electrical connection terminals arranged on the first side wall and the second side wall is configured to be electrically connected to two of the first-type battery packs; or
each pair of the electrical connection terminals arranged on the first side wall and the second side wall is configured to be electrically connected to one of the second-type battery packs.

4. The outdoor garden lawn mower according to claim 3, **characterized in that** each first-type battery pack is provided with one of the electrical connector and is configured to be connected to one of each pair of the electrical connection terminals; or
each second-type battery pack is provided with two of the electrical connectors arranged on opposite sides of the second-type battery pack, wherein one of the two electrical connectors is configured to be connected to one of each pair of the electrical connection terminals, and an other one of the two electrical connectors is configured to be connected to an other one of each pair of the electrical connection terminals.

5. The outdoor garden lawn mower according to claim 2, **characterized in that**, along a direction perpendicular to or parallel to the first straight direction, orthographic projections of each pair of the electrical connection terminals respectively arranged on the first side wall and the second side wall of the battery compartment at least partially overlap with each other.

6. The outdoor garden lawn mower according to claim 2, **characterized in that** along a direction perpendicular to or parallel to the first straight direction, orthographic projections of each pair of the electrical connection terminals respectively arranged on the first side wall and the second side wall of the battery compartment are spaced apart from each other.

7. The outdoor garden lawn mower according to claim 1, **characterized in that** the battery compartment comprises a first battery compartment for accommodating the first-type battery packs and a second battery compartment for accommodating the first-type battery packs and/or the second-type battery packs.

8. The outdoor garden lawn mower according to claim 7, **characterized in that** the first battery compartment and the second battery compartment are isolated from each other, and the first battery compartment is located outside the second battery compartment.

9. The outdoor garden lawn mower according to claim 1, **characterized in that** the battery compartment further comprises a third side wall and a fourth side wall arranged opposite to each other,
wherein at least a portion of the third side wall of the battery compartment protrudes away from the fourth side wall to form an auxiliary compartment, the auxiliary compartment being configured to accommodate the first-type battery packs or the second-type battery packs, and
a terminal mounting base is provided on a side of the fourth side wall close to the third side wall, the terminal mounting base being at least used for mounting the electrical connection terminals.

10. The outdoor garden lawn mower according to claim 1, **characterized by** further comprising a battery compartment bottom plate provided on the main frame and configured for mounting the battery compartment, and
a battery management module electrically connected to the first-type battery packs and/or the second-type battery packs is provided on a side of the battery compartment bottom plate facing away from the battery compartment.

11. The outdoor garden lawn mower according to claim 1, **characterized by** further comprising a battery compartment bottom plate provided on the main frame and configured for mounting the battery compartment, and
a battery management module electrically connected to a the first-type battery packs and/or the second-type battery packs is provided between the battery compartment bottom plate and the battery compartment.

12. The outdoor garden lawn mower according to claim 1, **characterized in that** the main frame extends along the first straight direction.

13. The outdoor garden lawn mower according to claim 1, **characterized in that** the battery compartment is provided with a groove, and the first-type battery pack and/or the second-type battery pack are configured to be detachably inserted into the groove along a second straight direction.

14. The outdoor garden lawn mower according to claim 13, **characterized in that** the first straight direction intersects with the second straight direction.

15. The outdoor garden lawn mower according to claim 13, **characterized in that** an angle between the first straight direction and the second straight direction is less than 60 degrees.

16. The outdoor garden lawn mower according to claim 1, **characterized in that** a plurality of the first-type battery packs and/or a plurality of the second-type battery packs are provided in the battery compartment, and insertion directions of at least two of the plurality of first-type battery packs and/or the plurality of second-type battery packs into the battery compartment are different.

17. The outdoor garden lawn mower according to claim 1, **characterized in that** a plurality of the first-type battery packs and/or a plurality of the second-type battery packs are provided in the battery compartment, and the plurality of the first-type battery packs and/or the plurality of the second-type battery packs are arranged at different heights.

18. An outdoor garden lawn mower, **characterized by** comprising:
a main frame;
a cutting assembly configured to cut vegetation;
a traveling assembly configured to support the outdoor garden lawn mower to move;
an operating assembly configured for a user to operate to control traveling of the outdoor garden lawn mower; and
a power supply device, comprising:
one or more first-type battery packs configured to supply power to at least one of the cutting assembly or the traveling assembly,
one or more second-type battery packs configured to supply power to the at least one of the cutting assembly or the traveling assembly, and
a battery compartment configured to accommodate the first-type battery packs and/or the second-type battery packs,
wherein a plurality of electrical connection terminals are provided inside the battery compartment, the plurality of electrical connection terminals are configured to be electrically connected to one or more electrical connectors of the first-type battery packs and/or one or more electrical connectors of the second-type battery packs respectively, and the first-type battery packs and the second-type battery packs have different electrical capacities;
wherein the cutting assembly, the traveling assembly, the operating assembly, and the power supply device are provided on the main frame.

19. The outdoor garden lawn mower according to claim 18, **characterized in that** the electrical capacity of each first-type battery pack is greater than or equal to 90 Wh and less than or equal to 1000 Wh, and the electrical capacity of each second-type battery pack is greater than or equal to 1000 Wh.

20. The outdoor garden lawn mower according to claim 18, **characterized in that** the battery compartment comprises a first side wall and a second side wall arranged opposite to each other,
the plurality of electrical connection terminals comprise at least one pair of electrical connection terminals, wherein the at least one pair of electrical connection terminals is respectively arranged on the first side wall and the second side wall, and is configured to be detachably electrically connected to the first-type battery packs and/or the second-type battery packs.

21. The outdoor garden lawn mower according to claim 18, **characterized in that** the battery compartment comprises a first battery compartment for accommodating the first-type battery packs and a second battery compartment for accommodating the first-type battery packs and/or the second-type battery packs.

22. The outdoor garden lawn mower according to claim 18, **characterized in that** the battery compartment further comprises a third side wall and a fourth side wall arranged opposite to each other,
wherein at least a portion of the third side wall of the battery compartment protrudes away from the fourth side wall to form an auxiliary compartment, the auxiliary compartment being configured to accommodate the first-type battery packs or the second-type battery packs, and
a terminal mounting base is provided on a side of the fourth side wall close to the third side wall, the terminal mounting base being at least used for mounting the electrical connection terminals.

23. The outdoor garden lawn mower according to claim 18, **characterized in that** a volume ratio of each first-type battery pack to each second-type battery pack is 0.01 to 0.99.

24. The outdoor garden lawn mower according to claim 18, **characterized in that** energy density of each first-type battery pack is greater than or equal to 200 Wh/kg and less than or equal to 500 Wh/kg, and energy density of each second-type battery pack is greater than or equal to 100 Wh/kg and less than or equal to 250 Wh/kg.

25. The outdoor garden lawn mower according to claim 18, **characterized in that** discharge power of each first-type battery pack is greater than or equal to 2000 W and less than or equal to 4350 W, and discharge power of each second-type battery pack is greater than or equal to 3500 W and less than or equal to 6960 W.

26. The outdoor garden lawn mower according to claim 18, **characterized in that** direct current impedance of each first-type battery pack is greater than direct current impedance of each second-type battery pack.

27. The outdoor garden lawn mower according to claim 18, **characterized in that** direct current impedance of each first-type battery pack is greater than or equal to 70 mΩ and less than or equal to 280 mΩ, and direct current impedance of each second-type battery pack is greater than or equal to 15 mΩ and less than or equal to 48 mΩ.

28. An outdoor garden lawn mower, **characterized by** comprising:
a main frame;
a cutting assembly configured to cut vegetation;
a traveling assembly configured to support the outdoor garden lawn mower to move;
an operating assembly for a user to operate to control the traveling of the outdoor garden lawn mower;
a power supply device, comprising:
one or more first-type battery packs configured to supply power to at least one of the cutting assembly or the traveling assembly,
one or more second-type battery packs configured to supply power to the at least one of the cutting assembly or the traveling assembly, and
a battery compartment configured to accommodate the first-type battery packs and/or the second-type battery packs, the battery compartment comprising a plurality of electrical connection terminals and a plurality of rails,
wherein the plurality of electrical connection terminals are provided inside the battery compartment, and are configured to be electrically connected to one or more electrical connectors of the first-type battery pack and/or one or more electrical connectors of the second-type battery pack, and
the plurality of rails are configured to establish a pluggable connection with the first-type battery packs and/or the second-type battery packs, wherein when the first-type battery packs are removed from the rails, the second-type battery packs are configured to be detachably connected to the rails;
wherein the cutting assembly, the traveling assembly, the operating assembly, and the power supply device are provided on the main frame.

29. The outdoor garden lawn mower according to claim 28, **characterized in that** the battery compartment comprises a first side wall and a second side wall arranged opposite to each other, and
the plurality of rails comprise at least one pair of rails, wherein each pair of the at least one pair of rails is respectively arranged on the first side wall and the second side wall, and is configured to be detachably connected to the first-type battery packs and/or the second-type battery packs.

30. The outdoor garden lawn mower according to claim 28, **characterized in that** the battery compartment comprises a first side wall and a second side wall arranged opposite to each other, and
the plurality of electrical connection terminals comprise at least one pair of electrical connection terminals, wherein the at least one pair of electrical connection terminals is respectively arranged on the first side wall and the second side wall, and is configured to be detachably electrically connected to the first-type battery packs and/or the second-type battery packs.

31. The outdoor garden lawn mower according to claim 28, **characterized in that** the battery compartment comprises a first battery compartment for accommodating the first-type battery packs and a second battery compartment for accommodating the first-type battery packs and/or the second-type battery packs.

32. The outdoor garden lawn mower according to claim 28, **characterized in that** the battery compartment further comprises a third side wall and a fourth side wall arranged opposite to each other,
wherein at least a portion of the third side wall of the battery compartment protrudes away from the fourth side wall to form an auxiliary compartment, the auxiliary compartment being configured to accommodate the first-type battery packs or the second-type battery packs, and
a terminal mounting base is provided on a side of the fourth side wall close to the third side wall, the terminal mounting base being at least used for mounting the electrical connection terminals.

33. The outdoor garden lawn mower according to claim 28, **characterized in that** ejection structures configured to push the first-type battery packs or the second-type battery packs to move relative to the battery compartment is provided at the battery compartment;
wherein when one of the first-type battery pack is connected to the battery compartment, the first-type battery pack is matched with at least one of the ejection structures, and
when one of the second-type battery pack is connected to the battery compartment, the second-type battery pack is matched with at least three of the ejection structures.

34. The outdoor garden lawn mower according to claim 28, **characterized in that** a shock-absorbing structure is provided between the power supply device and the main frame.

35. The outdoor garden lawn mower according to claim 28, **characterized in that** at least a portion of the battery compartment is configured as a storage compartment for items other than the first-type battery packs or the second-type battery packs.

36. The outdoor garden lawn mower according to claim 28, **characterized in that** a heat dissipation structure for dissipating heat from the first-type battery packs and/or the second-type battery packs is provided in the battery compartment.

37. The outdoor garden lawn mower according to claim 28, **characterized in that** the battery compartment is provided with drainage holes.

38. An outdoor working device, **characterized by** comprising:
a frame;
a traveling assembly configured to support the outdoor working device to move;
a power supply device at least configured to supply power to the outdoor working device, the power supply device comprising:
a battery compartment comprising a plurality of side plates, wherein at least one of the side plates is provided with an airflow exchange portion connecting an interior and an exterior of the battery compartment, and at least one of the side plates has an inner wall provided with a mounting seat and an outer wall provided with a mounting groove;
a temperature adjustment assembly arranged on one of the side plates of the battery compartment, wherein the temperature adjustment assembly is configured to perform heat exchange between air inside and outside the battery compartment via the airflow exchange portion;
a battery pack configured to be mounted onto the mounting seat from an upper end of the side plate in a top-down direction; and
a heat dissipation fan configured to be mounted into the mounting groove from the upper end of the side plate in a bottom-up direction;
wherein the traveling assembly and the power supply device are provided on the frame.

39. The outdoor working device according to claim 38, **characterized in that** when the battery pack is mounted in the battery compartment, an air blowing direction of the heat dissipation fan is same as an air outlet direction of the airflow exchange portion.

40. The outdoor working device according to claim 38, **characterized by** further comprising a first air hole and a second air hole arranged on the battery pack, wherein one of the first air hole and the second air hole is configured to serve as an air inlet for the battery pack to draw air inward, and an other of the first air hole and the second air hole is configured to serve as an air outlet for the battery pack to exhaust air outward.

41. The outdoor working device according to claim 38, **characterized in that** the mounting seat and the mounting groove are formed as an integral structure.

42. An outdoor working device, **characterized by** comprising:
a traveling assembly configured to support the outdoor working device to move;
a power supply device at least configured to supply power to the outdoor working device, the power supply device comprising:
a battery compartment having an opening, wherein the battery compartment comprises a bottom plate and a plurality of side plates surrounding the bottom plate, an inner wall of at least one of the side plates has an upper section provided with a first terminal and a lower section provided with an airflow exchange portion connecting an interior and an exterior of the battery compartment; and
a battery pack configured to be detachably mounted inside the battery compartment, wherein along a mounting direction of the battery pack, an upper section of the battery pack is provided with a second terminal configured to be electrically connected with the first terminal, and a lower section of the battery pack is provided with a second air hole;
wherein when the battery pack is installed in the battery compartment, the first terminal is electrically connected to the second terminal, and the airflow exchange portion and the second air hole are arranged spatially adjacent to each other.

43. The outdoor working device according to claim 42, **characterized in that** an outer wall of the at least one side plate is provided with a heat dissipation fan corresponding to the airflow exchange portion, wherein the heat dissipation fan is arranged at a lower section of the side plate, and
when the battery pack is mounted in the battery compartment, the airflow exchange portion is spatially adjacent to both the second air hole and the heat dissipation fan.

44. An outdoor working device, **characterized by** comprising:
a frame;
a power supply device at least configured to supply power to the outdoor working device, the power supply device comprising:
a battery compartment having an opening, wherein the battery compartment comprises a bottom plate and a plurality of side plates surrounding the bottom plate, and at least one of the side plates is provided with a first terminal and a heat dissipation fan; and
a battery pack provided with a second terminal, wherein the battery pack is configured to be detachably installed into the battery compartment through the opening, wherein when the battery pack is mounted in the battery compartment, the second terminal is electrically connected to the first terminal;
a power management device connected to the first terminal via wire harnesses, wherein a first voltage reduction module is provided inside the power management device, and the first voltage reduction module is configured to obtain a voltage of the battery pack and perform voltage reduction on the battery pack; and
a heat dissipation fan arranged on at least one of the side plates and connected to the power management device via wire harnesses, wherein the heat dissipation fan is configured to receive electric energy of the battery pack processed through the voltage reduction by the first voltage reduction module and dissipate heat for the battery pack via operation of the heat dissipation fan;
wherein the power supply device, the power management device, and the heat dissipation fan are provided on the frame.

45. The outdoor working device according to claim 44, **characterized in that** the heat dissipation fan is located below the first terminal and between the first terminal and the power management device.

46. The outdoor working device according to claim 44, **characterized in that** the frame is provided with a power fixing member for fixing the battery compartment, the power fixing member is arranged between the battery compartment and the power management device, and the power fixing member is provided with a wire routing hole disposed below the first terminal.

47. The outdoor working device according to claim 44, **characterized in that** the battery compartment provided with a rear cover having a rear lamp, and
a second voltage reduction module is provided inside the power management device, and is connected to the rear lamp via wire harnesses.

48. The outdoor working device according to claim 44, **characterized in that** one of the side plates is provided with a rear cover having a reversing radar;
the side plate provided with the rear cover is further provided with a radar controller, wherein the radar controller is connected to the reversing radar and the power management device through wire harnesses; and
a third voltage reduction module is provided inside the power management device and is electrically connected to the power management device.

49. An outdoor working device, **characterized by** comprising:
a traveling assembly configured to support the outdoor working device to move;
a power supply device at least configured to supply power to the outdoor working device, the power supply device comprising:
a battery compartment provided with an airflow exchange portion connecting an interior and an exterior of the battery compartment;
a battery pack configured to be detachably mounted inside the battery compartment, the battery pack being provided with a second air hole corresponding to the airflow exchange portion;
a heat dissipation fan at least configured to cool the battery pack, the heat dissipation fan being configured to blow air along a first direction;
wherein when the battery pack is installed in the battery compartment, orthographic projections of the airflow exchange portion, the second air hole, and the heat dissipation fan along the first direction at least partially overlap.

50. The outdoor working device according to claim 49, **characterized in that** the battery compartment comprises a plurality of side plates, and at least one of the side plates has an inner wall provided with a mounting seat and an outer wall provided with a mounting groove; and
the battery pack is configured to be mounted onto the mounting seat from an upper end of the side plate in a top-down direction, and the heat dissipation fan is configured to be mounted into the mounting groove from a lower end of the side plate in a bottom-up direction.

51. The outdoor working device according to claim 49, **characterized in that** when the battery pack is mounted in the battery compartment, an air blowing direction of the heat dissipation fan is same as an air outlet direction of the airflow exchange portion and an air outlet direction of the second air hole.

52. An outdoor working device, **characterized by** comprising:
a frame;
a traveling assembly configured to support the outdoor working device to move;
a power supply device at least configured to supply power to the outdoor working device, the power supply device comprising:
a power supply unit;
a battery compartment configured to accommodate and be electrically connected to the power supply unit, the battery compartment comprising two opposite side plates;
a plurality of temperature adjustment assemblies respectively arranged on the two opposite side plates of the battery compartment, wherein the temperature adjustment assemblies are configured to exchange heat between heat generated inside the power supply unit and ambient air;
wherein the traveling assembly and the power supply device are provided on the frame.

53. The outdoor working device according to claim 52, **characterized in that** each temperature adjustment assembly arranged on one of the two opposite side plates is in one-to-one correspondence with a respective one of the temperature adjustment assemblies arranged on an other of the two opposite side plates.

54. The outdoor working device according to claim 52, **characterized in that** the power supply unit comprises one or more first-type battery packs and/or one or more second-type battery packs;
when the number of the first-type battery packs installed in the battery compartment is x, the number of the temperature adjustment assemblies configured to adjust temperature of the x first-type battery packs is x; and
when the number of the second-type battery packs installed in the battery compartment is y, the number of the temperature adjustment assemblies configured to adjust temperature of the y second-type battery packs is 2y.

55. The outdoor working device according to claim 54, **characterized in that** a capacity of each first-type battery pack is greater than or equal to 90 Wh and less than 1000 Wh, and a capacity of each second-type battery pack is greater than or equal to 1000 Wh and less than or equal to 4000 Wh.

56. The outdoor working device according to claim 54, **characterized in that** an electrical connection terminal is provided on the battery compartment adjacent to each temperature adjustment assembly, such that a plurality of electrical connection terminals are provided on the two opposite side plates;
each first-type battery pack is provided with one electrical connector, wherein when the first-type battery pack is installed into the battery compartment, the one electrical connector is connected to one of the electrical connection terminal; and
each second-type battery pack is provided with two electrical connectors at two ends of the second-type battery pack, wherein when the second-type battery pack is installed into the battery compartment, one of the two electrical connectors is connected to one of the electrical connection terminal on one of the two opposite side plates, and an other of the two electrical connectors is connected to one of the electrical connection terminal on an other of the two opposite side plates.

57. An outdoor working device, **characterized by** comprising:
a travelling assembly configured to support the outdoor working device to move; and
a power supply device comprising:
a battery compartment provided with a heat dissipation fan configured to generate airflow during operation;
a battery pack detachably installed inside the battery compartment, the battery pack comprising a battery housing and a plurality of battery cells accommodated within the battery housing,
wherein the battery housing comprises a first housing wall perpendicular to an axial direction of the battery cells and a second housing wall parallel to the axial direction of the battery cells, the first housing wall is provided with first air holes, and the second housing wall is provided with second air holes;
wherein the airflow generated by the heat dissipation fan is configured to enter an interior of the battery housing through the first air holes, flow across the battery cells inside the battery housing, and exit through the second air holes.

58. The outdoor working device according to claim 57, **characterized in that** the battery compartment is provided with an airflow exchange portion, wherein an air blowing direction of the heat dissipation fan is same as a flow direction of air passing through the airflow exchange portion and a flow direction of air passing through the second air holes.

59. The outdoor working device according to claim 57, **characterized in that** the battery compartment comprises two opposite side plates each provided with heat dissipation fans, and each heat dissipation fan on one of the two opposite side plates is arranged in one-to-one correspondence with a respective one heat dissipation fan on an other of the two opposite side plates.

60. The outdoor working device according to claim 59, **characterized in that** along a direction perpendicular to the axial direction of the battery cells, the second housing wall disposed at two ends of the battery housing are each provided with one or more of the second air holes, and the two opposite side plates are each provided with one or more airflow exchange portions; and
when the battery pack is mounted into the battery compartment, each of the second air hole aligns with a respective one of the airflow exchange portions.

61. An energy source system, **characterized by** comprising:
a battery compartment provided with a heat dissipation fan configured to generate airflow during operation;
a battery pack detachably installed inside the battery compartment, the battery pack comprising a battery housing and a plurality of battery cells accommodated within the battery housing,
wherein the battery housing comprises a first housing wall perpendicular to an axial direction of the battery cells and a second housing wall parallel to the axial direction of the battery cells, the first housing being provided with first air holes, and the second housing being provided with second air holes;
wherein the airflow generated by the heat dissipation fan is configured to enter an interior of the battery housing through the first air holes, flow across the battery cells inside the battery housing, and exit through the second air holes.

62. The energy source system according to claim 61, **characterized in that** the battery compartment is provided with an airflow exchange portion, wherein an air blowing direction of the heat dissipation fan, a flow direction of air passing through the airflow exchange portion, and a flow direction of air passing through the second air holes are same and collinear.

63. The energy source system according to claim 61, **characterized in that** the battery compartment comprises two opposite side plates each provided with heat dissipation fans, and each heat dissipation fan on one of the two opposite side plates is arranged in one-to-one correspondence with a respective one heat dissipation fan on an other of the two opposite side plates.

64. An outdoor working device, **characterized by** comprising:
a power supply device comprising:
a power supply unit comprising a temperature detection module configured to detect a temperature of the power supply unit;
a battery compartment configured to accommodate the power supply unit;
a power management module electrically connected to the temperature detection module and configured to process temperature data transmitted by the temperature detection module;
a plurality of temperature adjustment assemblies electrically connected to the power management module;
wherein upon that a temperature value detected by the temperature detection module falls within a normal range, the power management module is configured to take no control action for the temperature adjustment assemblies;
upon that the detected temperature value is within a first range nonoverlapping with the normal range, the power management module is configured to control the temperature adjustment assemblies to heat or cool the power supply unit;
upon that the detected temperature value is within a second range nonoverlapping with the first range, the power management module is configured to maintain controlling of the temperature adjustment assemblies to heat or cool the battery pack, and the power supply unit operates under low-current charging or discharging.

65. The outdoor working device according to claim 64, **characterized in that** each temperature adjustment assembly comprises an airflow generator configured to generate airflow, wherein when a minimum value of the first range is greater than a maximum value within the normal range of the power supply unit, the airflow generator is configured to perform heat dissipation for the power supply unit.

66. The outdoor working device according to claim 65, **characterized in that** the power supply unit comprises first-type battery packs, wherein when m of the first-type battery packs have internal temperatures falling within the first range, m of the temperature adjustment assemblies are configured to adjust the temperatures of the m first-type battery packs.

67. The outdoor working device according to claim 66, **characterized in that** the power supply unit comprises first-type battery packs, wherein when m of first-type battery packs have internal temperatures falling within the second range, at least (m+1) of the temperature adjustment assemblies and a maximum of a total number of the plurality of temperature adjustment assemblies are configured to adjust the temperatures of the m first-type battery packs.

68. The outdoor working device according to claim 64, **characterized in that** the power supply unit comprises second-type battery packs, wherein when n of the second-type battery packs have internal temperatures falling within the first range, 2n of the temperature adjustment assemblies are configured to adjust the temperatures of the n second-type battery packs.

69. The outdoor working device according to claim 68, **characterized in that** the power supply unit comprises second-type battery packs, wherein when n of the second-type battery packs have internal temperatures falling within the second range, at least (2n+1) of the temperature adjustment assemblies and a maximum of a total number of the plurality of temperature adjustment assemblies are configured to adjust the temperatures of the n second-type battery packs.
